# EUROPEAN PATENT SPECIFICATION

(11) **EP 4 377 767 B1**
(45) Date of publication and mention of the grant of the patent: **25.11.2026**
(21) Application number: 22754683.5
(22) Date of filing: 26.07.2022
(51) Int. Cl.: G06F 3/01, G06F 3/0346, G06F 3/0354

(54) **METHOD AND DEVICE FOR MANAGING INTERACTIONS DIRECTED TO A USER INTERFACE WITH A PHYSICAL OBJECT**
VERFAHREN UND VORRICHTUNG ZUR VERWALTUNG VON AN EINE BENUTZERSCHNITTSTELLE GERICHTETEN INTERAKTIONEN MIT EINEM PHYSIKALISCHEN OBJEKT
PROCEDE ET DISPOSITIF DE GESTION D'INTERACTIONS DIRIGEES VERS UNE INTERFACE UTILISATEUR AVEC UN OBJET PHYSIQUE

(30) Priority: 27.07.2021 US 202163226070 P
(43) Date of publication of application: 05.06.2024
(60) Divisional application: 26208758.8 / 4 841 404
(73) Proprietor: Apple Inc., Cupertino, CA 95014 (US)
(72) Inventor: LINDMEIER, William, D., Cupertino, California 95014 (US); JACKSON, Benjamin, G., Cupertino, California 95014 (US); KOBAYASHI, Tony, Cupertino, California 95014 (US); BAUGH, Brenton, A., Cupertino, California 95014 (US); SUNDSTROM, Matthew, J., Cupertino, California 95014 (US); PASTRANA VICENTE, Israel, Cupertino, California 95014 (US)
(74) Representative: Zacco Denmark A/S
(86) International application number: PCT/US2022/038303
(87) International publication number: WO 2023/009492

(56) References cited:
- US-A1- 2011 205 242
- US-A1- 2019 347 865
- MAI OTSUKI ET AL: "MAI painting brush", UIST '10 : PROCEEDINGS OF THE TWENTY-THIRD ANNUAL ACM SYMPOSIUM ON USER INTERFACE SOFTWARE AND TECHNOLOGY, ACM, US, 3 October 2010 (2010-10-03), pages 97 - 100, XP058091323, ISBN: 978-1-4503-0271-5, DOI: 10.1145/1866029.1866045

## Description

### TECHNICAL FIELD

The present disclosure generally relates to interacting with and manipulating a user interface and, in particular, to systems, methods, and methods for managing interactions directed to the user interface with a physical object.

### BACKGROUND

Typically, a user may interact with a user interface by way of various input modalities such as touch inputs, voice, inputs, stylus/peripheral inputs, or the like. However, a workflow for performing an operation within a user interface may remain the same regardless of the input modality. This overlooks opportunities for accelerating a user experience based on input modality or the like.

US 2019/347865 A1 discloses a virtual reality, VR, painting system that allows users to select paintbrush characteristics from a virtual palette. US 2011/205242 A1 discloses painting in 3D augmented reality, AR system. The AR proxy of a physical stylus held by the user takes different properties (e.g. color) when the user moves it to the position of a color palette. MAI OTSUKI ET AL: "MAI painting brush", UIST '10 : PROCEEDINGS OF THE TWENTY-THIRD ANNUAL ACM SYMPOSIUM ON USER INTERFACE SOFTWARE AND TECHNOLOGY, ACM, US, 3 October 2010, pages 97-100 discloses an AR painting system that uses a physical brush whose colors can be selected from a palette.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 is a block diagram of an example operating architecture in accordance with some implementations.
Figure 2 is a block diagram of an example controller in accordance with some implementations.
Figure 3 is a block diagram of an example electronic device in accordance with some implementations.
Figure 4 is a block diagram of an example control device in accordance with some implementations.
Figure 5A is a block diagram of a first portion of an example content delivery architecture in accordance with some implementations.
Figure 5B illustrates example data structures in accordance with some implementations.
Figure 5C is a block diagram of a second portion of the example content delivery architecture in accordance with some implementations.
Figures 6A-6P illustrate a sequence of instances for a first content delivery scenario in accordance with some implementations.
Figures 7A-7N illustrate a sequence of instances for a second content delivery scenario in accordance with some implementations.
Figures 8A-8M illustrate a sequence of instances for a third content delivery scenario in accordance with some implementations.
Figures 9A-9C illustrate a flowchart representation of a method of selecting an output modality for a physical object when interacting with or manipulating an XR environment in accordance with some implementations.
Figures 10A and 10B illustrate a flowchart representation of a method of changing a parameter of a mark based on a first input (pressure) value while marking directly on a physical surface or based on a second input (pressure) value while marking indirectly in accordance with some implementations.
Figures 11A-11C illustrate a flowchart representation of a method of changing a selection modality based on whether a user is currently grasping a physical object in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### SUMMARY

Various implementations disclosed herein include devices, systems, and methods for selecting an output modality for a physical object when interacting with or manipulating an XR environment. According to some implementations, the method is performed at a computing system including non-transitory memory and one or more processors, wherein the computing system is communicatively coupled to a display device and one or more input devices. The method includes: displaying, via the display device, a first plurality of graphical elements associated with a first plurality of output modalities within an extended reality (XR) environment; while displaying the first plurality of graphical elements, detecting first movement of a physical object; and in response to detecting the first movement of the physical object: in accordance with a determination that the first movement of the physical object causes the physical object to breach a distance threshold relative to a first graphical element among the first plurality of graphical elements, selecting a first output modality associated with the first graphical element as a current output modality for the physical object; and in accordance with a determination that the first movement of the physical object causes the physical to breach the distance threshold relative to a second graphical element among the first plurality of graphical elements, selecting a second output modality associated with the second graphical element as the current output modality for the physical object.

Various implementations disclosed herein include devices, systems, and methods for changing a parameter of a mark based on a first input (pressure) value while marking directly on a physical surface or based on a second input (pressure) value while marking indirectly. According to some implementations, the method is performed at a computing system including non-transitory memory and one or more processors, wherein the computing system is communicatively coupled to a display device and one or more input devices. The method includes: displaying, via the display device, a user interface; while displaying the user interface, detecting a marking input with a physical object; and in response to detecting the marking input: in accordance with a determination that the marking input is directed to a physical surface, displaying, via the display device, a mark within the user interface based on the marking input, wherein a parameter of the mark displayed based on the marking input is determined based on how hard the physical object is being pressed against the physical surface; and in accordance with a determination that the marking input is not directed to the physical surface, displaying, via the display device, the mark within the user interface based on the marking input, wherein a parameter of the mark displayed based on the marking input is determined based on how hard the physical object is being grasped by the user.

Various implementations disclosed herein include devices, systems, and methods for changing a selection modality based on whether a user is currently grasping a physical object. According to some implementations, the method is performed at a computing system including non-transitory memory and one or more processors, wherein the computing system is communicatively coupled to a display device and one or more input devices. The method includes: displaying, via the display device, content; while displaying the content, and while a physical object is being held by a user, detecting a selection input; and in response to detecting the selection input, performing an operation corresponding to the selection input, including; in accordance with a determination that a grip pose, associated with a manner in which the physical object is being held by the user, corresponds to a first grip, performing a selection operation on a first portion of the content, wherein the first portion of the content is selected based on a direction in which a predetermined portion of the physical object is pointing; and in accordance with a determination that the grip pose, associated with the manner in which the physical object is being held by the user, does not correspond to the first grip, performing the selection operation on a second portion of the content that is different from the first portion of the content, wherein the second portion of the content is selected based on a gaze direction of the user.

In accordance with some implementations, an electronic device includes one or more displays, one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more displays, one or more processors, a non-transitory memory, and means for performing or causing performance of any of the methods described herein.

In accordance with some implementations, a computing system includes one or more processors, non-transitory memory, an interface for communicating with a display device and one or more input devices, and one or more programs; the one or more programs are stored in the non-transitory memory and configured to be executed by the one or more processors and the one or more programs include instructions for performing or causing performance of the operations of any of the methods described herein. In accordance with some implementations, a non-transitory computer readable storage medium has stored therein instructions which when executed by one or more processors of a computing system with an interface for communicating with a display device and one or more input devices, cause the computing system to perform or cause performance of the operations of any of the methods described herein. In accordance with some implementations, a computing system includes one or more processors, non-transitory memory, an interface for communicating with a display device and one or more input devices, and means for performing or causing performance of the operations of any of the methods described herein.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example implementations described herein.

A physical environment refers to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics. As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, ahead mountable system may be configured to accept an external opaque display (e.g., a smartphone). The head mountable system may incorporate one or more imaging sensors to capture images or video of the physical environment, and/or one or more microphones to capture audio of the physical environment. Rather than an opaque display, a head mountable system may have a transparent or translucent display. The transparent or translucent display may have a medium through which light representative of images is directed to a person's eyes. The display may utilize digital light projection, OLEDs, LEDs, µLEDs, liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface.

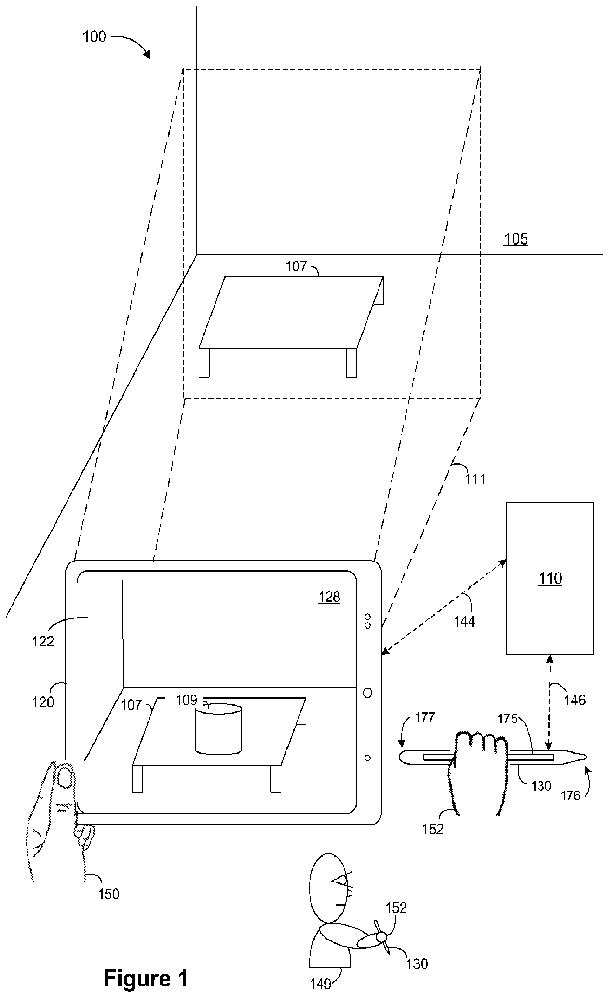

Figure 1 is a block diagram of an example operating architecture 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating architecture 100 includes an optional controller 110 and an electronic device 120 (e.g., a tablet, mobile phone, laptop, near-eye system, wearable computing device, or the like).

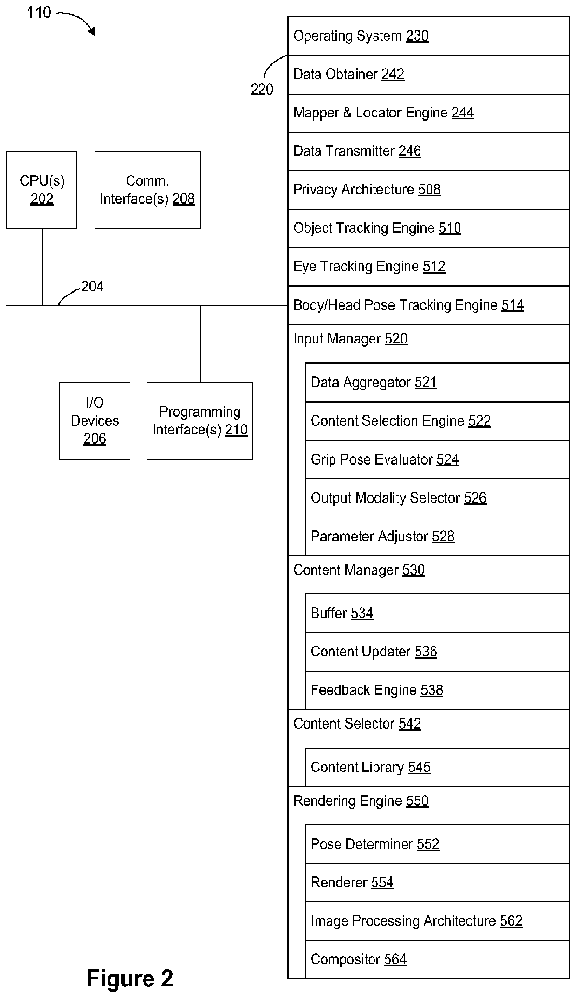

In some implementations, the controller 110 is configured to manage and coordinate an XR experience (sometimes also referred to herein as a "XR environment" or a "virtual environment" or a "graphical environment") for a user 149 with a left hand 150 and a right hand 152 and optionally other users. In some implementations, the controller 110 includes a suitable combination of software, firmware, and/or hardware. The controller 110 is described in greater detail below with respect to Figure 2. In some implementations, the controller 110 is a computing device that is local or remote relative to the physical environment 105. For example, the controller 110 is a local server located within the physical environment 105. In another example, the controller 110 is a remote server located outside of the physical environment 105 (e.g., a cloud server, central server, etc.). In some implementations, the controller 110 is communicatively coupled with the electronic device 120 via one or more wired or wireless communication channels 144 (e.g., BLUETOOTH, IEEE 802.11x, IEEE 802.16x, IEEE 802.3x, etc.). In some implementations, the functions of the controller 110 are provided by the electronic device 120. As such, in some implementations, the components of the controller 110 are integrated into the electronic device 120.

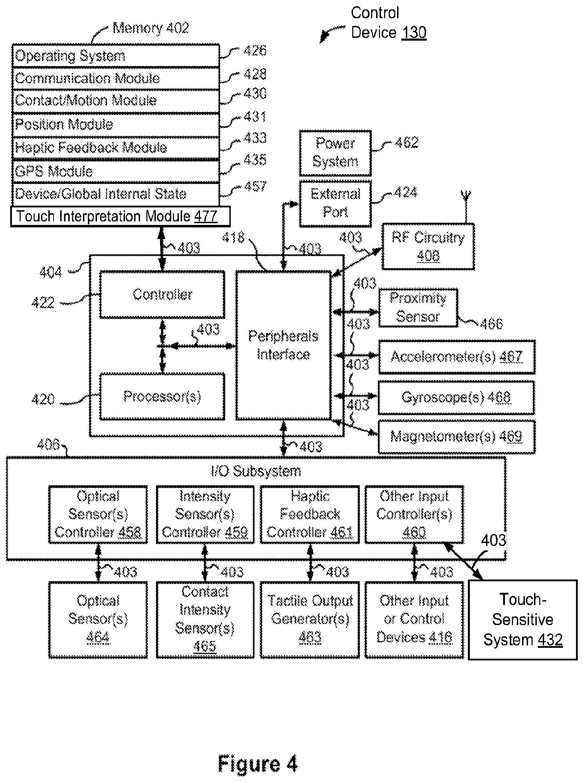

As shown in Figure 1, the user 149 grasps a control device 130 in his/her right hand 152. As shown in Figure 1, the control device 130 includes a first end 176 and a second end 177. In various embodiments, the first end 176 corresponds to a tip of the control device 130 (e.g., the tip of a pencil) and the second end 177 corresponds to the opposite or bottom end of the control device 130 (e.g., the eraser of the pencil). As shown in Figure 1, the control device 130 includes a touch-sensitive surface 175 to receive touch inputs from the user 149. In some implementations, the control device 130 includes a suitable combination of software, firmware, and/or hardware. The control device 130 is described in greater detail below with respect to Figure 4. In some implementations, the control device 130 corresponds to an electronic device with a wired or wireless communication channel to the controller 110. For example, the control device 130 corresponds to a stylus, a finger-wearable device, a handheld device, or the like. In some implementations, the controller 110 is communicatively coupled with the control device 130 via one or more wired or wireless communication channels 146 (e.g., BLUETOOTH, IEEE 802.11x, IEEE 802.16x, IEEE 802.3x, etc.).

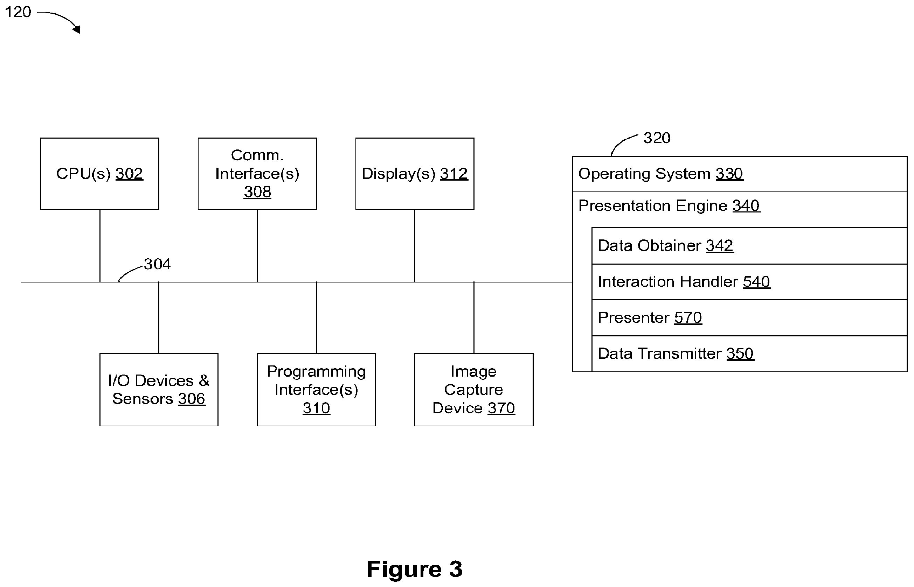

In some implementations, the electronic device 120 is configured to present audio and/or video (A/V) content to the user 149. In some implementations, the electronic device 120 is configured to present a user interface (UI) and/or an XR environment 128 to the user 149. In some implementations, the electronic device 120 includes a suitable combination of software, firmware, and/or hardware. The electronic device 120 is described in greater detail below with respect to Figure 3.

According to some implementations, the electronic device 120 presents an XR experience to the user 149 while the user 149 is physically present within a physical environment 105 that includes a table 107 within the field-of-view (FOV) 111 of the electronic device 120. As such, in some implementations, the user 149 holds the electronic device 120 in his/her hand(s). In some implementations, while presenting the XR experience, the electronic device 120 is configured to present XR content (sometimes also referred to herein as "graphical content" or "virtual content"), including an XR cylinder 109, and to enable video pass-through of the physical environment 105 (e.g., including the table 107 or a representation thereof) on a display 122. For example, the XR environment 128, including the XR cylinder 109, is volumetric or three-dimensional (3D).

In one example, the XR cylinder 109 corresponds to display-locked content such that the XR cylinder 109 remains displayed at the same location on the display 122 as the FOV 111 changes due to translational and/or rotational movement of the electronic device 120. As another example, the XR cylinder 109 corresponds to world-locked content such that the XR cylinder 109 remains displayed at its origin location as the FOV 111 changes due to translational and/or rotational movement of the electronic device 120. As such, in this example, if the FOV 111 does not include the origin location, the XR environment 128 will not include the XR cylinder 109. For example, the electronic device 120 corresponds to a near-eye system, mobile phone, tablet, laptop, wearable computing device, or the like.

In some implementations, the display 122 corresponds to an additive display that enables optical see-through of the physical environment 105 including the table 107. For example, the display 122 corresponds to a transparent lens, and the electronic device 120 corresponds to a pair of glasses worn by the user 149. As such, in some implementations, the electronic device 120 presents a user interface by projecting the XR content (e.g., the XR cylinder 109) onto the additive display, which is, in tum, overlaid on the physical environment 105 from the perspective of the user 149. In some implementations, the electronic device 120 presents the user interface by displaying the XR content (e.g., the XR cylinder 109) on the additive display, which is, in tum, overlaid on the physical environment 105 from the perspective of the user 149.

In some implementations, the user 149 wears the electronic device 120 such as a near-eye system. As such, the electronic device 120 includes one or more displays provided to display the XR content (e.g., a single display or one for each eye). For example, the electronic device 120 encloses the FOV of the user 149. In such implementations, the electronic device 120 presents the XR environment 128 by displaying data corresponding to the XR environment 128 on the one or more displays or by projecting data corresponding to the XR environment 128 onto the retinas of the user 149.

In some implementations, the electronic device 120 includes an integrated display (e.g., a built-in display) that displays the XR environment 128. In some implementations, the electronic device 120 includes a head-mountable enclosure. In various implementations, the head-mountable enclosure includes an attachment region to which another device with a display can be attached. For example, in some implementations, the electronic device 120 can be attached to the head-mountable enclosure. In various implementations, the head-mountable enclosure is shaped to form a receptacle for receiving another device that includes a display (e.g., the electronic device 120). For example, in some implementations, the electronic device 120 slides/snaps into or otherwise attaches to the head-mountable enclosure. In some implementations, the display of the device attached to the head-mountable enclosure presents (e.g., displays) the XR environment 128. In some implementations, the electronic device 120 is replaced with an XR chamber, enclosure, or room configured to present XR content in which the user 149 does not wear the electronic device 120.

In some implementations, the controller 110 and/or the electronic device 120 cause an XR representation of the user 149 to move within the XR environment 128 based on movement information (e.g., body pose data, eye tracking data, hand/limb/finger/extremity tracking data, etc.) from the electronic device 120 and/or optional remote input devices within the physical environment 105. In some implementations, the optional remote input devices correspond to fixed or movable sensory equipment within the physical environment 105 (e.g., image sensors, depth sensors, infrared (IR) sensors, event cameras, microphones, etc.). In some implementations, each of the remote input devices is configured to collect/capture input data and provide the input data to the controller 110 and/or the electronic device 120 while the user 149 is physically within the physical environment 105. In some implementations, the remote input devices include microphones, and the input data includes audio data associated with the user 149 (e.g., speech samples). In some implementations, the remote input devices include image sensors (e.g., cameras), and the input data includes images of the user 149. In some implementations, the input data characterizes body poses of the user 149 at different times. In some implementations, the input data characterizes head poses of the user 149 at different times. In some implementations, the input data characterizes hand tracking information associated with the hands of the user 149 at different times. In some implementations, the input data characterizes the velocity and/or acceleration of body parts of the user 149 such as his/her hands. In some implementations, the input data indicates joint positions and/or joint orientations of the user 149. In some implementations, the remote input devices include feedback devices such as speakers, lights, or the like.

Figure 2 is a block diagram of an example of the controller 110 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations, the controller 110 includes one or more processing units 202 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 206, one or more communication interfaces 208 (e.g., universal serial bus (USB), IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 210, a memory 220, and one or more communication buses 204 for interconnecting these and various other components.

In some implementations, the one or more communication buses 204 include circuitry that interconnects and controls communications between system components. In some implementations, the one or more I/O devices 206 include at least one of a keyboard, a mouse, a touchpad, a touchscreen, a joystick, one or more microphones, one or more speakers, one or more image sensors, one or more displays, and/or the like.

The memory 220 includes high-speed random-access memory, such as dynamic random-access memory (DRAM), static random-access memory (SRAM), double-data-rate random-access memory (DDR RAM), or other random-access solid-state memory devices. In some implementations, the memory 220 includes non-volatile memory, such as one or more magnetic disk storage devices, optical disk storage devices, flash memory devices, or other non-volatile solid-state storage devices. The memory 220 optionally includes one or more storage devices remotely located from the one or more processing units 202. The memory 220 comprises a non-transitory computer readable storage medium. In some implementations, the memory 220 or the non-transitory computer readable storage medium of the memory 220 stores the following programs, modules and data structures, or a subset thereof described below with respect to Figure 2.

The operating system 230 includes procedures for handling various basic system services and for performing hardware dependent tasks.

In some implementations, a data obtainer 242 is configured to obtain data (e.g., captured image frames of the physical environment 105, presentation data, input data, user interaction data, camera pose tracking information, eye tracking information, head/body pose tracking information, hand/limb/finger/extremity tracking information, sensor data, location data, etc.) from at least one of the I/O devices 206 of the controller 110, the I/O devices and sensors 306 of the electronic device 120, and the optional remote input devices. To that end, in various implementations, the data obtainer 242 includes instructions and/or logic therefor, and heuristics and metadata therefor.

In some implementations, a mapper and locator engine 244 is configured to map the physical environment 105 and to track the position/location of at least the electronic device 120 or the user 149 with respect to the physical environment 105. To that end, in various implementations, the mapper and locator engine 244 includes instructions and/or logic therefor, and heuristics and metadata therefor.

In some implementations, a data transmitter 246 is configured to transmit data (e.g., presentation data such as rendered image frames associated with the XR environment, location data, etc.) to at least the electronic device 120 and optionally one or more other devices. To that end, in various implementations, the data transmitter 246 includes instructions and/or logic therefor, and heuristics and metadata therefor.

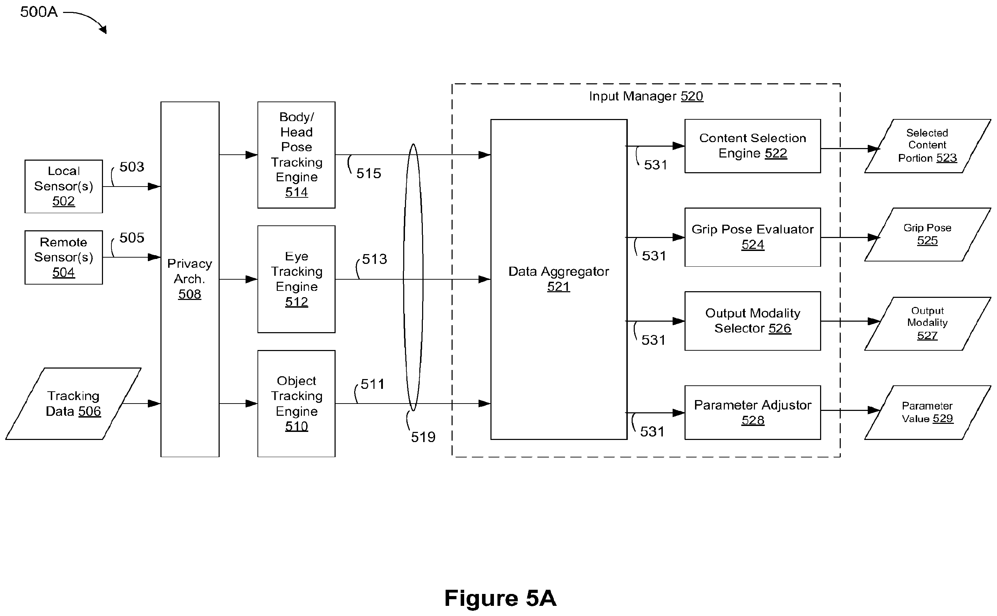

In some implementations, a privacy architecture 508 is configured to ingest data and filter user information and/or identifying information within the data based on one or more privacy filters. The privacy architecture 508 is described in more detail below with reference to Figure 5A. To that end, in various implementations, the privacy architecture 508 includes instructions and/or logic therefor, and heuristics and metadata therefor.

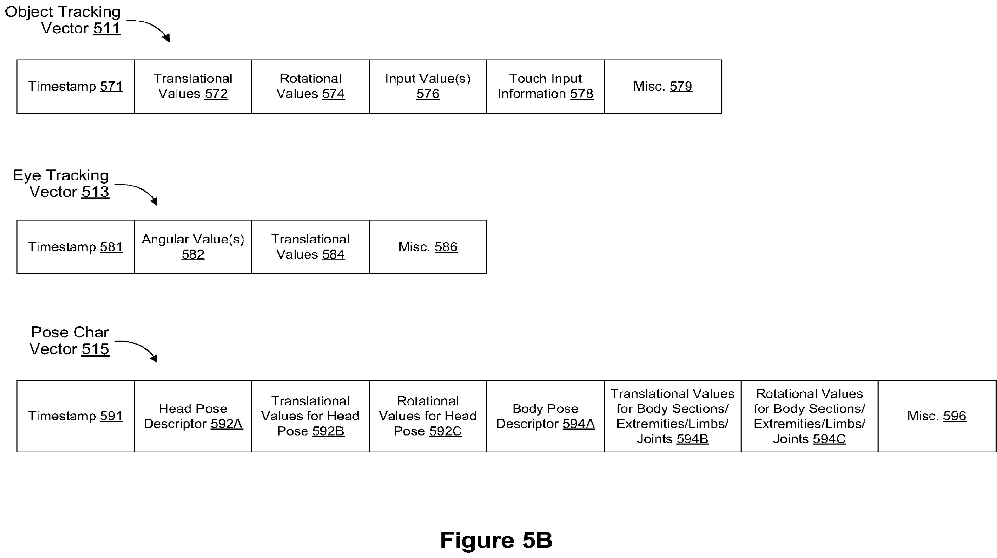

In some implementations, an object tracking engine 510 is configured to determine/generate an object tracking vector 511 for tracking a physical object (e.g., the control device 130 or a proxy object) based on tracking data and update the object tracking vector 511 over time. For example, as shown in Figure 5B, the object tracking vector 511 includes translational values 572 for the physical object (e.g., associated with x, y, and z coordinates relative to the physical environment 105 or the world-at-large), rotational values 574 for the physical object (e.g., roll, pitch, and yaw), one or more pressure values 576 associated with the physical object, optional touch input information 578 associated with the physical object, and/or the like. The object tracking engine 510 is described in more detail below with reference to Figure 5A. To that end, in various implementations, the object tracking engine 510 includes instructions and/or logic therefor, and heuristics and metadata therefor.

In some implementations, an eye tracking engine 512 is configured to determine/generate an eye tracking vector 513 as shown in Figure 5B (e.g., with a gaze direction) based on the input data and update the eye tracking vector 513 over time. For example, the gaze direction indicates a point (e.g., associated with x, y, and z coordinates relative to the physical environment 105 or the world-at-large), a physical object, or a region of interest (ROI) in the physical environment 105 at which the user 149 is currently looking. As another example, the gaze direction indicates a point (e.g., associated with x, y, and z coordinates relative to the XR environment 128), an XR object, or a region of interest (ROI) in the XR environment 128 at which the user 149 is currently looking. The eye tracking engine 512 is described in more detail below with reference to Figure 5A. To that end, in various implementations, the eye tracking engine 512 includes instructions and/or logic therefor, and heuristics and metadata therefor.

In some implementations, a body/head pose tracking engine 514 is configured to determine/generate a pose characterization vector 515 based on the input data and update the pose characterization vector 515 over time. For example, as shown in Figure 5B, the pose characterization vector 515 includes a head pose descriptor 592A (e.g., upward, downward, neutral, etc.), translational values 592B for the head pose, rotational values 592C for the head pose, a body pose descriptor 594A (e.g., standing, sitting, prone, etc.), translational values 594B for body sections/extremities/limbs/joints, rotational values 594C for the body sections/extremities/limbs/joints, and/or the like. The body/head pose tracking engine 514 is described in more detail below with reference to Figure 5A. To that end, in various implementations, the body/head pose tracking engine 514 includes instructions and/or logic therefor, and heuristics and metadata therefor. In some implementations, the object tracking engine 510, the eye tracking engine 512, and the body/head pose tracking engine 514 may be located on the electronic device 120 in addition to or in place of the controller 110.

In some implementations, a content selector 542 is configured to select XR content (sometimes also referred to herein as "graphical content" or "virtual content") from a content library 545 based on one or more user requests and/or inputs (e.g., a voice command, a selection from a user interface (UI) menu of XR content items, and/or the like). The content selector 542 is described in more detail below with reference to Figure 5A. To that end, in various implementations, the content selector 542 includes instructions and/or logic therefor, and heuristics and metadata therefor.

In some implementations, the content library 545 includes a plurality of content items such as audio/visual (A/V) content, virtual agents (VAs), and/or XR content, objects, items, scenery, etc. As one example, the XR content includes 3D reconstructions of user captured videos, movies, TV episodes, and/or other XR content. In some implementations, the content library 545 is pre-populated or manually authored by the user 149. In some implementations, the content library 545 is located local relative to the controller 110. In some implementations, the content library 545 is located remote from the controller 110 (e.g., at a remote server, a cloud server, or the like).

In some implementations, an input manager 520 is configured to ingest and analyze input data from various input sensors. The input manager 520 is described in more detail below with reference to Figure 5A. To that end, in various implementations, the input manager 520 includes instructions and/or logic therefor, and heuristics and metadata therefor. In some implementations, the input manager 520 includes a data aggregator 521, a content selection engine 522, a grip pose evaluator 524, an output modality selector 526, and a parameter adjustor 528.

In some implementations, the data aggregator 521 is configured to aggregate the object tracking vector 511, the eye tracking vector 513, and the pose characterization vector 515 and determine/generate a characterization vector 531 (as shown in Figure 5A) based thereon for subsequent downstream usage. The data aggregator 521 is described in more detail below with reference to Figure 5A. To that end, in various implementations, the data aggregator 521 includes instructions and/or logic therefor, and heuristics and metadata therefor.

In some implementations, the content selection engine 522 is configured to determine a selected content portion 523 (as shown in Figure 5A) within the XR environment 128 based on the characterization vector 531 (or a portion thereof). The content selection engine 522 is described in more detail below with reference to Figure 5A. To that end, in various implementations, the content selection engine 522 includes instructions and/or logic therefor, and heuristics and metadata therefor.

In some implementations, the grip pose evaluator 524 is configured to determine a grip pose 525 (as shown in Figure 5A) associated with a current manner in which the physical object is being held by the user 149 based on the characterization vector 531 (or a portion thereof). For example, the grip pose 525 indicates a manner in which the user 149 grasps the physical object (e.g., a proxy object, the control device 130, or the like). For example, the grip pose 525 corresponds to one of a remote-control-esque grip, a pointing/wand-esque grip, a writing grip, an inverse writing grip, a handle grip, a thumb top grip, a level-esque grip, a gamepad-esque grip, a flute-esque grip, a fire-starter-esque grip, or the like. The grip pose evaluator 524 is described in more detail below with reference to Figure 5A. To that end, in various implementations, the grip pose evaluator 524 includes instructions and/or logic therefor, and heuristics and metadata therefor.

In some implementations, the output modality selector 526 is configured to select a current output modality 527 (as shown in Figure 5A) associated with a manner in which the physical object interacts with the XR environment 128 or manipulates the XR environment 128. For example, a first output modality corresponds to selecting/manipulating object(s)/content within the XR environment 128, and a second output modality corresponds to sketching, drawing, writing, etc. within the XR environment 128. The output modality selector 526 is described in more detail below with reference to Figure 5A. To that end, in various implementations, the output modality selector 526 includes instructions and/or logic therefor, and heuristics and metadata therefor.

In some implementations, the parameter adjustor 528 is configured to adjust a parameter value (as shown in Figure 5A) (e.g., thickness, brightness, color, texture, etc.) associated with a marking input directed to the XR environment 128 based on either a first input (pressure) value or a second input (pressure) value associated with the physical object. The parameter adjustor 528 is described in more detail below with reference to Figure 5A. To that end, in various implementations, the parameter adjustor 528 includes instructions and/or logic therefor, and heuristics and metadata therefor.

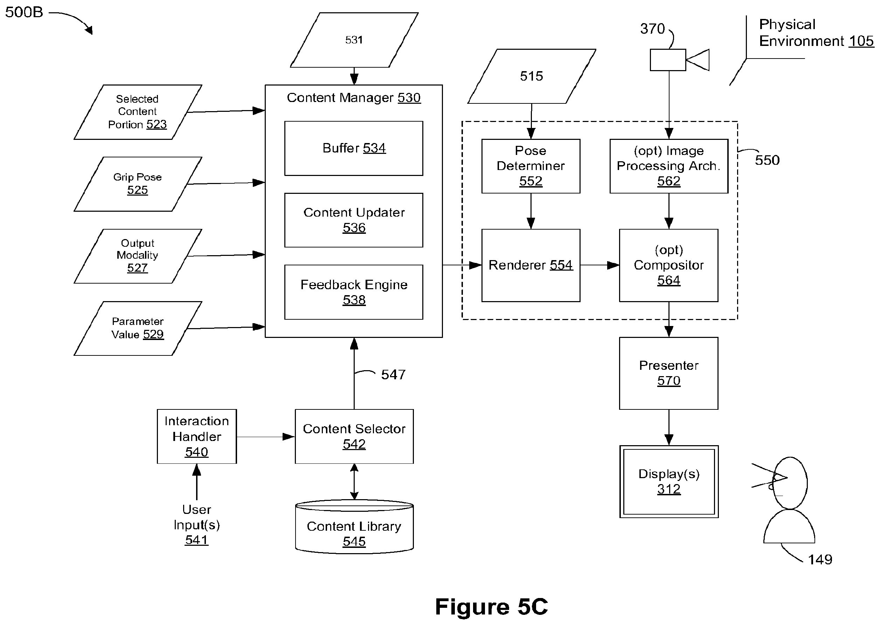

In some implementations, a content manager 530 is configured to manage and update the layout, setup, structure, and/or the like for the XR environment 128 including one or more of VA(s), XR content, one or more user interface (UI) elements associated with the XR content, and/or the like. The content manager 530 is described in more detail below with reference to Figure 5C. To that end, in various implementations, the content manager 530 includes instructions and/or logic therefor, and heuristics and metadata therefor. In some implementations, the content manager 530 includes a buffer 534, a content updater 536, and a feedback engine 538. In some implementations, the buffer 534 includes XR content, a rendered image frame, and/or the like for one or more past instances and/or frames.

In some implementations, the content updater 536 is configured to modify the XR environment 128 over time based on translational or rotational movement of the electronic device 120 or physical objects within the physical environment 105, user inputs (e.g., hand/extremity tracking inputs, eye tracking inputs, touch inputs, voice commands, manipulation inputs with the physical object, and/or the like), and/or the like. To that end, in various implementations, the content updater 536 includes instructions and/or logic therefor, and heuristics and metadata therefor.

In some implementations, the feedback engine 538 is configured to generate sensory feedback (e.g., visual feedback such as text or lighting changes, audio feedback, haptic feedback, etc.) associated with the XR environment 128. To that end, in various implementations, the feedback engine 538 includes instructions and/or logic therefor, and heuristics and metadata therefor.

In some implementations, a rendering engine 550 is configured to render an XR environment 128 (sometimes also referred to herein as a "graphical environment" or "virtual environment") or image frame associated therewith as well as the VA(s), XR content, one or more UI elements associated with the XR content, and/or the like. To that end, in various implementations, the rendering engine 550 includes instructions and/or logic therefor, and heuristics and metadata therefor. In some implementations, the rendering engine 550 includes a pose determiner 552, a renderer 554, an optional image processing architecture 562, and an optional compositor 564. One of ordinary skill in the art will appreciate that the optional image processing architecture 562 and the optional compositor 564 may be present for video pass-through configurations but may be removed for fully VR or optical see-through configurations.

In some implementations, the pose determiner 552 is configured to determine a current camera pose of the electronic device 120 and/or the user 149 relative to the A/V content and/or XR content. The pose determiner 552 is described in more detail below with reference to Figure 5A. To that end, in various implementations, the pose determiner 552 includes instructions and/or logic therefor, and heuristics and metadata therefor.

In some implementations, the renderer 554 is configured to render the A/V content and/or the XR content according to the current camera pose relative thereto. The renderer 554 is described in more detail below with reference to Figure 5A. To that end, in various implementations, the renderer 554 includes instructions and/or logic therefor, and heuristics and metadata therefor.

In some implementations, the image processing architecture 562 is configured to obtain (e.g., receive, retrieve, or capture) an image stream including one or more images of the physical environment 105 from the current camera pose of the electronic device 120 and/or the user 149. In some implementations, the image processing architecture 562 is also configured to perform one or more image processing operations on the image stream such as warping, color correction, gamma correction, sharpening, noise reduction, white balance, and/or the like. The image processing architecture 562 is described in more detail below with reference to Figure 5A. To that end, in various implementations, the image processing architecture 562 includes instructions and/or logic therefor, and heuristics and metadata therefor.

In some implementations, the compositor 564 is configured to composite the rendered A/V content and/or XR content with the processed image stream of the physical environment 105 from the image processing architecture 562 to produce rendered image frames of the XR environment 128 for display. The compositor 564 is described in more detail below with reference to Figure 5A. To that end, in various implementations, the compositor 564 includes instructions and/or logic therefor, and heuristics and metadata therefor.

Although the data obtainer 242, the mapper and locator engine 244, the data transmitter 246, the privacy architecture 508, the object tracking engine 510, the eye tracking engine 512, the body/head pose tracking engine 514, the content selector 542, the content manager 530, the operation modality manager 540, and the rendering engine 550 are shown as residing on a single device (e.g., the controller 110), it should be understood that in other implementations, any combination of the data obtainer 242, the mapper and locator engine 244, the data transmitter 246, the privacy architecture 508, the object tracking engine 510, the eye tracking engine 512, the body/head pose tracking engine 514, the content selector 542, the content manager 530, the operation modality manager 540, and the rendering engine 550 may be located in separate computing devices.

In some implementations, the functions and/or components of the controller 110 are combined with or provided by the electronic device 120 shown below in Figure 3. Moreover, Figure 2 is intended more as a functional description of the various features which may be present in a particular implementation as opposed to a structural schematic of the implementations described herein. As recognized by those of ordinary skill in the art, items shown separately could be combined and some items could be separated. For example, some functional modules shown separately in Figure 2 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 3 is a block diagram of an example of the electronic device 120 (e.g., a mobile phone, tablet, laptop, near-eye system, wearable computing device, or the like) in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations, the electronic device 120 includes one or more processing units 302 (e.g., microprocessors, ASICs, FPGAs, GPUs, CPUs, processing cores, and/or the like), one or more input/output (I/O) devices and sensors 306, one or more communication interfaces 308 (e.g., USB, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 310, one or more displays 312, an image capture device 370 (e.g., one or more optional interior- and/or exterior-facing image sensors), a memory 320, and one or more communication buses 304 for interconnecting these and various other components.

In some implementations, the one or more communication buses 304 include circuitry that interconnects and controls communications between system components. In some implementations, the one or more I/O devices and sensors 306 include at least one of an inertial measurement unit (IMU), an accelerometer, a gyroscope, a magnetometer, a thermometer, one or more physiological sensors (e.g., blood pressure monitor, heart rate monitor, blood oximetry monitor, blood glucose monitor, etc.), one or more microphones, one or more speakers, a haptics engine, a heating and/or cooling unit, a skin shear engine, one or more depth sensors (e.g., structured light, time-of-flight, LiDAR, or the like), a localization and mapping engine, an eye tracking engine, a body/head pose tracking engine, a hand/limb/finger/extremity tracking engine, a camera pose tracking engine, or the like.

In some implementations, the one or more displays 312 are configured to present the XR environment to the user. In some implementations, the one or more displays 312 are also configured to present flat video content to the user (e.g., a 2-dimensional or "flat" AVI, FLV, WMV, MOV, MP4, or the like file associated with a TV episode or a movie, or live video pass-through of the physical environment 105). In some implementations, the one or more displays 312 correspond to touchscreen displays. In some implementations, the one or more displays 312 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electro-mechanical system (MEMS), and/or the like display types. In some implementations, the one or more displays 312 correspond to diffractive, reflective, polarized, holographic, etc. waveguide displays. For example, the electronic device 120 includes a single display. In another example, the electronic device 120 includes a display for each eye of the user. In some implementations, the one or more displays 312 are capable of presenting AR and VR content. In some implementations, the one or more displays 312 are capable of presenting AR or VR content.

In some implementations, the image capture device 370 correspond to one or more RGB cameras (e.g., with a complementary metal-oxide-semiconductor (CMOS) image sensor or a charge-coupled device (CCD) image sensor), IR image sensors, event-based cameras, and/or the like. In some implementations, the image capture device 370 includes a lens assembly, a photodiode, and a front-end architecture. In some implementations, the image capture device 370 includes exterior-facing and/or interior-facing image sensors.

The memory 320 includes high-speed random-access memory, such as DRAM, SRAM, DDR RAM, or other random-access solid-state memory devices. In some implementations, the memory 320 includes non-volatile memory, such as one or more magnetic disk storage devices, optical disk storage devices, flash memory devices, or other non-volatile solid-state storage devices. The memory 320 optionally includes one or more storage devices remotely located from the one or more processing units 302. The memory 320 comprises a non-transitory computer readable storage medium. In some implementations, the memory 320 or the non-transitory computer readable storage medium of the memory 320 stores the following programs, modules and data structures, or a subset thereof including an optional operating system 330 and a presentation engine 340.

The operating system 330 includes procedures for handling various basic system services and for performing hardware dependent tasks. In some implementations, the presentation engine 340 is configured to present media items and/or XR content to the user via the one or more displays 312. To that end, in various implementations, the presentation engine 340 includes a data obtainer 342, a presenter 570, an interaction handler 540, and a data transmitter 350.

In some implementations, the data obtainer 342 is configured to obtain data (e.g., presentation data such as rendered image frames associated with the user interface or the XR environment, input data, user interaction data, head tracking information, camera pose tracking information, eye tracking information, hand/limb/finger/extremity tracking information, sensor data, location data, etc.) from at least one of the I/O devices and sensors 306 of the electronic device 120, the controller 110, and the remote input devices. To that end, in various implementations, the data obtainer 342 includes instructions and/or logic therefor, and heuristics and metadata therefor.

In some implementations, the interaction handler 540 is configured to detect user interactions with the presented A/V content and/or XR content (e.g., gestural inputs detected via hand/extremity tracking, eye gaze inputs detected via eye tracking, voice commands, etc.). To that end, in various implementations, the interaction handler 540 includes instructions and/or logic therefor, and heuristics and metadata therefor.

In some implementations, the presenter 570 is configured to present and update A/V content and/or XR content (e.g., the rendered image frames associated with the user interface or the XR environment 128 including the VA(s), the XR content, one or more UI elements associated with the XR content, and/or the like) via the one or more displays 312. To that end, in various implementations, the presenter 570 includes instructions and/or logic therefor, and heuristics and metadata therefor.

In some implementations, the data transmitter 350 is configured to transmit data (e.g., presentation data, location data, user interaction data, head tracking information, camera pose tracking information, eye tracking information, hand/limb/finger/extremity tracking information, etc.) to at least the controller 110. To that end, in various implementations, the data transmitter 350 includes instructions and/or logic therefor, and heuristics and metadata therefor.

Although the data obtainer 342, the interaction handler 540, the presenter 570, and the data transmitter 350 are shown as residing on a single device (e.g., the electronic device 120), it should be understood that in other implementations, any combination of the data obtainer 342, the interaction handler 540, the presenter 570, and the data transmitter 350 may be located in separate computing devices.

Moreover, Figure 3 is intended more as a functional description of the various features which may be present in a particular implementation as opposed to a structural schematic of the implementations described herein. As recognized by those of ordinary skill in the art, items shown separately could be combined and some items could be separated. For example, some functional modules shown separately in Figure 3 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 4 is a block diagram of an exemplary control device 130 in accordance with some implementations. The control device 130 is sometimes simply called a stylus. The control device 130 includes non-transitory memory 402 (which optionally includes one or more computer readable storage mediums), a memory controller 422, one or more processing units (CPUs) 420, a peripherals interface 418, RF circuitry 408, an input/output (I/O) subsystem 406, and other input or control devices 416. The control device 130 optionally includes an external port 424 and one or more optical sensors 464. The control device 130 optionally includes one or more contact intensity sensors 465 for detecting the intensity of contacts of the control device 130 on the electronic device 100 (e.g., when the control device 130 is used with a touch-sensitive surface such as the display 122 of the electronic device 120) or on other surfaces (e.g., a desk surface). The control device 130 optionally includes one or more tactile output generators 463 for generating tactile outputs on the control device 130. These components optionally communicate over one or more communication buses or signal lines 403.

It should be appreciated that the control device 130 is only one example of an electronic stylus, and that the control device 130 optionally has more or fewer components than shown, optionally combines two or more components, or optionally has a different configuration or arrangement of the components. The various components shown in Figure 4 are implemented in hardware, software, firmware, or a combination thereof, including one or more signal processing and/or application specific integrated circuits. In some implementations, some functions and/or operations of the control device 130 (e.g., the touch interpretation module 477) are provided by the controller 110 and/or the electronic device 120. As such, in some implementations, some components of the control device 130 are integrated into the controller 110 and/or the electronic device 120.

As shown in Figure 1, the control device 130 includes a first end 176 and a second end 177. In various embodiments, the first end 176 corresponds to a tip of the control device 130 (e.g., the tip of a pencil) and the second end 177 corresponds to the opposite or bottom end of the control device 130 (e.g., the eraser of the pencil).

As shown in Figure 1, the control device 130 includes a touch-sensitive surface 175 to receive touch inputs from the user 149. In some implementations, the touch-sensitive surface 175 corresponds to a capacitive touch element. The control device 130 includes a sensor or set of sensors that detect inputs from the user based on haptic and/or tactile contact with the touch-sensitive surface 175. In some implementations, the control device 130 includes any of a plurality of touch sensing technologies now known or later developed, including but not limited to capacitive, resistive, infrared, and surface acoustic wave technologies, as well as other proximity sensor arrays or other elements for determining one or more points of contact with the touch-sensitive surface 175. Because the control device 130 includes a variety of sensors and types of sensors, the control device 130 can detect different a variety of inputs from the user 149. In some implementations, the one or more sensors can detect a single touch input or successive touch inputs in response to a user tapping once or multiple times on the touch-sensitive surface 175. In some implementations, the one or more sensors can detect a swipe input on the control device 130 in response to the user stroking along the touch-sensitive surface 175 with one or more fingers. In some implementations, if the speed with which the user strokes along the touch-sensitive surface 175 breaches a threshold, the one or more sensors detect a flick input rather than a swipe input.

The control device 130 also includes one or more sensors that detect orientation (e.g., angular position) and/or movement of the control device 130, such as one or more accelerometers 467, one or more gyroscopes 468, one or more magnetometers 469, and/or the like. The one or more sensors can detect a variety of rotational movements of the control device 130 by the user, including the type and direction of the rotation. For example, the one or more sensors can detect the user rolling and/or twirling the control device 130, and can detect the direction (e.g., clockwise or counterclockwise) of the rolling/twirling. In some implementations, the detected input depends on the angular position of the first end 176 and the second end 177 of the control device 130 relative to the electronic device. For example, in some implementations, if the control device 130 is substantially perpendicular to the electronic device and the second end 177 (e.g., the eraser) is nearer to the electronic device, then contacting the surface of the electronic device with the second end 177 results in an erase operation. On the other hand, if the control device 130 is substantially perpendicular to the electronic device and the first end 176 (e.g., the tip) is nearer to the electronic device, then contacting the surface of the electronic device with the first end 176 results in a marking operation.

The memory 402 optionally includes high-speed random-access memory and optionally also includes non-volatile memory, such as one or more flash memory devices, or other non-volatile solid-state memory devices. Access to the memory 402 by other components of the control device 130, such as the CPU(s) 420 and the peripherals interface 418, is, optionally, controlled by the memory controller 422.

The peripherals interface 418 can be used to couple input and output peripherals of the stylus to the CPU(s) 420 and the memory 402. The one or more processors 420 run or execute various software programs and/or sets of instructions stored in the memory 402 to perform various functions for the control device 130 and to process data. In some implementations, the peripherals interface 418, the CPU(s) 420, and the memory controller 422 are, optionally, implemented on a single chip, such as chip 404. In some other embodiments, they are, optionally, implemented on separate chips.

The RF (radio frequency) circuitry 408 receives and sends RF signals, also called electromagnetic signals. The RF circuitry 408 converts electrical signals to/from electromagnetic signals and communicates with the controller 110, the electronic device 120, and/or the like, communications networks, and/or other communications devices via the electromagnetic signals. The RF circuitry 408 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. The RF circuitry 408 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPA), long term evolution (LTE), near field communication (NFC), wideband code division multiple access (W-CDMA), code division multiple access (CDMA), time division multiple access (TDMA), BLUETOOTH, Wireless Fidelity (Wi-Fi) (e.g., IEEE 802.11a, IEEE 802.11ac, IEEE 802.11ax, IEEE 802.11b, IEEE 802.11g and/or IEEE 802.11n), or any other suitable communication protocol, including communication protocols not yet developed as of the filing date of this document.

The I/O subsystem 406 couples input/output peripherals on the control device 130, such as the other input or control devices 416, with the peripherals interface 418. The I/O subsystem 406 optionally includes the optical sensor controller 458, the intensity sensor controller 459, the haptic feedback controller 461, and the one or more input controllers 460 for other input or control devices. The one or more input controllers 460 receive/send electrical signals from/to the other input or control devices 416. The other input or control devices 416 optionally include physical buttons (e.g., push buttons, rocker buttons, etc.), dials, slider switches, click wheels, and so forth. In some alternate embodiments, the input controller(s) 460 are, optionally, coupled with any (or none) of the following: an infrared port and/or a USB port.

The control device 130 also includes a power system 462 for powering the various components. The power system 462 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices and/or portable accessories.

The control device 130 optionally also includes one or more optical sensors 464. Figure 4 shows an optical sensor coupled with optical sensor controller 458 in I/O subsystem 406. The one or more optical sensors 464 optionally include charge-coupled device (CCD) or complementary metal-oxide semiconductor (CMOS) phototransistors. The one or more optical sensors 464 receive light from the environment, projected through one or more lens, and converts the light to data representing an image.

The control device 130 optionally also includes one or more contact intensity sensors 465. Figure 4 shows a contact intensity sensor coupled with intensity sensor controller 459 in the I/O subsystem 406. The contact intensity sensors 465 optionally include one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) relative to a surface or relative to a grasp of the user 149). The contact intensity sensors 465 receive contact intensity information (e.g., pressure information or a proxy for pressure information) from the environment. In some implementations, at least one contact intensity sensor is collocated with, or proximate to, a tip of the control device 130. In some implementations, at least one contact intensity sensor is collocated with, or proximate to, the body of the control device 130.

The control device 130 optionally also includes one or more proximity sensors 466. Figure 4 shows the one or more proximity sensors 466 coupled with the peripherals interface 418. Alternately, the one or more proximity sensors 466 are coupled with the input controller 460 in the I/O subsystem 406. In some implementations, the one or more proximity sensors 466 determine proximity of the control device 130 to an electronic device (e.g., the electronic device 120).

The control device 130 optionally also includes one or more tactile output generators 463. Figure 4 shows a tactile output generator coupled with a haptic feedback controller 461 in the I/O subsystem 406. The one or more tactile output generator(s) 463 optionally include one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the electronic device). The one or more tactile output generator(s) 463 receive tactile feedback generation instructions from the haptic feedback module 433 and generates tactile outputs on the control device 130 that are capable of being sensed by a user of the control device 130. In some implementations, at least one tactile output generator is collocated with, or proximate to, a length (e.g., a body or a housing) of the control device 130 and, optionally, generates a tactile output by moving the control device 130 vertically (e.g., in a direction parallel to the length of the control device 130) or laterally (e.g., in a direction normal to the length of the control device 130).

The control device 130 optionally also includes one or more accelerometers 467, one or more gyroscopes 468, and/or one or more magnetometers 469 (e.g., as part of an inertial measurement unit (IMU)) for obtaining information concerning the location and positional state of control device 130. Figure 4 shows sensors 467, 468, and 469 coupled with the peripherals interface 418. Alternately, the sensors 467, 468, and 469 are, optionally, coupled with an input controller 460 in the I/O subsystem 406. The control device 130 optionally includes a GPS (or GLONASS or other global navigation system) receiver (not shown) for obtaining information concerning the location of the control device 130.

The control device 130 includes a touch-sensitive system 432. The touch-sensitive system 432 detects inputs received at the touch-sensitive surface 175. These inputs include the inputs discussed herein with respect to the touch-sensitive surface 175 of the control device 130. For example, the touch-sensitive system 432 can detect tap inputs, twirl inputs, roll inputs, flick inputs, swipe inputs, and/or the like. The touch-sensitive system 432 coordinates with a touch interpretation module 477 in order to decipher the particular kind of touch input received at the touch-sensitive surface 175 (e.g., twirl/roll/flick/swipe/etc.).

In some implementations, the software components stored in the memory 402 include an operating system 426, a communication module (or set of instructions) 428, contact/motion module (or set of instructions) 430, a position module (or set of instructions) 431, and a Global Positioning System (GPS) module (or set of instructions) 435. Furthermore, in some implementations, the memory 402 stores a device/global internal state 457, as shown in Figure 4. Moreover, the memory 402 includes the touch interpretation module 477. The device/global internal state 457 includes one or more of: sensor state, including information obtained from the stylus's various sensors and other input or control devices 416; positional state, including information regarding the position and/or orientation of the control device 130 (e.g., translational and/or rotational values) and location information concerning the location of the control device 130(e.g., determined by the GPS module 435).

The operating system 426 (e.g., iOS, Darwin, RTXC, LINUX, UNIX, OS X, WINDOWS, or an embedded operating system such as VxWorks) includes various software components and/or drivers for controlling and managing general system tasks (e.g., memory management, power management, etc.) and facilitates communication between various hardware and software components. The communication module 428 optionally facilitates communication with other devices over one or more external ports 424 and also includes various software components for handling data received by the RF circuitry 408 and/or an external port 424. The external port 424 (e.g., Universal Serial Bus (USB), FIREWIRE, etc.) is adapted for coupling directly to other devices or indirectly over a network (e.g., the Internet, wireless LAN, etc.).

The contact/motion module 430 optionally detects contact with the control device 130 and other touch-sensitive devices of control device 130 (e.g., buttons or other touch-sensitive components of the control device 130). The contact/motion module 430 includes software components for performing various operations related to detection of contact (e.g., detection of a tip of the stylus with a touch-sensitive display, such as the display 122 of the electronic device 120, or with another surface, such as a desk surface), such as determining if contact has occurred (e.g., detecting a touch-down event), determining an intensity of the contact (e.g., the force or pressure of the contact or a substitute for the force or pressure of the contact), determining if there is movement of the contact and tracking the movement (e.g., across the display 122 of the electronic device 120), and determining if the contact has ceased (e.g., detecting a lift-off event or a break in contact). In some implementations, the contact/motion module 430 receives contact data from the I/O subsystem 406. Determining movement of the point of contact, which is represented by a series of contact data, optionally includes determining speed (magnitude), velocity (magnitude and direction), and/or an acceleration (a change in magnitude and/or direction) of the point of contact. As noted above, in some implementations, one or more of these operations related to detection of contact are performed by the electronic device 120 or the controller 110 (in addition to or in place of the stylus using the contact/motion module 430).

The contact/motion module 430 optionally detects a gesture input by control device 130. Different gestures with the control device 130 have different contact patterns (e.g., different motions, timings, and/or intensities of detected contacts). Thus, a gesture is, optionally, detected by detecting a particular contact pattern. For example, detecting a single tap gesture includes detecting a touch-down event followed by detecting a lift-off event at the same position (or substantially the same position) as the touch-down event (e.g., at the position of an icon). As another example, detecting a swipe gesture includes detecting a touch-down event followed by detecting one or more stylus-dragging events, and subsequently followed by detecting a lift-off event. As noted above, in some implementations, gesture detection is performed by the electronic device using contact/motion module 430 (in addition to or in place of the stylus using contact/motion module 430).

The position module 431, in conjunction with the one or more accelerometers 467, the one or more gyroscopes 468, and/or the one or more magnetometers 469, optionally detects positional information concerning the stylus, such as the attitude of the control device 130 (e.g., roll, pitch, and/or yaw) in a particular frame of reference. The position module 431, in conjunction with the one or more accelerometers 467, the one or more gyroscopes 468, and/or the one or more magnetometers 469, optionally detects movement gestures, such as flicks, taps, and rolls of the control device 130. The position module 431 includes software components for performing various operations related to detecting the position of the stylus and detecting changes to the position of the stylus in a particular frame of reference. In some implementations, the position module 431 detects the positional state of the control device 130 relative to the physical environment 105 or the world-at-large and detects changes to the positional state of the control device 130.

The haptic feedback module 433 includes various software components for generating instructions used by the one or more tactile output generators 463 to produce tactile outputs at one or more locations on the control device 130 in response to user interactions with the control device 130. The GPS module 435 determines the location of the control device 130 and provides this information for use in various applications (e.g., to applications that provide location-based services such as an application to find missing devices and/or accessories).

The touch interpretation module 477 coordinates with the touch-sensitive system 432 in order to determine (e.g., decipher or identify) the type of touch input received at the touch-sensitive surface 175 of the control device 130. For example, the touch interpretation module 477 determines that the touch input corresponds to a swipe input (as opposed to a tap input) if the user strokes a sufficient distance across the touch-sensitive surface 175 of the control device 130 in a sufficiently short amount of time. As another example, the touch interpretation module 477 determines that the touch input corresponds to a flick input (as opposed to a swipe input) if the speed with which user strokes across the touch-sensitive surface 175 of the control device 130 is sufficiently faster than the speed corresponding to a swipe input. The threshold speeds of strokes can be preset and can be changed. In various embodiments, the pressure and/or force with which the touch is received at the touch-sensitive surface determines the type of input. For example, a light touch can correspond to a first type of input while a harder touch can correspond to a second type of input.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some implementations, the memory 402 optionally stores a subset of the modules and data structures identified above. Furthermore, the memory 402 optionally stores additional modules and data structures not described above.

Figure 5A is a block diagram of a first portion 500A of an example content delivery architecture in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the content delivery architecture is included in a computing system such as the controller 110 shown in Figures 1 and 2; the electronic device 120 shown in Figures 1 and 3; and/or a suitable combination thereof.

As shown in Figure 5A, one or more local sensors 502 of the controller 110, the electronic device 120, and/or a combination thereof obtain local sensor data 503 associated with the physical environment 105. For example, the local sensor data 503 includes images or a stream thereof of the physical environment 105, simultaneous location and mapping (SLAM) information for the physical environment 105 and the location of the electronic device 120 or the user 149 relative to the physical environment 105, ambient lighting information for the physical environment 105, ambient audio information for the physical environment 105, acoustic information for the physical environment 105, dimensional information for the physical environment 105, semantic labels for objects within the physical environment 105, and/or the like. In some implementations, the local sensor data 503 includes un-processed or post-processed information.

Similarly, as shown in Figure 5A, one or more remote sensors 504, associated with the optional remote input devices within the physical environment 105, the control device 130, and/or the like, obtain remote sensor data 505 associated with the physical environment 105. For example, the remote sensor data 505 includes images or a stream thereof of the physical environment 105, SLAM information for the physical environment 105 and the location of the electronic device 120 or the user 149 relative to the physical environment 105, ambient lighting information for the physical environment 105, ambient audio information for the physical environment 105, acoustic information for the physical environment 105, dimensional information for the physical environment 105, semantic labels for objects within the physical environment 105, and/or the like. In some implementations, the remote sensor data 505 includes un-processed or post-processed information.

As shown in Figure 5A, tracking data 506 is obtained by at least one of the controller 110, the electronic device 120, or the control device 130 in order to localize and track the control device 130. As one example, the tracking data 506 includes images or a stream thereof of the physical environment 105 captured by exterior-facing image sensors of the electronic device 120 that includes the control device 130. As another example, the tracking data 506 corresponds to IMU information, accelerometer information, gyroscope information, magnetometer information, and/or the like from integrated sensors of the control device 130.

According to some implementations, the privacy architecture 508 ingests the local sensor data 503, the remote sensor data 505, and the tracking data 506. In some implementations, the privacy architecture 508 includes one or more privacy filters associated with user information and/or identifying information. In some implementations, the privacy architecture 508 includes an opt-in feature where the electronic device 120 informs the user 149 as to what user information and/or identifying information is being monitored and how the user information and/or the identifying information will be used. In some implementations, the privacy architecture 508 selectively prevents and/or limits the content delivery architecture 500A/500B or portions thereof from obtaining and/or transmitting the user information. To this end, the privacy architecture 508 receives user preferences and/or selections from the user 149 in response to prompting the user 149 for the same. In some implementations, the privacy architecture 508 prevents the content delivery architecture 500A/500B from obtaining and/or transmitting the user information unless and until the privacy architecture 508 obtains informed consent from the user 149. In some implementations, the privacy architecture 508 anonymizes (e.g., scrambles, obscures, encrypts, and/or the like) certain types of user information. For example, the privacy architecture 508 receives user inputs designating which types of user information the privacy architecture 508 anonymizes. As another example, the privacy architecture 508 anonymizes certain types of user information likely to include sensitive and/or identifying information, independent of user designation (e.g., automatically).

According to some implementations, the object tracking engine 510 obtains the tracking data 506 after it has been subjected to the privacy architecture 508. In some implementations, the object tracking engine 510 determines/generates an object tracking vector 511 for a physical object based on the tracking data 506 and updates the object tracking vector 511 over time. As one example, the physical object corresponds to a proxy object detected within the physical environment 105 that lacks a communication channel to the computing system (e.g., the controller 110, the electronic device 120, and/or the like) such as a pencil, a pen, or the like. As another example, the physical object corresponds to an electronic device (e.g., the control device 130) with a wired or wireless communication channel to the computing system (e.g., the controller 110, the electronic device 120, and/or the like) such as a stylus, a finger-wearable device, a handheld device, or the like.

Figure 5B shows an example data structure for the object tracking vector 511 in accordance with some implementations. As shown in Figure 5B, the object tracking vector 511 may correspond to an N-tuple characterization vector or characterization tensor that includes a timestamp 571 (e.g., the most recent time the object tracking vector 511 was updated), one or more translational values 572 for a physical object (e.g., x, y, and z values relative to the physical environment 105, the world-at-large, and/or the like), one or more rotational values 574 for the physical object (e.g., roll, pitch, and yaw values), one or more input (pressure) values 576 associated with the physical object (e.g., a first input (pressure) value associated with contact between an end of the control device 130 and a surface, a second input (pressure) value associated with an amount of pressure exerted on a body of the control device 130 while grasped by the user 149, and/or the like), optional touch input information 578 (e.g., information associated with user touch inputs directed to the touch-sensitive surface 175 of the control device 130), and/or miscellaneous information 579. One of ordinary skill in the art will appreciate that the data structure for the object tracking vector 511 in Figure 5B is merely an example that may include different information portions in various other implementations and be structured in myriad ways in various other implementations.

According to some implementations, the eye tracking engine 512 obtains the local sensor data 503 and the remote sensor data 505 after it has been subjected to the privacy architecture 508. In some implementations, the eye tracking engine 512 determines/generates an eye tracking vector 513 associated with a gaze direction of the user 149 based on the input data and updates the eye tracking vector 513 over time.

Figure 5B shows an example data structure for the eye tracking vector 513 in accordance with some implementations. As shown in Figure 5B, the eye tracking vector 513 may correspond to an N-tuple characterization vector or characterization tensor that includes a timestamp 581 (e.g., the most recent time the eye tracking vector 513 was updated), one or more angular values 582 for a current gaze direction of the user 149 (e.g., roll, pitch, and yaw values), one or more translational values 584 for the current gaze direction of the user 149 (e.g., x, y, and z values relative to the physical environment 105, the world-at-large, and/or the like), and/or miscellaneous information 586. One of ordinary skill in the art will appreciate that the data structure for the eye tracking vector 513 in Figure 5B is merely an example that may include different information portions in various other implementations and be structured in myriad ways in various other implementations.

For example, the gaze direction indicates a point (e.g., associated with x, y, and z coordinates relative to the physical environment 105 or the world-at-large), a physical object, or a region of interest (ROI) in the physical environment 105 at which the user 149 is currently looking. As another example, the gaze direction indicates a point (e.g., associated with x, y, and z coordinates relative to the XR environment 128), an XR object, or a region of interest (ROI) in the XR environment 128 at which the user 149 is currently looking.

According to some implementations, the body/head pose tracking engine 514 obtains the local sensor data 503 and the remote sensor data 505 after it has been subjected to the privacy architecture 508. In some implementations, the body/head pose tracking engine 514 determines/generates a pose characterization vector 515 based on the input data and updates the pose characterization vector 515 over time.

Figure 5B shows an example data structure for the pose characterization vector 515 in accordance with some implementations. As shown in Figure 5B, the pose characterization vector 515 may correspond to an N-tuple characterization vector or characterization tensor that includes a timestamp 591 (e.g., the most recent time the pose characterization vector 515 was updated), a head pose descriptor 592A (e.g., upward, downward, neutral, etc.), translational values for the head pose 592B, rotational values for the head pose 592C, a body pose descriptor 594A (e.g., standing, sitting, prone, etc.), translational values for body sections/extremities/limbs/joints 594B, rotational values for the body sections/extremities/limbs/joints 594C, and/or miscellaneous information 596. In some implementations, the pose characterization vector 515 also includes information associated with finger/hand/extremity tracking. One of ordinary skill in the art will appreciate that the data structure for the pose characterization vector 515 in Figure 5B is merely an example that may include different information portions in various other implementations and be structured in myriad ways in various other implementations.

According to some implementations, the data aggregator 521 obtains the object tracking vector 511, the eye tracking vector 513, and the pose characterization vector 515 (sometimes collectively referred to herein as an "input vector 519"). In some implementations, the data aggregator 521 aggregates the object tracking vector 511, the eye tracking vector 513, and the pose characterization vector 515 and determines/generates a characterization vector 531 based thereon for subsequent downstream usage.

In some implementations, the content selection engine 522 determines a selected content portion 523 within the XR environment 128 based on the characterization vector 531 (or a portion thereof). For example, the content selection engine 522 determines the selected content portion 523 based on the current contextual information, the gaze direction of the user 149, body pose information associated with the user 149, head pose information associated with the user 149, hand/extremity tracking information associated with the user 149, positional information associated with the physical object, rotational information associated with the physical object, and/or the like. As one example, the content selection engine 522 performs a selection operation on a first portion of content based on a direction in which (e.g., a ray projecting from) a predetermined portion (e.g., an outward facing end) of the physical object is pointing in accordance with a determination that a grip pose, associated with a manner in which the physical object is being held by the user, corresponds to a first grip (e.g., the first grip = a pointing/wand-like grip). As another example, the content selection engine 522 performs a selection operation on a second portion of the content based on a gaze direction of the user in accordance with a determination that the grip pose, associated with the manner in which the physical object is being held by the user, does not correspond to the first grip.

In some implementations, the grip pose evaluator 524 determines a grip pose 525 associated with a current manner in which the physical object is being held by the user 149 based on the characterization vector 531 (or a portion thereof). For example, the grip pose evaluator 524 determines the grip pose 525 based on current contextual information, body pose information associated with the user 149, head pose information associated with the user 149, hand/extremity tracking information associated with the user 149, positional information associated with the physical object, rotational information associated with the physical object, and/or the like. In some implementations, the grip pose 525 indicates a manner in which the user 149 grasps the physical object. For example, the grip pose 525 corresponds to one of a remote-control-esque grip, a wand-esque grip, a writing grip, an inverse writing grip, a handle grip, a thumb top grip, a level-esque grip, a gamepad-esque grip, a flute-esque grip, a fire-starter-esque grip, or the like.

In some implementations, the output modality selector 526 selects a current output modality 527 associated with a manner in which the physical object interacts with the XR environment 128 or manipulates the XR environment 128. For example, a first output modality corresponds to selecting/manipulating object(s)/content within the XR environment 128, and a second output modality corresponds to sketching, drawing, writing, etc. within the XR environment 128. As one example, the output modality selector 526 selects a first output modality associated as a current output modality 527 for the physical object in accordance with a determination that movement of the physical object causes the physical object to breach a distance threshold relative to a first graphical element among the first plurality of graphical elements. As another example, the output modality selector 526 selects a second output modality as a current output modality 527 for the physical object in accordance with a determination that movement of the physical object causes the physical object to breach a distance threshold relative to a second graphical element among the first plurality of graphical elements.

In some implementations, the parameter adjustor 528 adjusts a parameter value 529 (e.g., the thickness, brightness, color, texture, etc. of marks) associated with a marking input directed to the XR environment 128 based on either a first input (pressure) value or a second input (pressure) value associated with the physical object. As one example, the parameter adjustor 528 adjusts the parameter value 529 associated with a detected marking input directed to the XR environment 128 based on how hard the physical object is being pressed against the physical surface (e.g., a first input (pressure) value) in accordance with a determination that the marking input is directed to a physical surface (e.g., a tabletop, another planar surface, or the like). As another example, the parameter adjustor 528 adjusts the parameter value 529 associated with a detected marking input directed to the XR environment 128) based on how hard the physical object is being grasped by the user 149 (e.g., a second input (pressure) value) in accordance with a determination that the marking input is not directed to a physical surface In this example, the marking input is detected while the physical object or a predefined portion of the physical object such as a tip of the physical object is not in contact with any physical surface in the physical environment 105.

Figure 5C is a block diagram of a second portion 500B of the example content delivery architecture in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the content delivery architecture is included in a computing system such as the controller 110 shown in Figures 1 and 2; the electronic device 120 shown in Figures 1 and 3; and/or a suitable combination thereof. Figure 5C is similar to and adapted from Figure 5A. Therefore, similar reference numbers are used in Figures 5A and 5C. As such, only the differences between Figures 5A and 5C will be described below for the sake of brevity.

According to some implementations, the interaction handler 540 obtains (e.g., receives, retrieves, or detects) one or more user inputs 541 provided by the user 149 that are associated with selecting A/V content, one or more VAs, and/or XR content for presentation. For example, the one or more user inputs 541 correspond to a gestural input modifying and/or manipulating the XR content or VA(s) within the XR environment 128 detected via hand/extremity tracking, a gestural input selecting XR content within the XR environment 128 or from a UI menu detected via hand/extremity tracking, an eye gaze input selecting XR content the XR environment 128 or from the UI menu detected via eye tracking, a voice command selecting XR content the XR environment 128 or from the UI menu detected via a microphone, and/or the like. In some implementations, the content selector 542 selects XR content 547 from the content library 545 based on one or more user inputs 541.

In various implementations, the content manager 530 manages and updates the layout, setup, structure, and/or the like for the XR environment 128, including one or more of VAs, XR content, one or more UI elements associated with the XR content, and/or the like, based on the selected content portion 523, the grip pose 525, the output modality 527, the parameter value 529, the characterization vector 531, and/or the like. To that end, the content manager 530 includes the buffer 534, the content updater 536, and the feedback engine 538.

In some implementations, the buffer 534 includes XR content, a rendered image frame, and/or the like for one or more past instances and/or frames. In some implementations, the content updater 536 modifies the XR environment 128 over time based on the selected content portion 523, the grip pose 525, the output modality 527, the parameter value 529, the characterization vector 531, the user inputs 541 associated with modifying and/or manipulating the XR content or VA(s), translational or rotational movement of objects within the physical environment 105, translational or rotational movement of the electronic device 120 (or the user 149), and/or the like. In some implementations, the feedback engine 538 generates sensory feedback (e.g., visual feedback such as text or lighting changes, audio feedback, haptic feedback, etc.) associated with the XR environment 128.

According to some implementations, with reference to the rendering engine 550 in Figure 5C, the pose determiner 552 determines a current camera pose of the electronic device 120 and/or the user 149 relative to the XR environment 128 and/or the physical environment 105 based at least in part on the pose characterization vector 515. In some implementations, the renderer 554 renders the VA(s), the XR content 547, one or more UI elements associated with the XR content, and/or the like according to the current camera pose relative thereto.

According to some implementations, the optional image processing architecture 562 obtains an image stream from an image capture device 370 including one or more images of the physical environment 105 from the current camera pose of the electronic device 120 and/or the user 149. In some implementations, the image processing architecture 562 also performs one or more image processing operations on the image stream such as warping, color correction, gamma correction, sharpening, noise reduction, white balance, and/or the like. In some implementations, the optional compositor 564 composites the rendered XR content with the processed image stream of the physical environment 105 from the image processing architecture 562 to produce rendered image frames of the XR environment 128. In various implementations, the presenter 570 presents the rendered image frames of the XR environment 128 to the user 149 via the one or more displays 312. One of ordinary skill in the art will appreciate that the optional image processing architecture 562 and the optional compositor 564 may not be applicable for fully virtual environments (or optical see-through scenarios).

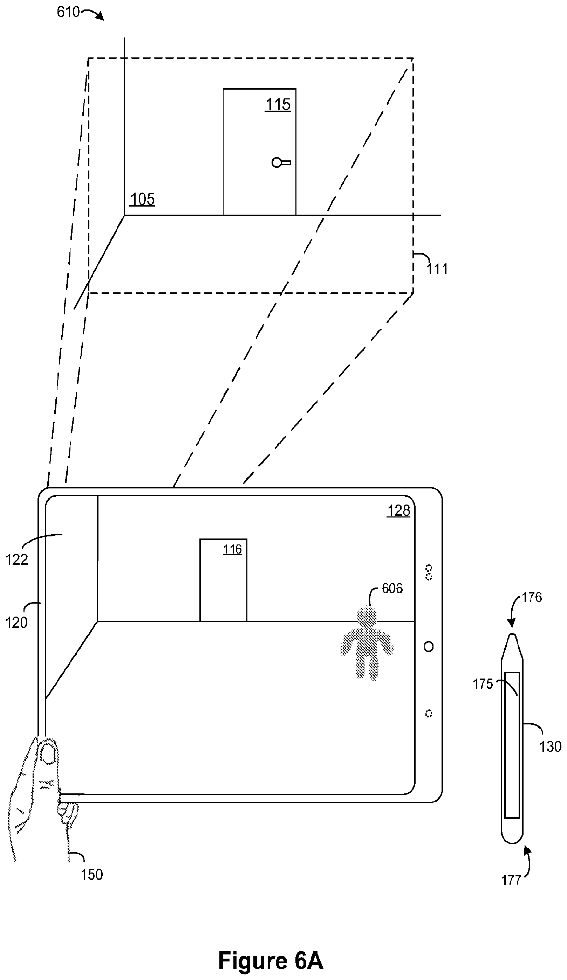

Figures 6A-6P illustrate a sequence of instances 610-6160 for a content delivery scenario in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, the sequence of instances 610-6160 are rendered and presented by a computing system such as the controller 110 shown in Figures 1 and 2; the electronic device 120 shown in Figures 1 and 3; and/or a suitable combination thereof.

As shown in Figures 6A-6P, the content delivery scenario includes a physical environment 105 and an XR environment 128 displayed on the display 122 of the electronic device 120 (e.g., associated with the user 149). The electronic device 120 presents the XR environment 128 to the user 149 while the user 149 is physically present within the physical environment 105 that includes a door 115, which is currently within the FOV 111 of an exterior-facing image sensor of the electronic device 120. As such, in some implementations, the user 149 holds the electronic device 120 in his/her left hand 150 similar to the operating environment 100 in Figure 1.

In other words, in some implementations, the electronic device 120 is configured to present XR content and to enable optical see-through or video pass-through of at least a portion of the physical environment 105 on the display 122 (e.g., the door 115 or a representation thereof). For example, the electronic device 120 corresponds to a mobile phone, tablet, laptop, near-eye system, wearable computing device, or the like.

As shown in Figure 6A, during the instance 610 (e.g., associated with time T₁) of the content delivery scenario, the electronic device 120 presents the XR environment 128 including a representation 116 of the door 115 and a virtual agent (VA) 606. As shown in Figure 6A, the control device 130 is neither currently held by the user 149 nor detecting any inputs directed to its touch-sensitive surface 175.

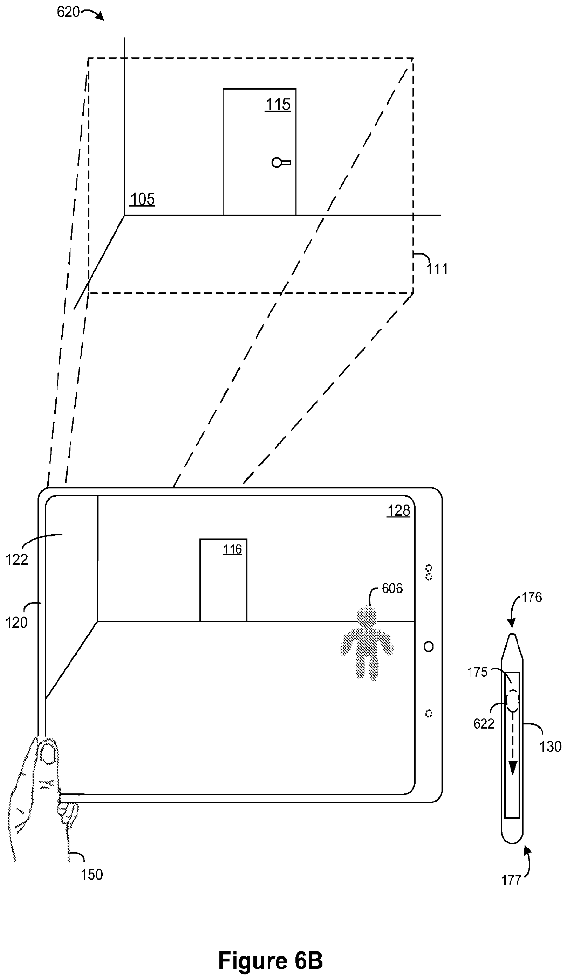

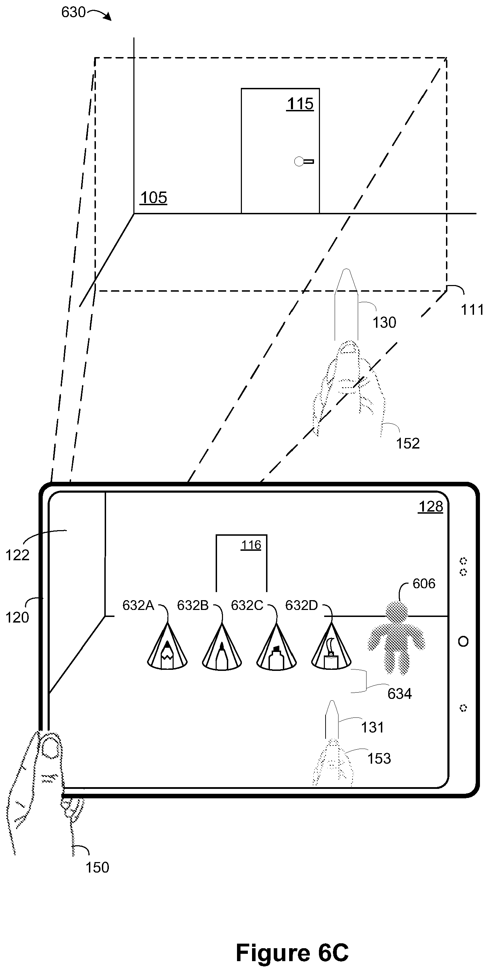

Figures 6B and 6C illustrate a sequence in which a first plurality of graphical elements associated with a first plurality of output modalities are displayed within the XR environment 128 in response to detecting a touch input directed to the control device 130. As shown in Figure 6B, during the instance 620 (e.g., associated with time T₂) of the content delivery scenario, the control device 130 detects a swipe input 622 directed to the touch-sensitive surface 175. In some implementations, the control device 130 provides an indication of the swipe input 622 to the controller 110 and/or the electronic device 120. In some implementations, the control device 130 communicates with the electronic device 120 and/or the controller 130.

As shown in Figure 6C, during the instance 630 (e.g., associated with time T₃) of the content delivery scenario, the electronic device 120 displays graphical elements 632A, 632B, 632C, and 632D (sometimes collectively referred to herein as a first plurality of graphical elements 632) in response to obtaining the indication of the swipe input 622 directed to the touch-sensitive surface 175 of the control device 130 in Figure 6B or detecting the swipe input 622 directed to the touch-sensitive surface 175 of the control device 130 in Figure 6B.

Furthermore, as shown in Figure 6C, the electronic device 120 displays a representation 153 of the right hand 152 of the user 149 gripping a representation 131 of the control device 130. For example, the right hand 152 of the user 149 is currently gripping the control device 130 with a pointing grip pose. In some implementations, the first plurality of graphical elements 632 are a function of the current grip pose. For example, the graphical element 632A corresponds to an output modality associated with generating pencil-like marks within the XR environment 128, the graphical element 632B corresponds to an output modality associated with generating pen-like marks within the XR environment 128, the graphical element 632C corresponds to an output modality associated with generating marker-like marks within the XR environment 128, and the graphical element 632D corresponds to an output modality associated with generating airbrush-like marks within the XR environment 128.

In Figure 6C, a spatial location of the representation 131 of the control device 130 is outside of an activation region 634 associated with the graphical element 632D. In some implementations, the activation region 634 corresponds to a predetermined distance threshold such as an X cm radius surrounding the graphical element 632D. In some implementations, the activation region 634 corresponds to a deterministic distance threshold surrounding the graphical element 632D.

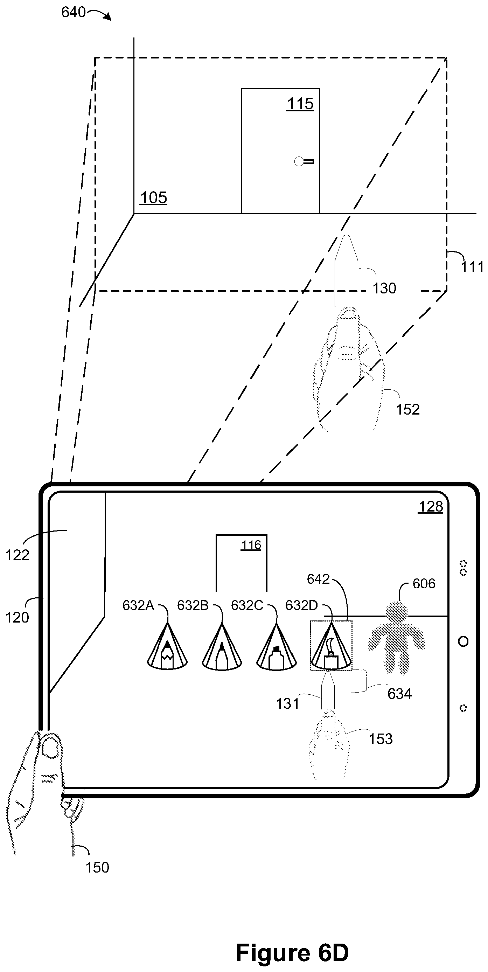

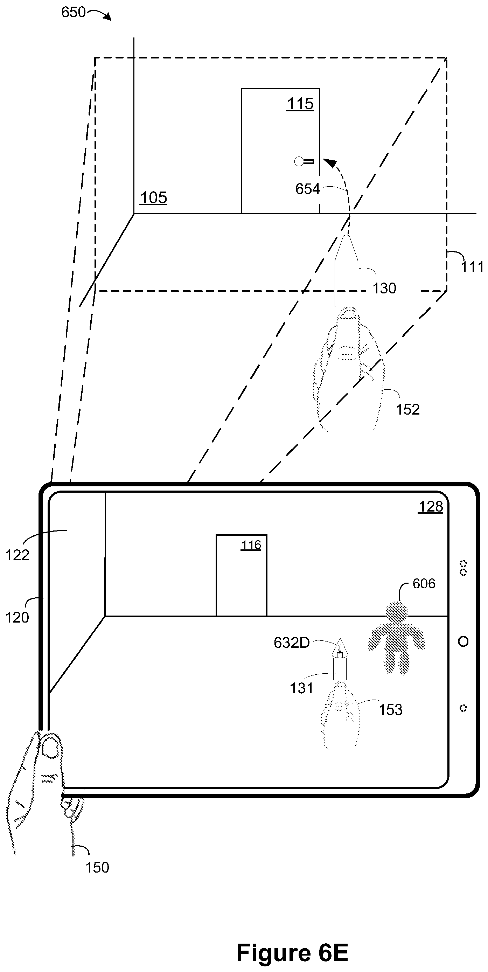

Figures 6D and 6E illustrate a sequence in which a first output modality (e.g., airbrush marking) is selected for the control device 130 in accordance with a determination that a movement of the control device 130 causes the control device 130 (or the representation thereof) to breach the activation region 634 (e.g., the distance threshold) relative to the graphical element 632D. As shown in Figure 6D, during the instance 640 (e.g., associated with time T₄) of the content delivery scenario, the electronic device 120 detects movement of the control device 130 that causes the spatial location of the representation 131 of the control device 130 to breach (or enter) the activation region 634 (e.g., the distance threshold) relative to the graphical element 632D. In response to detecting that the movement of the control device 130 that causes the spatial location of the representation 131 of the control device 130 to breach the activation region 634 relative to the graphical element 632D, the electronic device 120 changes the appearance of the graphical element 632D to indicate its selection by displaying a border or frame 642 around the graphical element 632D. One of ordinary skill in the art will appreciate that the appearance of the graphical element 632D may be changed in other ways to indicate its selection such as by changing its brightness, color, texture, shape, size, glow, shadow, and/or the like.

As shown in Figure 6E, during the instance 650 (e.g., associated with time Ts) of the content delivery scenario, the electronic device 120 ceases to display the graphical elements 632A, 632B, and 632C in response to detecting that the movement of the control device 130 that causes the spatial location of the representation 131 of the control device 130 to breach the activation region 634 relative to the graphical element 632D in Figure 6D.

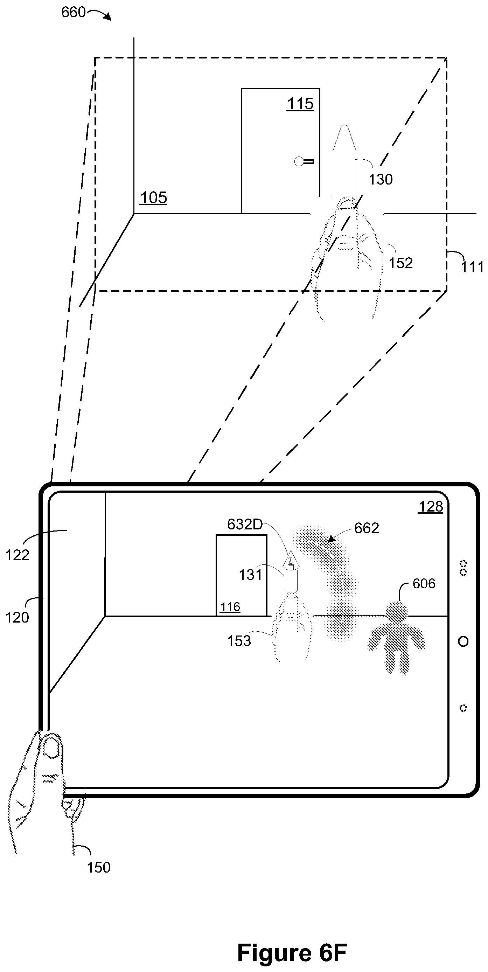

Furthermore, in Figure 6E, the electronic device 120 displays the graphical elements 632D overlaid on a tip of the representation 131 of the control device 130 within the XR environment 128 in response to detecting that the movement of the control device 130 that causes the spatial location of the representation 131 of the control device 130 to breach the activation region 634 relative to the graphical element 632D in Figure 6D. In some implementations, in response to selection of the graphical element 632D, the graphical element 632D remains anchored to the tip of the representation 131 of the control device 130 as shown in Figures 6E and 6F.

Figures 6E and 6F illustrate a sequence in which detection of a marking input causes one or more marks to be displayed within the XR environment 128 according to the currently selected first output modality (e.g., airbrush marks). As shown in Figure 6E, during the instance 650 (e.g., associated with time T₅) of the content delivery scenario, the electronic device 120 detects a marking input 654 with the control device 130 by way of hand/extremity tracking. As shown in Figure 6F, during the instance 660 (e.g., associated with time T₆) of the content delivery scenario, the electronic device 120 displays an airbrush-like mark 662 within the XR environment 128 in response to detecting the marking input 654 in Figure 6E. For example, the shape, depth, length, angle, etc. of the airbrush-like mark 662 corresponds to spatial parameters of the marking input 654 (e.g., positional values, rotational values, displacement, spatial acceleration, spatial velocity, angular acceleration, angular velocity, etc. associated with the marking input).

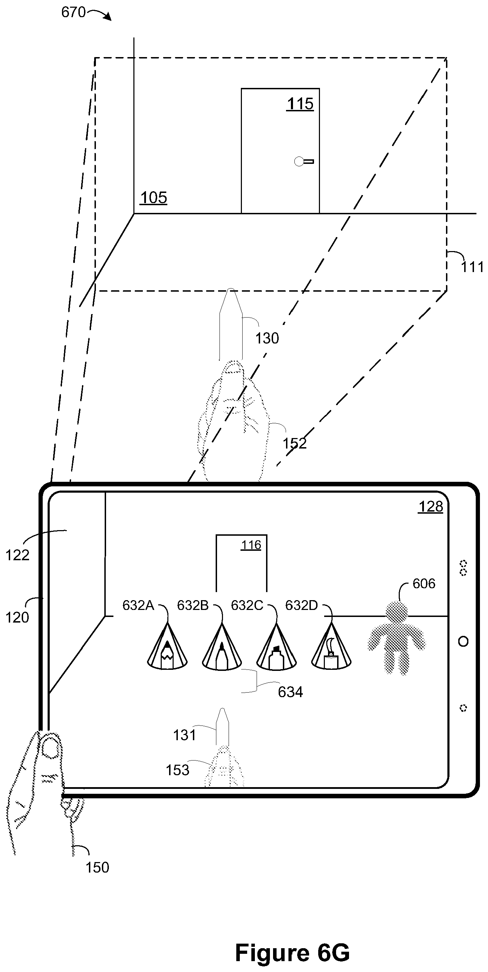

Figures 6G-6I illustrate a sequence in which a second output modality (e.g., pen marking) is selected for the control device 130 in accordance with a determination that a movement of the control device 130 causes the control device 130 (or the representation thereof) to breach the activation region 634 (e.g., the distance threshold) relative to the graphical element 632B. As shown in Figure 6G, during the instance 670 (e.g., associated with time T₇) of the content delivery scenario, the electronic device 120 displays graphical elements 632A, 632B, 632C, and 632D (sometimes collectively referred to herein as the first plurality of graphical elements 632) in response to obtaining the indication of the swipe input 622 directed to the touch-sensitive surface 175 of the control device 130 in Figure 6B or detecting the swipe input 622 directed to the touch-sensitive surface 175 of the control device 130 in Figure 6B.

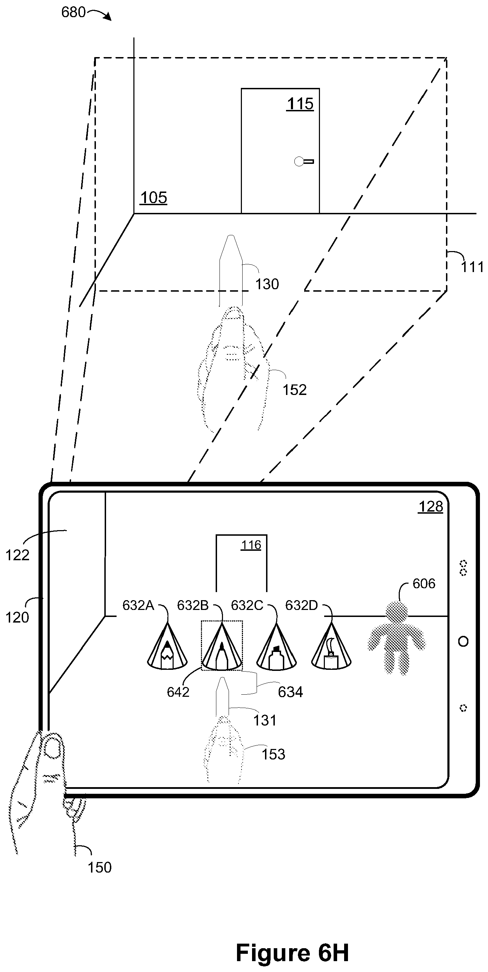

As shown in Figure 6H, during the instance 680 (e.g., associated with time T₈) of the content delivery scenario, the electronic device 120 detects movement of the control device 130 that causes the spatial location of the representation 131 of the control device 130 to breach (or enter) the activation region 634 (e.g., the distance threshold) relative to the graphical element 632B. In response to detecting that the movement of the control device 130 that causes the spatial location of the representation 131 of the control device 130 to breach the activation region 634 relative to the graphical element 632D, the electronic device 120 changes the appearance of the graphical element 632B to indicate its selection by displaying a border or frame 642 around the graphical element 632B. One of ordinary skill in the art will appreciate that the appearance of the graphical element 632B may be changed in other ways to indicate its selection such as by changing its brightness, color, texture, shape, size, glow, shadow, and/or the like.

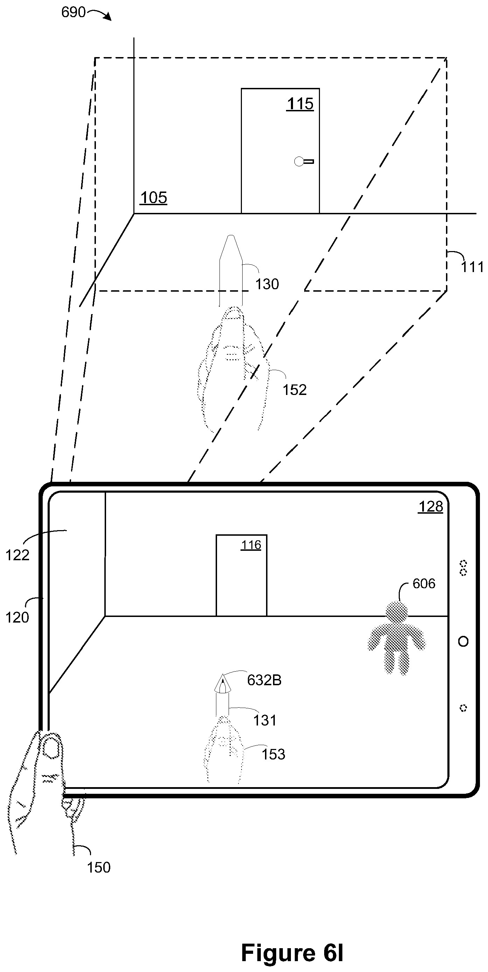

As shown in Figure 6I, during the instance 690 (e.g., associated with time T₉) of the content delivery scenario, the electronic device 120 ceases to display the graphical elements 632A, 632C, and 632D in response to detecting that the movement of the control device 130 that causes the spatial location of the representation 131 of the control device 130 to breach the activation region 634 relative to the graphical element 632B in Figure 6H. In some implementations, in response to selection of the graphical element 632B, the graphical element 632B remains anchored to the tip of the representation 131 of the control device 130 as shown in Figures 6I-6N.

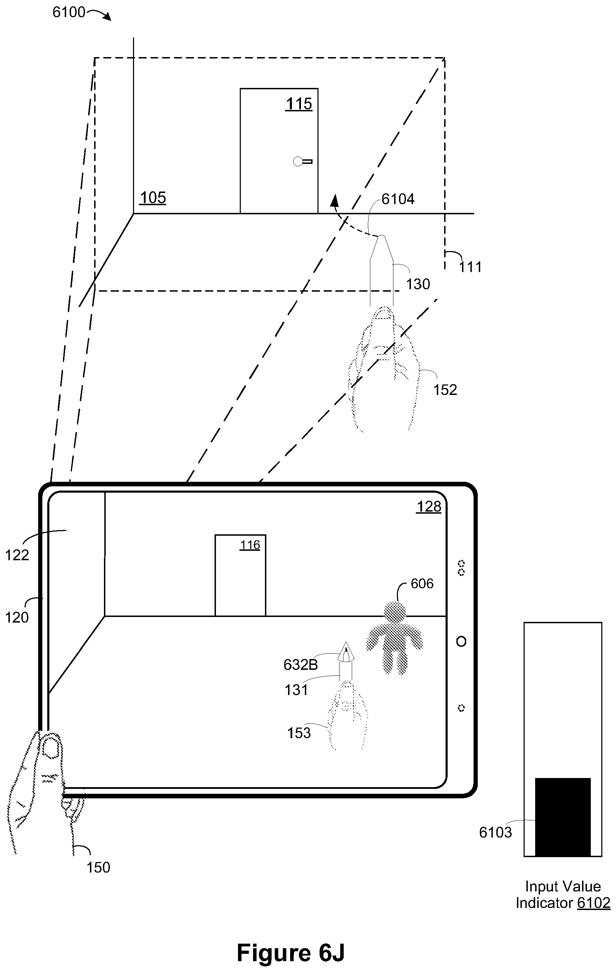

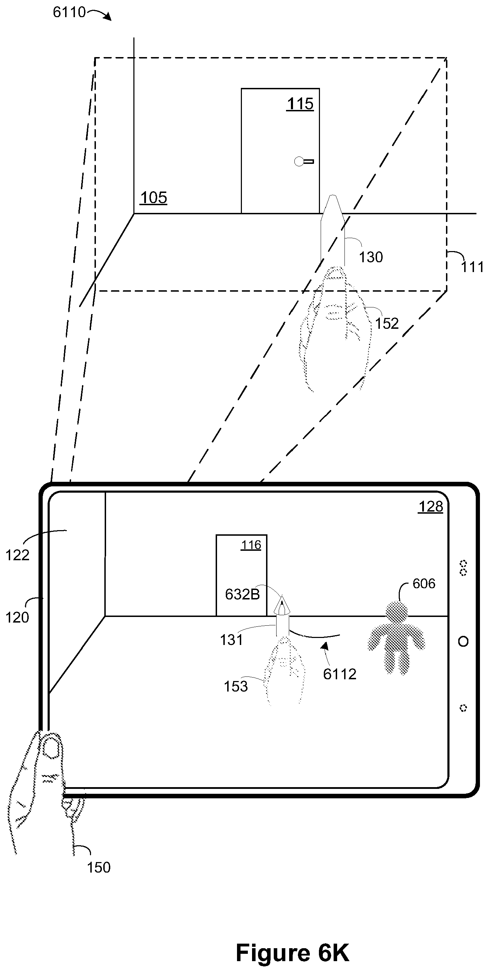

Figures 6J and 6K illustrate a sequence in which detection of a first marking input causes one or more marks to be displayed within the XR environment 128 according to the currently selected second output modality (e.g., pen marking) and the current measurement of the input (pressure) value. As shown in Figure 6J, during the instance 6100 (e.g., associated with time T₁₀) of the content delivery scenario, the electronic device 120 detects a marking input 6104 with the control device 130 by way of hand/extremity tracking. While the marking input 6104 is detected, the electronic device 120 also detects an input (pressure) value or obtains an indication of the input (pressure) value associated with how hard the control device 130 is being grasped by the right hand 152 of the user 149. As one example, the input (pressure) value is detected by one or more pressure sensors integrated into the body of the control device 130. As another example, the input (pressure) value is detected by analyzing finger/skin deformation or the like within one or more images captured by an exterior-facing image sensor of the electronic device 120 with a computer vision technique. As shown in Figure 6J, an input (pressure) value indicator 6102 indicates a current measurement 6103 of the input (pressure) value associated with how hard the control device 130 is being grasped by the user 149. According to some implementations, the input (pressure) value indicator 6102 is an illustration to guide the reader that may or may not be displayed by the electronic device 120.

As shown in Figure 6K, during the instance 6110 (e.g., associated with time T₁₁) of the content delivery scenario, the electronic device 120 displays a pen-like mark 6112 within the XR environment 128 in response to detecting the marking input 6104 in Figure 6J. For example, the shape, depth, length, angle, etc. of the pen-like mark 6112 corresponds to the spatial parameters of the marking input 6104. Furthermore, in Figure 6K, the pen-like mark 6112 is associated with a first thickness value, which corresponds to the current measurement 6103 of the input (pressure) value in Figures 6J.

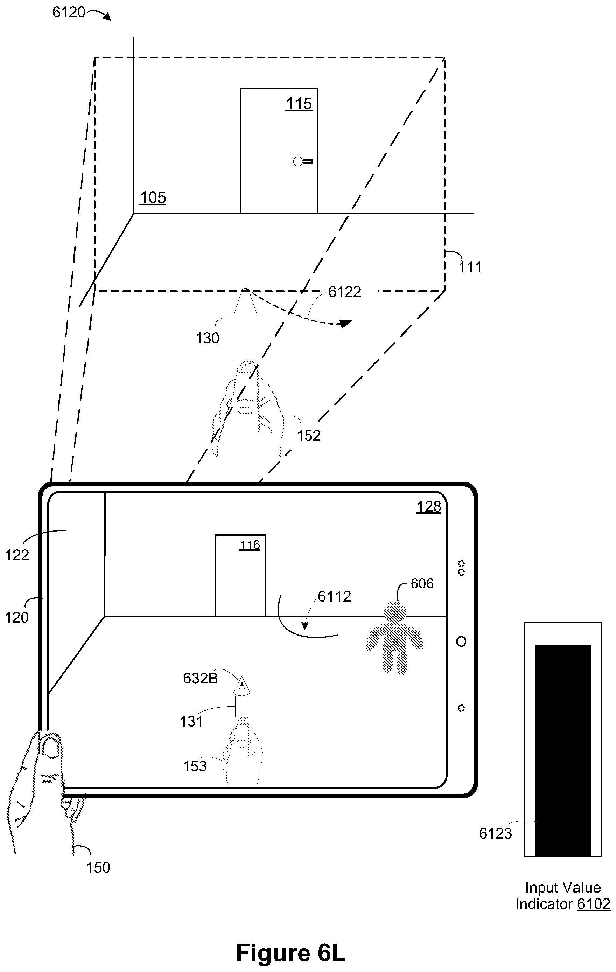

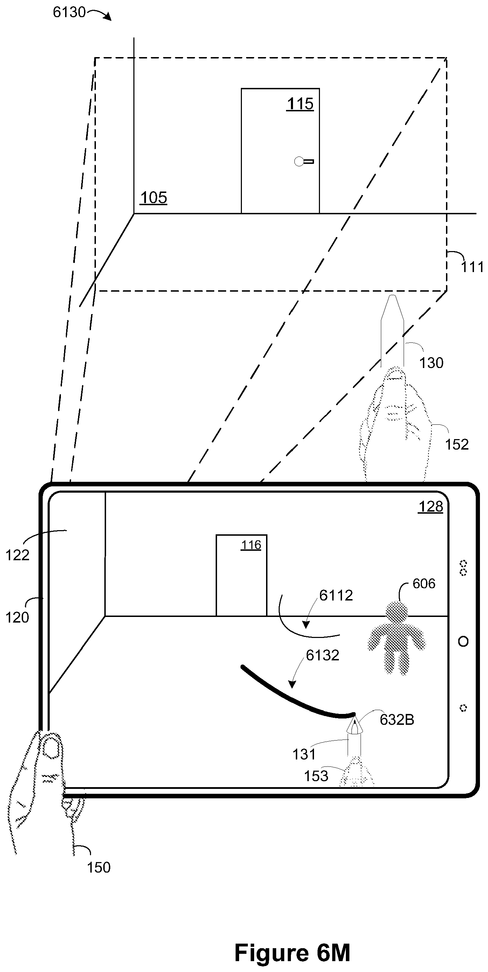

Figures 6L and 6M illustrate a sequence in which detection of a second marking input causes one or more marks to be displayed within the XR environment 128 according to the currently selected second output modality (e.g., pen marking) and the current measurement of the input (pressure) value. As shown in Figure 6L, during the instance 6120 (e.g., associated with time T₁₂) of the content delivery scenario, the electronic device 120 detects a marking input 6122 with the control device 130 by way of hand/extremity tracking. While the marking input 6122 is detected, the electronic device 120 also detects an input (pressure) value or obtains an indication of the input (pressure) value associated with how hard the control device 130 is being grasped by the right hand 152 of the user 149. As shown in Figure 6L, the input (pressure) value indicator 6102 indicates a current measurement 6123 of the input (pressure) value associated with how hard the control device 130 is being grasped by the user 149. The current measurement 6123 of the input (pressure) value in Figure 6L is greater than the measurement 6103 of the input (pressure) value in Figure 6J.

As shown in Figure 6M, during the instance 6130 (e.g., associated with time T₁₃) of the content delivery scenario, the electronic device 120 displays a pen-like mark 6132 within the XR environment 128 in response to detecting the marking input 6122 in Figure 6L. For example, the shape, depth, length, angle, etc. of the pen-like mark 6132 corresponds to the spatial parameters of the marking input 6122. Furthermore, in Figure 6M, the pen-like mark 6132 is associated with a second thickness value, which corresponds to the current measurement 6123 of the input (pressure) value in Figures 6L. The second thickness value associated with the pen-like mark 6132 in Figure 6M is greater than the first thickness value associated with the pen-like mark 6112 in Figure 6K.

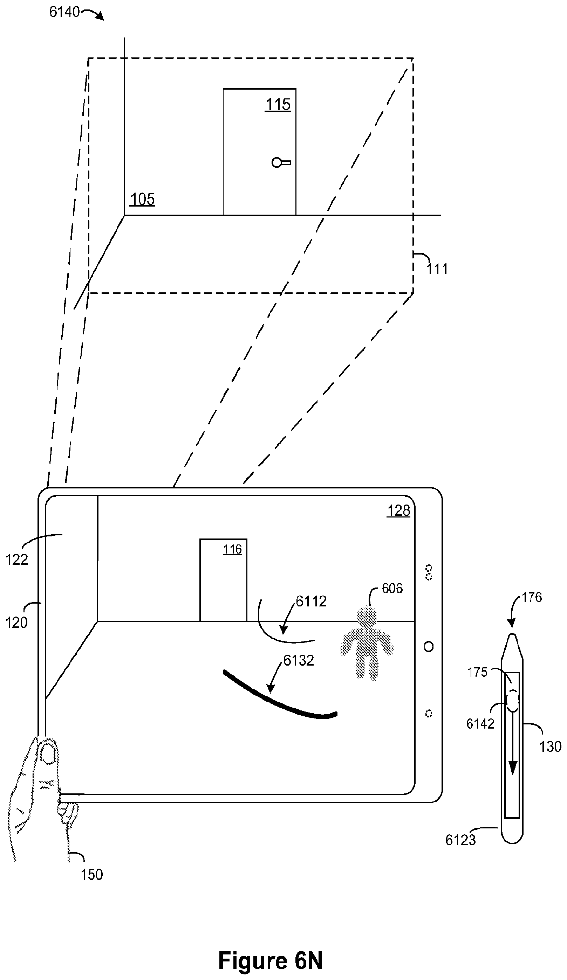

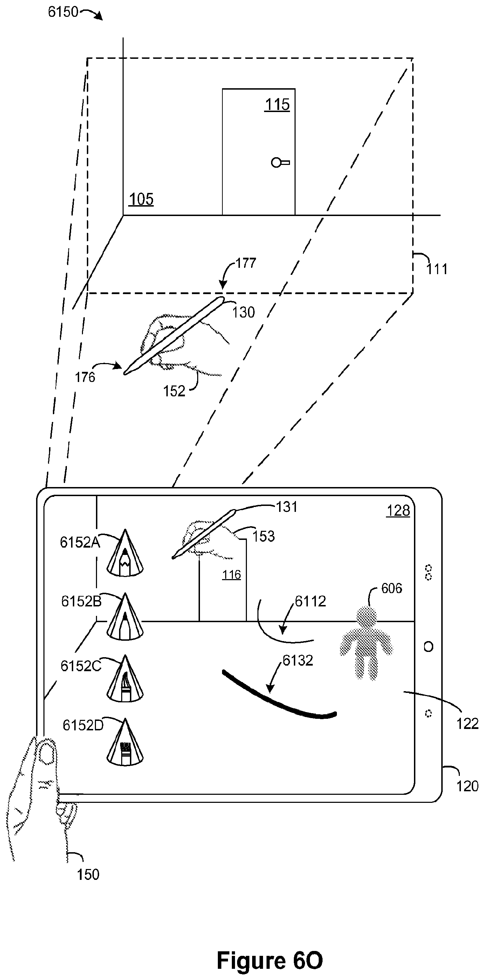

Figures 6N and 6O illustrate a sequence in which a second plurality of graphical elements associated with a second plurality of output modalities are displayed within the XR environment 128 in response to detecting a touch input directed to the control device 130. As shown in Figure 6N, during the instance 6140 (e.g., associated with time T₁₄) of the content delivery scenario, the control device 130 detects a swipe input 6142 directed to the touch-sensitive surface 175. In some implementations, the control device 130 provides an indication of the swipe input 6142 to the controller 110 and/or the electronic device 120.

As shown in Figure 6O, during the instance 6150 (e.g., associated with time T₁₅) of the content delivery scenario, the electronic device 120 displays graphical elements 6152A, 6152B, 6152C, and 6152D (sometimes collectively referred to herein as a second plurality of graphical elements 6152) in response to obtaining the indication of the swipe input 6142 directed to the touch-sensitive surface 175 of the control device 130 in Figure 6N or detecting the swipe input 6142 directed to the touch-sensitive surface 175 of the control device 130 in Figure 6N.

Furthermore, as shown in Figure 6O, the electronic device 120 displays a representation 153 of the right hand 152 of the user 149 gripping a representation 131 of the control device 130. For example, the right hand 152 of the user 149 is currently gripping the control device 130 with a writing grip pose with a first end 176 pointed downward and a second end 177 pointed upward. In some implementations, the second plurality of graphical elements 6152 are a function of the current grip pose (e.g., the writing grip pose). For example, the graphical element 6152A corresponds to an output modality associated with generating pencil-like marks within the XR environment 128, the graphical element 6152B corresponds to an output modality associated with generating pen-like marks within the XR environment 128, the graphical element 6152C corresponds to an output modality associated with generating narrow brush-like marks within the XR environment 128, and the graphical element 6152D corresponds to an output modality associated with generating wide brush-like marks within the XR environment 128.

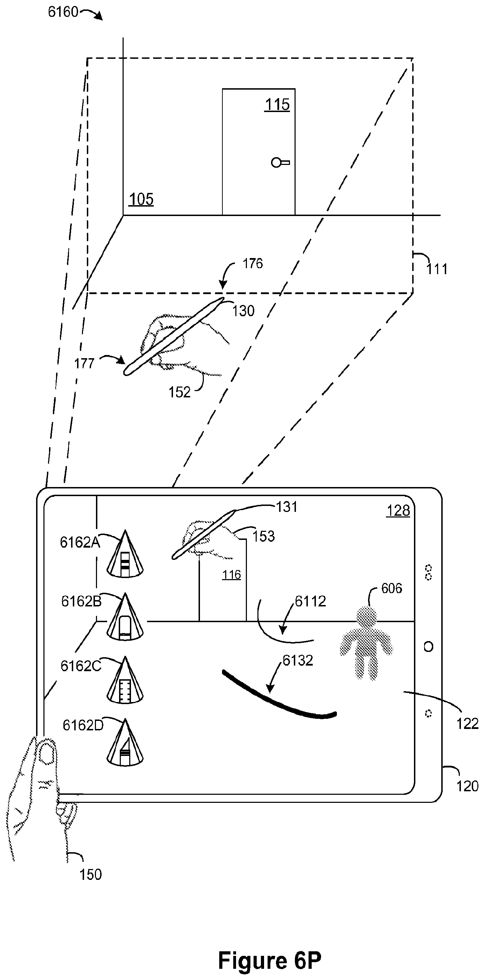

Figures 6O and 6P illustrate a sequence in which a third plurality of graphical elements associated with a third plurality of output modalities are displayed within the XR environment 128 in response to detecting a change in the current grip pose of the control device 130. As shown in Figure 6O, during the instance 6150 (e.g., associated with time T₁₅) of the content delivery scenario, the electronic device 120 detects the current grip pose of the control device 130 with a computer vision technique whereby the right hand 152 of the user 149 is currently gripping the control device 130 with a writing grip pose with a first end 176 pointed downward and a second end 177 pointed upward. However, between Figures 6O and 6P, the electronic device 120 detects a change in the current grip pose of the control device 130 from the writing grip pose in Figure 6O to an inverse writing grip pose in Figure 6P.

As shown in Figure 6P, during the instance 6160 (e.g., associated with time T₁₆) of the content delivery scenario, the electronic device 120 detects the current grip pose of the control device 130 with a computer vision technique whereby the right hand 152 of the user 149 is currently gripping the control device 130 with the inverse writing grip pose with the first end 176 pointed upward and the second end 177 pointed downward. As such, the control device 130 was flipped 180° relative to the orientation of its ends between Figures 6O and 6P. In Figure 6P, the electronic device 120 displays graphical elements 6162A, 6162B, 6162C, and 6162D (sometimes collectively referred to herein as a third plurality of graphical elements 6162) in response to detecting the change in the current grip pose of the control device 130 from the writing grip pose in Figure 6O to the inverse writing grip pose in Figure 6P.

In some implementations, the third plurality of graphical elements 6162 are a function of the current grip pose (e.g., the inverse writing grip pose). For example, the graphical element 6162A corresponds to an output modality associated with erasing or removing pixels within the XR environment 128 based on a first radius value, the graphical element 6162B corresponds to an output modality associated with erasing or removing pixels within the XR environment 128 based on a second radius value greater than the first radius value, the graphical element 6162C corresponds to an output modality associated with measuring marks within the XR environment 128, and the graphical element 6162D corresponds to an output modality associated with dissecting marks within the XR environment 128.

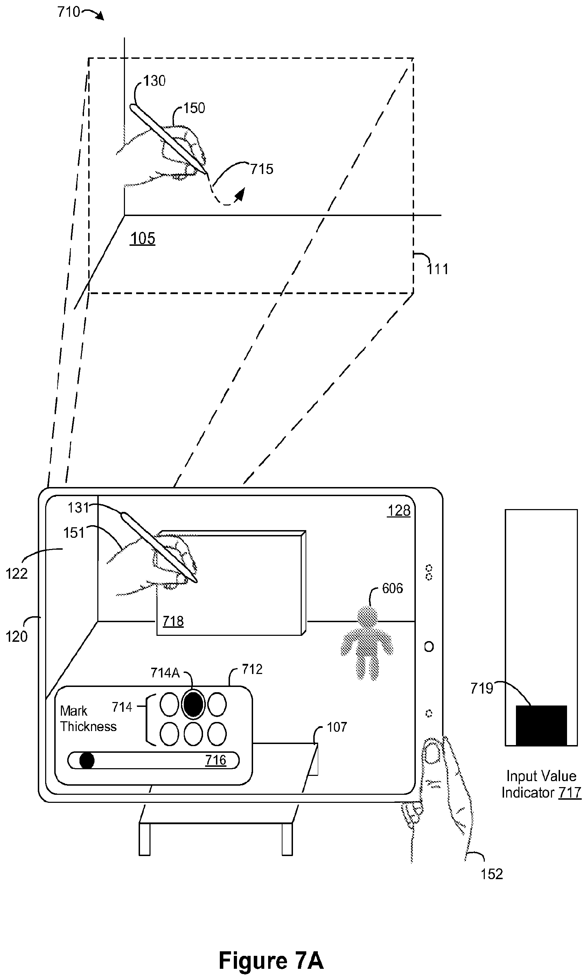

Figures 7A-7N illustrate a sequence of instances 710-7140 for a content delivery scenario in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, the sequence of instances 710-7140 are rendered and presented by a computing system such as the controller 110 shown in Figures 1 and 2; the electronic device 120 shown in Figures 1 and 3; and/or a suitable combination thereof.

As shown in Figures 7A-7N, the content delivery scenario includes a physical environment 105 and an XR environment 128 displayed on the display 122 of the electronic device 120 (e.g., associated with the user 149). The electronic device 120 presents the XR environment 128 to the user 149 while the user 149 is physically present within the physical environment 105 that includes a position of a table 107 which is currently within the FOV 111 of an exterior-facing image sensor of the electronic device 120. As such, in some implementations, the user 149 holds the electronic device 120 in his/her left hand 150 or right hand 152.

In other words, in some implementations, the electronic device 120 is configured to present XR content and to enable optical see-through or video pass-through of at least a portion of the physical environment 105 on the display 122 (e.g., the table 107). For example, the electronic device 120 corresponds to a mobile phone, tablet, laptop, near-eye system, wearable computing device, or the like.

As shown in Figure 7A, during the instance 710 (e.g., associated with time T₁) of the content delivery scenario, the electronic device 120 presents the XR environment 128 including a portion of the table 107, a virtual agent (VA) 606, an XR substrate 718 (e.g., a 2D or a 3D canvas), and a menu 712. As shown in Figure 7A, the electronic device 120 also displays a representation 151 of the left hand 150 of the user 149 gripping a representation 131 of the control device 130 within the XR environment 128. For example, the left hand 150 of the user 149 is currently gripping the control device 130 with a writing grip pose. As shown in Figure 7A, the menu 712 includes a plurality of selectable options 714 associated with changing the appearance of marks made within the XR environment (e.g., different colors, textures, etc.). For example, option 714A is currently selected among the plurality of selectable options 714. In this example, the option 714A corresponds to a first appearance for marks made within the XR environment 128 (e.g., black marks). As shown in Figure 7A, the menu 712 also includes a slider 716 for adjusting the thickness of marks made within the XR environment 128.

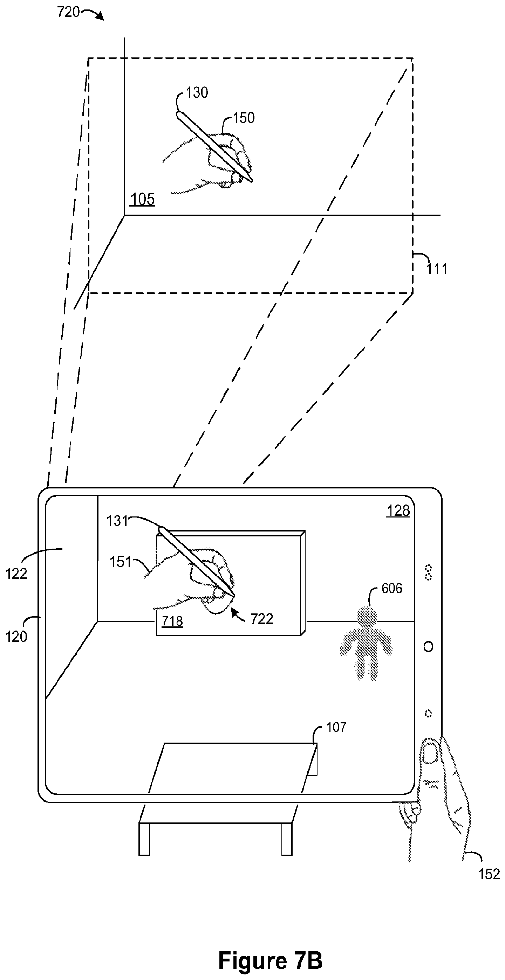

Figures 7A and 7B illustrate a sequence in which detection of a first marking input causes one or more marks to be displayed within the XR environment 128 according to a first measurement of an input (pressure) value. As shown in Figure 7A, during the instance 710 (e.g., associated with time T₁) of the content delivery scenario, the electronic device 120 detects a marking input 715 with the control device 130 by way of hand/extremity tracking. While the marking input 715 is detected, the electronic device 120 also detects an input (pressure) value or obtains an indication of the input (pressure) value associated with how hard the control device 130 is being grasped by the left hand 150 of the user 149. As one example, the input (pressure) value is detected by one or more pressure sensors integrated into the body of the control device 130. As another example, the input (pressure) value is detected by analyzing finger/skin deformation or the like within one or more images captured by an exterior-facing image sensor of the electronic device 120 with a computer vision technique. As shown in Figure 7A, an input (pressure) value indicator 717 indicates a current measurement 719 of the input (pressure) value associated with how hard the control device 130 is being grasped by the user 149. According to some implementations, the input (pressure) value indicator 717 is an illustration to guide the reader that may or may not be displayed by the electronic device 120.

As shown in Figure 7B, during the instance 720 (e.g., associated with time T₂) of the content delivery scenario, the electronic device 120 displays a mark 722 on the XR substrate 718 within the XR environment 128 in response to detecting the marking input 715 in Figure 7A. For example, the shape, depth, length, angle, etc. of the mark 722 corresponds to the spatial parameters of the marking input 715 (e.g., positional values, rotational values, displacement, spatial acceleration, spatial velocity, angular acceleration, angular velocity, etc. associated with the marking input). Furthermore, in Figure 7B, the mark 722 is associated with a first thickness value, which corresponds to the current measurement 719 of the input (pressure) value in Figure 7A.

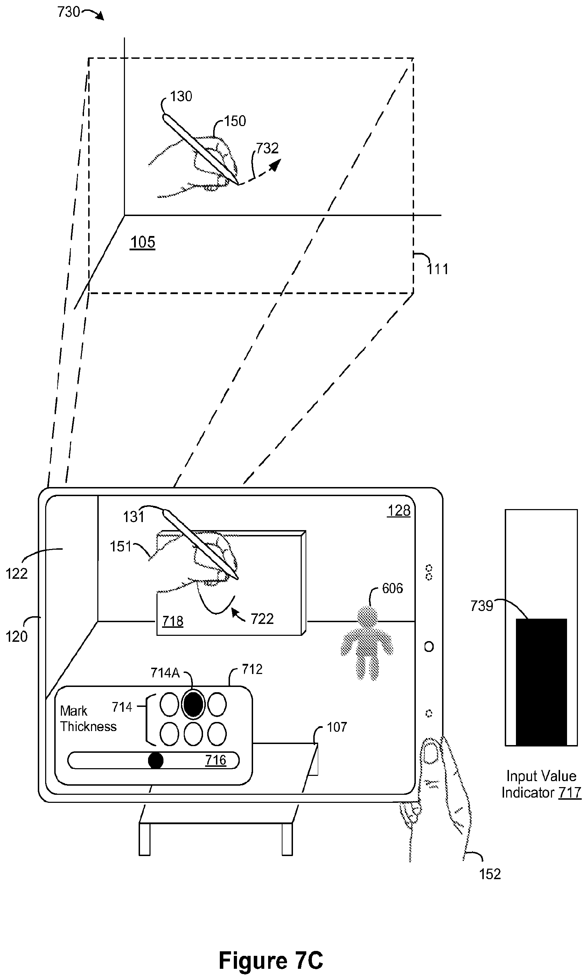

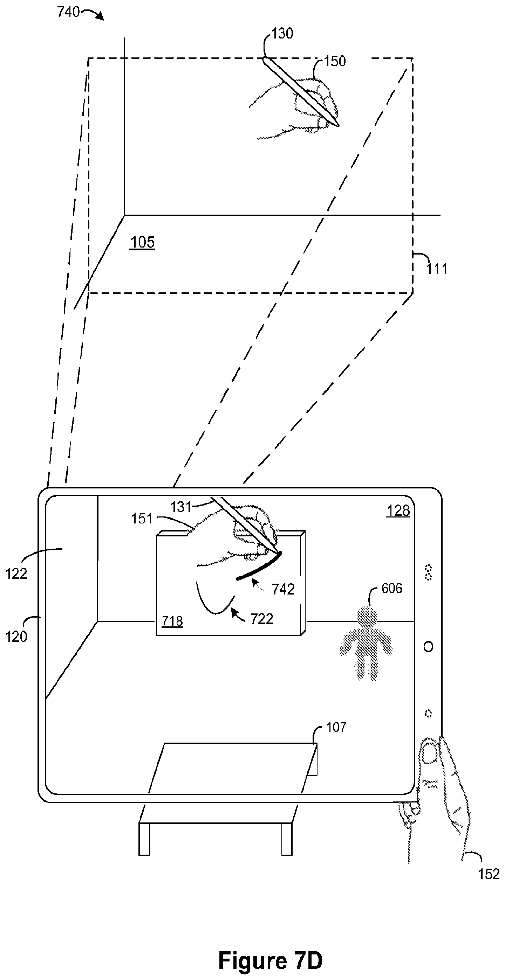

Figures 7C and 7D illustrate a sequence in which detection of a second marking input causes one or more marks to be displayed within the XR environment 128 according to a second measurement of the input (pressure) value. As shown in Figure 7C, during the instance 730 (e.g., associated with time T₃) of the content delivery scenario, the electronic device 120 detects a marking input 732 with the control device 130 by way of hand/extremity tracking. While the marking input 732 is detected, the electronic device 120 also detects an input (pressure) value or obtains an indication of the input (pressure) value associated with how hard the control device 130 is being grasped by the left hand 150 of the user 149. As shown in Figure 7C, the input (pressure) value indicator 717 indicates a current measurement 739 of the input (pressure) value associated with how hard the control device 130 is being grasped by the user 149. For example, the current measurement 739 in Figure 7C is greater than the measurement 719 in Figure 7A.

As shown in Figure 7D, during the instance 740 (e.g., associated with time T₄) of the content delivery scenario, the electronic device 120 displays a mark 742 on the XR substrate 718 within the XR environment 128 in response to detecting the marking input 732 in Figure 7C. For example, the shape, depth, length, angle, etc. of the mark 742 corresponds to the spatial parameters of the marking input 732. Furthermore, in Figure 7D, the mark 742 is associated with a second thickness value, which corresponds to the current measurement 739 of the input (pressure) value in Figures 7C. For example, the second thickness value associated with the mark 742 is greater than the first thickness value associated with the mark 722.

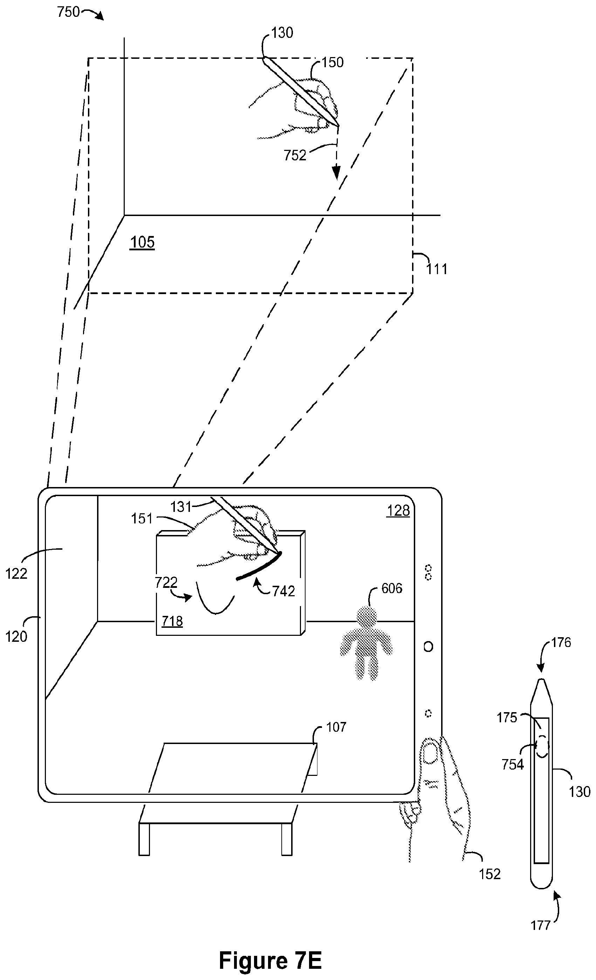

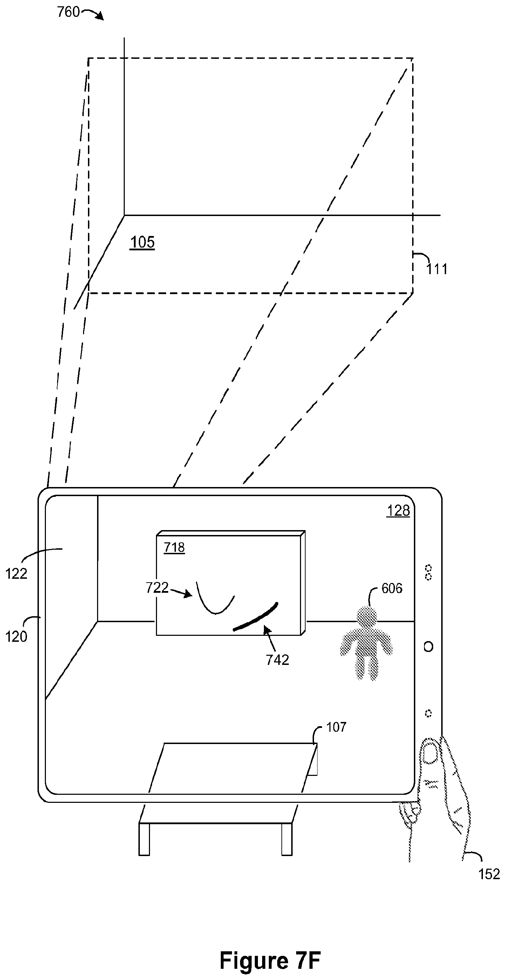

Figures 7E and 7F illustrate a sequence in which detection of a manipulation input causes one or more marks to be translated within the XR environment 128. As shown in Figure 7E, during the instance 750 (e.g., associated with time T₅) of the content delivery scenario, the electronic device 120 detects a manipulation input 752 with the control device 130 that corresponds to translating the mark 742 within the XR environment 128. While the manipulation input 752 is detected, the electronic device 120 also detects a touch input 754 directed to the touch-sensitive surface 175 of the control device 130 or obtains an indication of the touch input 754 directed to the touch-sensitive surface 175 of the control device 130. As one example, the touch input 754 is detected by the touch-sensitive surface 175 of the control device 130. As another example, the touch input 754 is detected by analyzing one or more images captured by an exterior-facing image sensor of the electronic device 120 with a computer vision technique.

As shown in Figure 7F, during the instance 760 (e.g., associated with time T₆) of the content delivery scenario, the electronic device 120 translates the mark 742 within the XR environment 128 in response to detecting the manipulation input 752 in Figure 7E while also detecting the touch input 754 directed to the touch-sensitive surface 175 of the control device 130 in Figure 7E. In some implementations, detection of the manipulation input 752 may be sufficient to cause translational movement of marks within the XR environment 128 without detecting the touch input 754 directed to the touch-sensitive surface 175 of the control device 130. In some implementations, detection of the manipulation input 752 in concert with the detection of the touch input 754 directed to the touch-sensitive surface 175 of the control device 130 causes translational movement of marks within the XR environment 128. For example, the angle, directionality, displacement, etc. of the translational movement of the mark 742 corresponds to the spatial parameters of the manipulation input 752 in Figure 7E. In some implementations, the manipulation input 752 may also cause rotational movement of the mark 742 based on rotational parameters of the manipulation input 752.

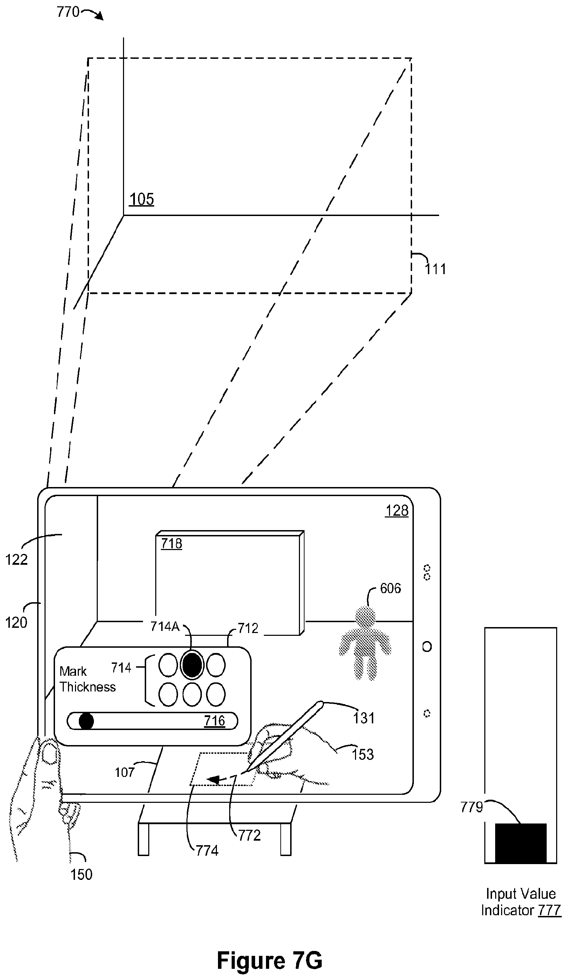

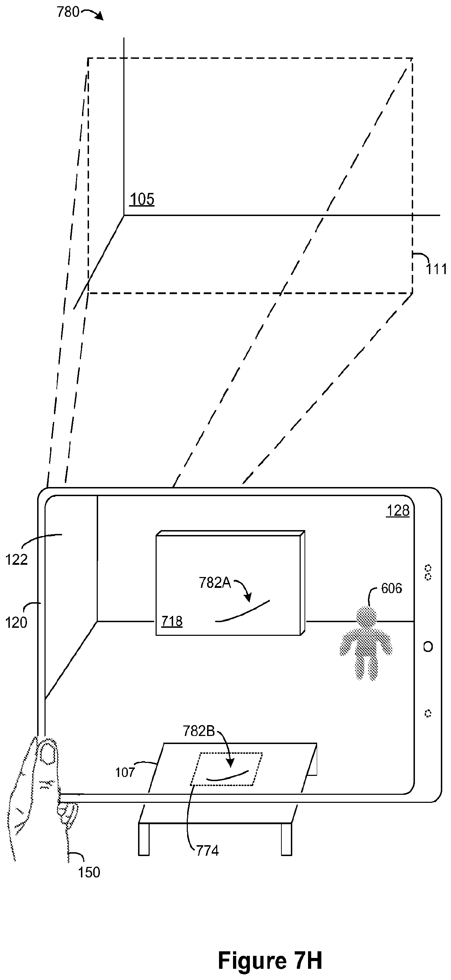

Figures 7G and 7H illustrate a sequence in which detection of a first marking input causes one or more marks to be displayed within the XR environment 128 according to a first measurement of an input (pressure) value. As shown in Figure 7G, during the instance 770 (e.g., associated with time T₇) of the content delivery scenario, the electronic device 120 detects a marking input 772 with the control device 130 directed to an input region 774 on the table 107 by way of hand/extremity tracking. For example, the input region 774 corresponds to a portion of a plane associated with the surface of the table 107. In some implementations, the input region 774 is visualized with an XR border or the like. In some implementations, the input region 774 is not visualized within the XR environment 128.

While the marking input 772 is detected, the electronic device 120 also detects an input (pressure) value or obtains an indication of the input (pressure) value associated with how hard the control device 130 is being pressed against the table 107. As one example, the input (pressure) value is detected by one or more pressure sensors integrated into one of the tips of the control device 130. As another example, the input (pressure) value is detected by analyzing one or more images captured by an exterior-facing image sensor of the electronic device 120 with a computer vision technique. As shown in Figure 7G, the input (pressure) value indicator 777 indicates a current measurement 779 of the input (pressure) value associated with how hard the control device 130 is being pressed against the table 107. According to some implementations, the input (pressure) value indicator 777 is an illustration to guide the reader that may or may not be displayed by the electronic device 120.

As shown in Figure 7H, during the instance 780 (e.g., associated with time T₈) of the content delivery scenario, the electronic device 120 displays a mark 782A on the XR substrate 718 within the XR environment 128 and a mark 782B on the input region 774 in response to detecting the marking input 715 in Figure 7G. For example, the shape, depth, length, angle, etc. of the marks 782A and 782B corresponds to the spatial parameters of the marking input 772 in Figure 7G (e.g., positional values, rotational values, displacement, spatial acceleration, spatial velocity, angular acceleration, angular velocity, etc. associated with the marking input). Furthermore, in Figure 7H, the marks 782A and 782B are associated with a first thickness value, which corresponds to the current measurement 779 of the input (pressure) value in Figure 7G.

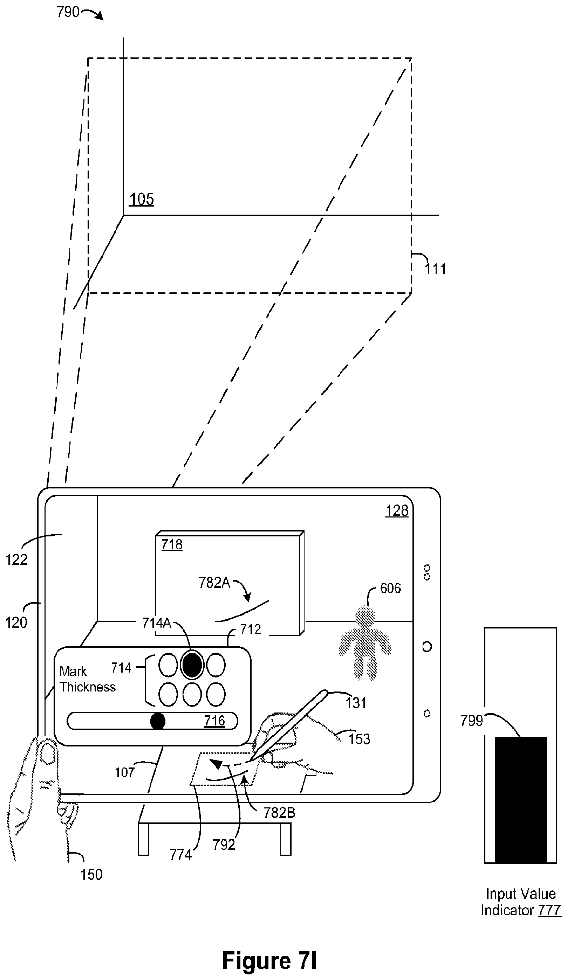

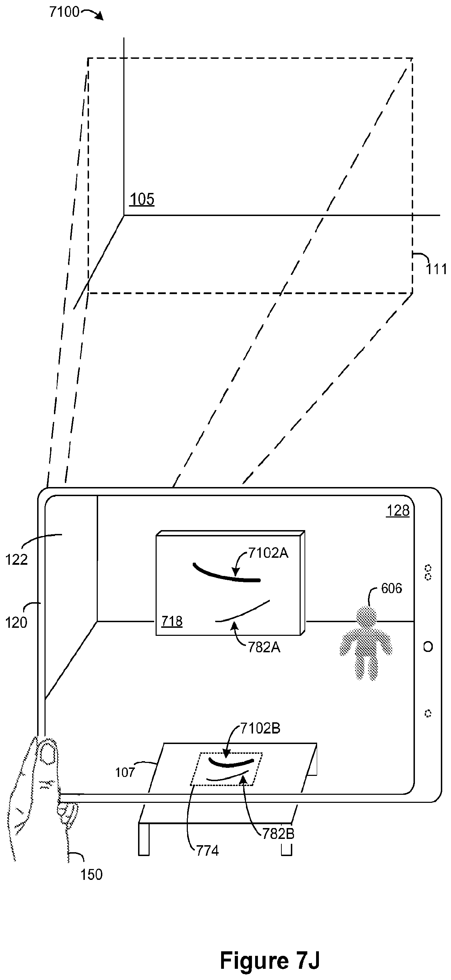

Figures 7I and 7J illustrate a sequence in which detection of a second marking input causes one or more marks to be displayed within the XR environment 128 according to a second measurement of the input (pressure) value. As shown in Figure 7I, during the instance 790 (e.g., associated with time T₉) of the content delivery scenario, the electronic device 120 detects a marking input 792 with the control device 130 directed to the input region 774 on the table 107 by way of hand/extremity tracking. While the marking input 792 is detected, the electronic device 120 also detects the input (pressure) value or obtains the indication of the input (pressure) value associated with how hard the control device 130 is being pressed against the table 107. As shown in Figure 7I, the input (pressure) value indicator 777 indicates a current measurement 799 of the input (pressure) value associated with how hard the control device 130 is being pressed against the table 107. For example, the current measurement 799 in Figure 7I is greater than the measurement 779 in Figure 7G.

As shown in Figure 7J, during the instance 7100 (e.g., associated with time T₁₀) of the content delivery scenario, the electronic device 120 displays a mark 7102A on the XR substrate 718 within the XR environment 128 and a mark 7102B on the input region 774 in response to detecting the marking input 792 in Figure 7I. For example, the shape, depth, length, angle, etc. of the marks 7102A and 7102B corresponds to the spatial parameters of the marking input 792 in Figure 7I (e.g., positional values, rotational values, displacement, spatial acceleration, spatial velocity, angular acceleration, angular velocity, etc. associated with the marking input). Furthermore, in Figure 7J, the marks 7102A and 7102B are associated with a second thickness value, which corresponds to the current measurement 799 of the input (pressure) value in Figures 7I. For example, the second thickness value associated with the marks 7102A and 7102B is greater than the first thickness value associated with the marks 782A and 782B.

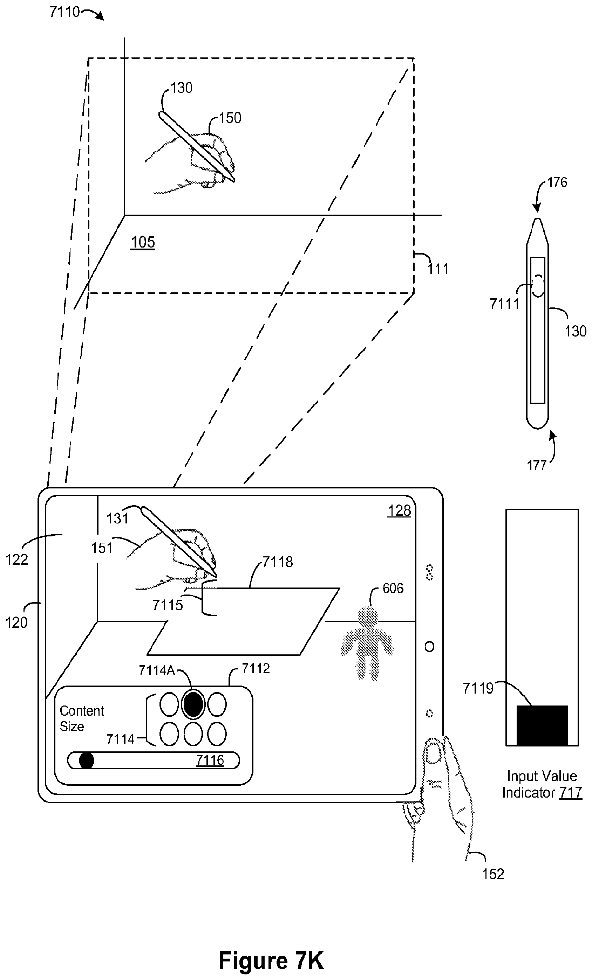

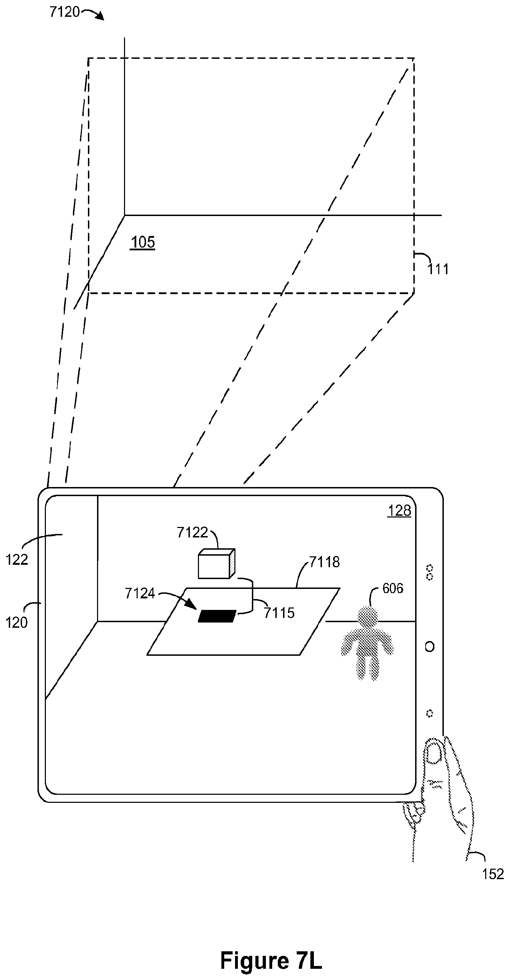

Figures 7K and 7L illustrate a sequence in which detection of a first content placement input causes first XR content to be displayed within the XR environment 128 according to the current measurement of the input (pressure) value. As shown in Figure 7K, during the instance 7110 (e.g., associated with time T₁₁) of the content delivery scenario, the electronic device 120 presents the XR environment 128 including the portion of the table 107, the VA 606, an XR substrate 7118 (e.g., a planar substrate), and a menu 7112. As shown in Figure 7K, the menu 7112 includes a plurality of selectable options 7114 associated with changing the appearance of XR content placed within the XR environment (e.g., different shapes, colors, textures, etc.). For example, option 7114A is currently selected among the plurality of selectable options 7114. In this example, the option 7114A corresponds to a first appearance for XR content placed within the XR environment 128. As shown in Figure 7A, the menu 7112 also includes a slider 7116 for adjusting the size of XR content placed within the XR environment 128.

As shown in Figure 7K, during the instance 7110 (e.g., associated with time T₁₁) of the content delivery scenario, the electronic device 120 detects a touch input 7111 directed to the touch-sensitive surface 175 of the control device 130 or obtains an indication of the touch input 7111 directed to the touch-sensitive surface 175 of the control device 130 while the representation 131 of the control device 130 is a distance 7115 above the XR substrate 7118. As one example, the touch input 7111 is detected by the touch-sensitive surface 175 of the control device 130. As another example, the touch input 7111 is detected by analyzing one or more images captured by an exterior-facing image sensor of the electronic device 120 with a computer vision technique. For example, the touch input 7111 corresponds to placing XR content (e.g., a cube) within the XR environment 128. One of ordinary skill in the art will appreciate that other XR content may similarly be placed within the XR environment 128.

While the touch input 7111 is detected, the electronic device 120 also detects an input (pressure) value or obtains an indication of the input (pressure) value associated with how hard the control device 130 is being grasped by the left hand 150 of the user 149. As shown in Figure 7K, the input (pressure) value indicator 717 indicates a current measurement 7119 of the input (pressure) value associated with how hard the control device 130 is being grasped by the user 149. According to some implementations, the input (pressure) value indicator 717 is an illustration to guide the reader that may or may not be displayed by the electronic device 120.

As shown in Figure 7L, during the instance 7120 (e.g., associated with time T₁₂) of the content delivery scenario, the electronic device 120 displays first XR content 7122 a distance 7115 above the XR substrate 7118 within the XR environment 128 in response to detecting the touch input 7111 in Figure 7K. As shown in Figure 7L, the electronic device 120 also displays a shadow 7124 on the XR substrate 7118 associated with the first XR content 7122. For example, the positional and rotational values of the first XR content 7122 and the shadow 7124 correspond to the parameters of the representation 131 of the control device 130 (e.g., positional values, rotational values, etc.) when the touch input 7111 was detected in Figure 7K. For example, the first XR content 7122 is associated with a first size value, which corresponds to the current measurement 7119 of the input (pressure) value in Figure 7K.

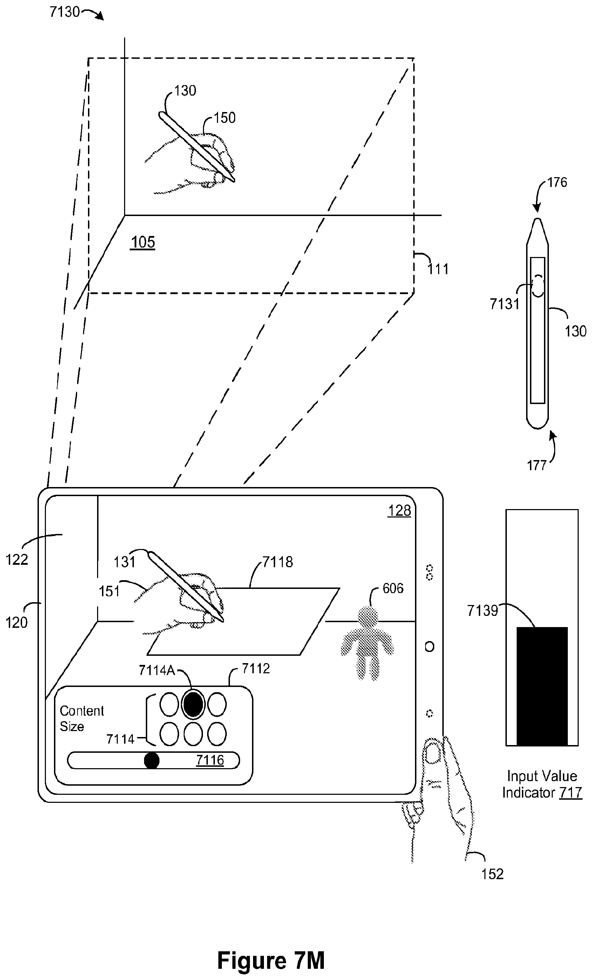

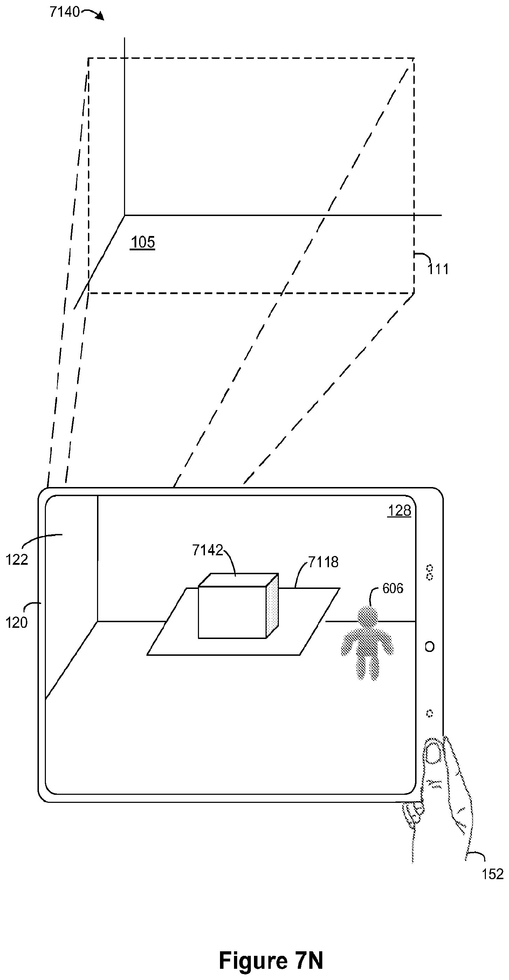

Figures 7M and 7N illustrate a sequence in which detection of a second content placement input causes second XR content to be displayed within the XR environment 128 according to the current measurement of the input (pressure) value. As shown in Figure 7M, during the instance 7130 (e.g., associated with time T₁₃) of the content delivery scenario, the electronic device 120 detects a touch input 7131 directed to the touch-sensitive surface 175 of the control device 130 or obtains an indication of the touch input 7131 directed to the touch-sensitive surface 175 of the control device 130 while the representation 131 of the control device 130 is in contact with the XR substrate 7118.

While the touch input 7131 is detected, the electronic device 120 also detects an input (pressure) value or obtains an indication of the input (pressure) value associated with how hard the control device 130 is being grasped by the left hand 150 of the user 149. As shown in Figure 7M, the input (pressure) value indicator 717 indicates a current measurement 7139 of the input (pressure) value associated with how hard the control device 130 is being grasped by the user 149. According to some implementations, the input (pressure) value indicator 717 is an illustration to guide the reader that may or may not be displayed by the electronic device 120.

As shown in Figure 7N, during the instance 7140 (e.g., associated with time T14) of the content delivery scenario, the electronic device 120 displays second XR content 7142 on the XR substrate 7118 within the XR environment 128 in response to detecting the touch input 7131 in Figure 7M. As shown in Figure 7N, the electronic device 120 does not display a shadow associated with the second XR content 7142 on the XR substrate 7118. For example, the positional and rotational values of the second XR content 7142 correspond to the parameters of the representation 131 of the control device 130 (e.g., positional values, rotational values, etc.) when the touch input 7131 was detected in Figure 7M. For example, the second XR content 7142 is associated with a second size value, which corresponds to the current measurement 7139 of the input (pressure) value in Figure 7K. For example, the second size value associated with the second XR content 7142 is greater than the first size value associated with the first XR content 7122.

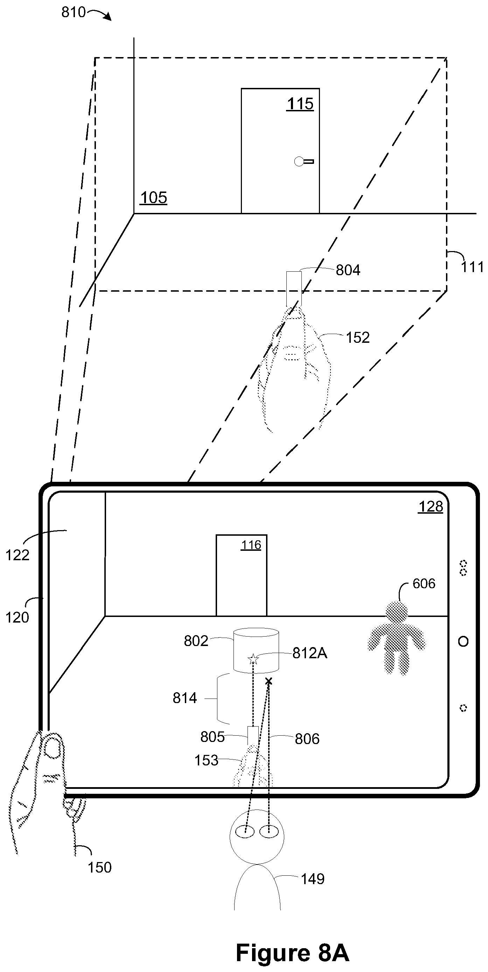

Figures 8A-8M illustrate a sequence of instances 810-8130 for a content delivery scenario in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, the sequence of instances 810-8130 are rendered and presented by a computing system such as the controller 110 shown in Figures 1 and 2; the electronic device 120 shown in Figures 1 and 3; and/or a suitable combination thereof.

As shown in Figures 8A-8M, the content delivery scenario includes a physical environment 105 and an XR environment 128 displayed on the display 122 of the electronic device 120 (e.g., associated with the user 149). The electronic device 120 presents the XR environment 128 to the user 149 while the user 149 is physically present within the physical environment 105 that includes a door 115, which is currently within the FOV 111 of an exterior-facing image sensor of the electronic device 120. As such, in some implementations, the user 149 holds the electronic device 120 in his/her left hand 150 or right hand 152.

In other words, in some implementations, the electronic device 120 is configured to present XR content and to enable optical see-through or video pass-through of at least a portion of the physical environment 105 on the display 122 (e.g., the door 115 or a representation thereof). For example, the electronic device 120 corresponds to a mobile phone, tablet, laptop, near-eye system, wearable computing device, or the like.

As shown in Figure 8A, during the instance 810 (e.g., associated with time T₁) of the content delivery scenario, the electronic device 120 presents the XR environment 128 including the representation 116 of the door 115 within the physical environment 105, a virtual agent (VA) 606, and XR content 802 (e.g., a cylinder). As shown in Figure 8A, the electronic device 120 also displays a gaze direction 806 associated with a focal point within the XR environment 128 of the eyes of the user 149 based on eye tracking. In some implementations, the gaze direction 806 is not displayed or visualized. As shown in Figure 8A, the electronic device 120 also displays a representation 153 of the right hand 152 of the user 149 gripping a representation 805 of a proxy object 804 (e.g., a stick, a ruler, or another physical object) within the XR environment 128. For example, the right hand 152 of the user 149 is currently gripping the proxy object 804 with a pointing grip pose.

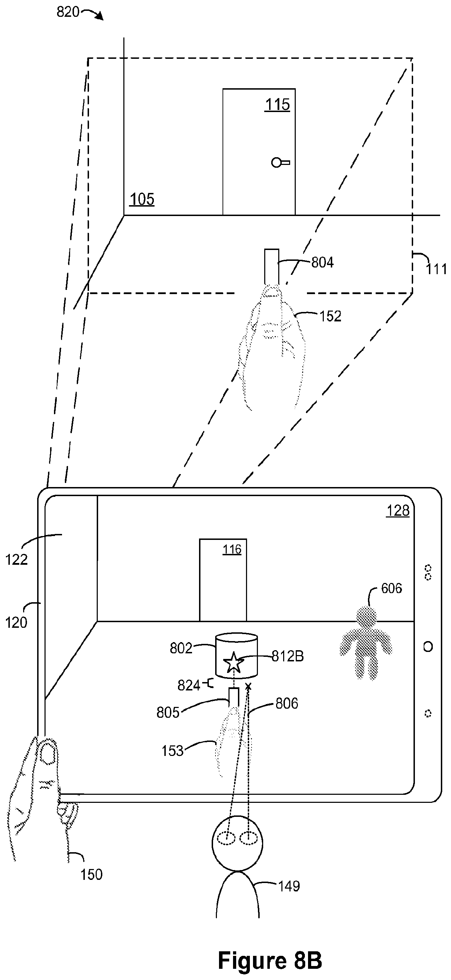

Figures 8A and 8B illustrate a sequence in which a size of an indicator element changes based on distance. As shown in Figure 8A, the representation 805 of the proxy object 804 is a first distance 814 from the XR content 802, and the electronic device 120 displays a first indicator element 812A with a first size on the XR content 802 that corresponds to a coincidence point between the XR content 802 and a ray emanating from a tip/end of the representation 805 of the proxy object 804. In some implementations, a size of the first indicator element 812A is a function of the first distance 814. For example, the size of the indicator element increases as the distance decreases, and the size of the indicator element decreases as the distance increases.

As shown in Figure 8B, during the instance 820 (e.g., associated with time T₂) of the content delivery scenario, the electronic device 120 displays a second indicator element 812B with a second size on the XR content 802 that corresponds to a coincidence point between the XR content 802 and a ray emanating from the tip/end of the representation 805 of the proxy object 804. As shown in Figure 8B, the representation 805 of the proxy object 804 is a second distance 824 from the XR content 802, which is less than the first distance 814 in Figure 8A. For example, the second size of the second indicator element 812B is greater than the first size of the first indicator element 812A.

Figures 8B-8D illustrate a sequence in which XR content is selected in response to detecting a proxy object being pointed at the XR content and the XR content is translated in response to translational movement of the proxy object. In some implementations, the electronic device 120 selects the XR content 802 and changes its appearance in response to detecting the proxy object 804 being pointed at the XR content 802 for at least a predetermined time period. In some implementations, the electronic device 120 selects the XR content 802 and changes its appearance in response to detecting the proxy object 804 being pointed at the XR content 802 for at least a deterministic time period.

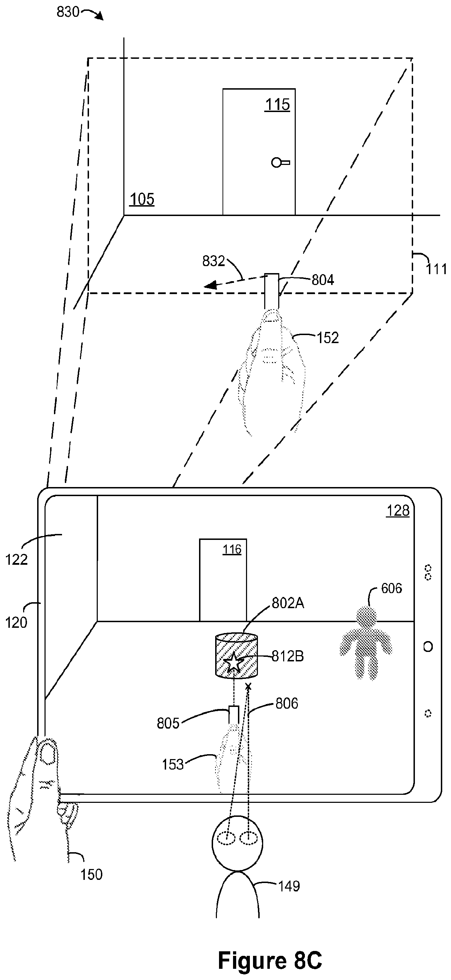

As shown in Figure 8C, during the instance 830 (e.g., associated with time T₃) of the content delivery scenario, the electronic device 120 changes the appearance of the XR content 802 to a cross-hatching appearance 802A to visually indicate its selection in response to detecting the proxy object 804 being pointed at the XR content 802 for at least a predetermined or deterministic time period in Figures 8A and 8B. As shown in Figure 8C, the electronic device 120 also detects translational movement 832 of the proxy object 804 while the XR content 802A is selected and the representation 805 of the proxy object 804 remains pointed at the XR content 802A.

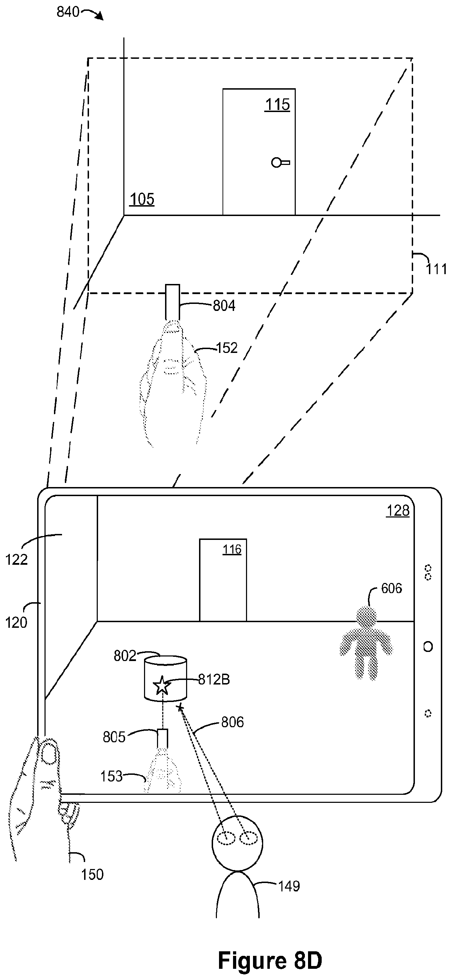

As shown in Figure 8D, during the instance 840 (e.g., associated with time T₄) of the content delivery scenario, the electronic device 120 translates the XR content 802 within the XR environment 128 in response to detecting the translational movement 832 of the proxy object 804 in Figure 8C. For example, the directionality and displacement of the translational movement of the XR content 802 within the XR environment 128 corresponds to the spatial parameters of the translational movement 832 in Figure 8C (e.g., change in positional values, change in rotational values, displacement, spatial acceleration, spatial velocity, angular acceleration, angular velocity, etc.). One of ordinary skill in the art will appreciate that the XR content 802 may be similarly rotated.

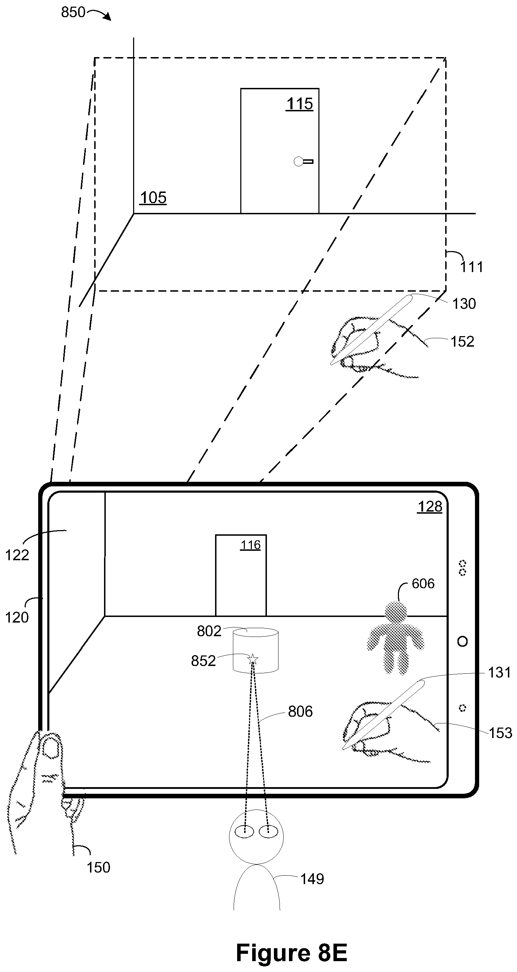

Figures 8E-8G illustrate a sequence in which XR content is selected in response to detecting a gaze direction directed to the XR content and the XR content is translated based on translational movement of the gaze direction. In some implementations, the electronic device 120 selects the XR content 802 and changes its appearance in response to detecting the gaze direction 806 being directed to the XR content 802 for at least a predetermined time period. In some implementations, the electronic device 120 selects the XR content 802 and changes its appearance in response to detecting the gaze direction 806 being directed to the XR content 802 for at least a deterministic time period.

As shown in Figure 8E, during the instance 850 (e.g., associated with time T₅) of the content delivery scenario, the electronic device 120 displays a gaze direction indicator element 852 on the XR content 802 associated with a focal point within the XR environment 128 of the eyes of the user 149 based on eye tracking. For example, the gaze direction indicator element 852 corresponds to a coincidence point between the XR content 802 and rays emanating from the eyes for the user 149. As shown in Figure 8E, the electronic device 120 also displays a representation 153 of the right hand 152 of the user 149 gripping a representation 131 of a control device 130 within the XR environment 128. For example, the right hand 152 of the user 149 is currently gripping the control device 130 with a writing grip pose that is not pointed at any XR content within the XR environment 128.

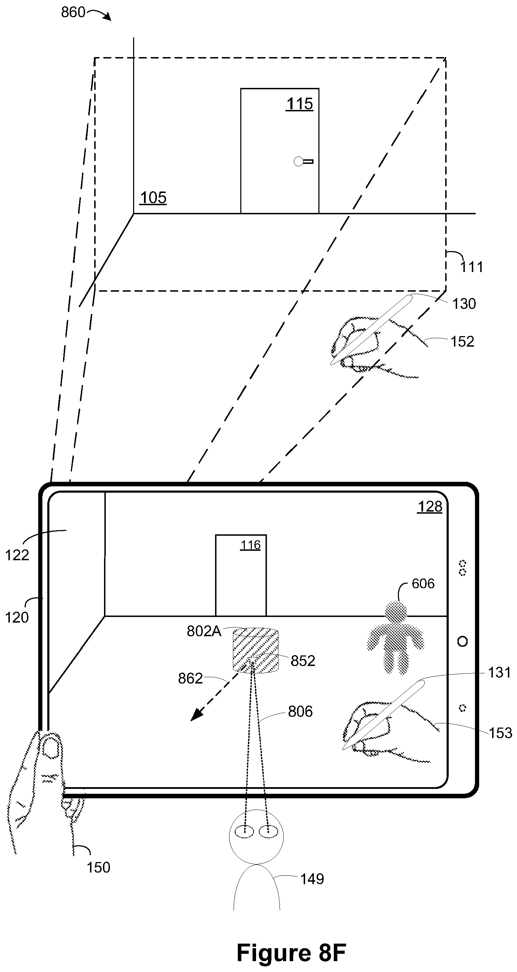

As shown in Figure 8F, during the instance 860 (e.g., associated with time T₆) of the content delivery scenario, the electronic device 120 changes the appearance of the XR content 802 to a cross-hatching appearance 802A to visually indicate its selection in response to detecting the gaze direction 806 being directed to the XR content 802 for at least a predetermined or deterministic time period in Figure 8E. As shown in Figure 8F, the electronic device 120 also detects translational movement 862 of the gaze direction 806 while the XR content 802A is selected.

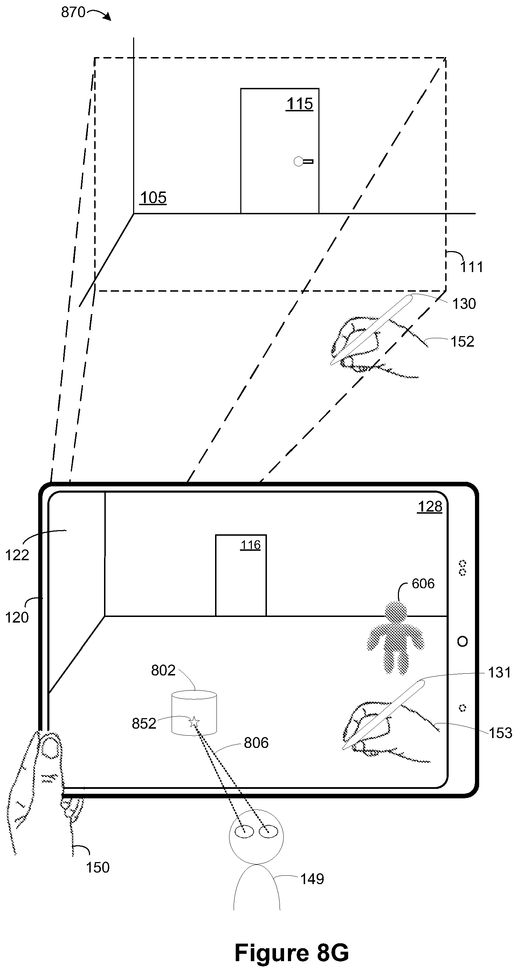

As shown in Figure 8G, during the instance 870 (e.g., associated with time T₇) of the content delivery scenario, the electronic device 120 translates the XR content 802 within the XR environment 128 in response to detecting the translational movement 862 of the gaze direction 806 in Figure 8F. For example, the directionality and displacement of the translational movement of the XR content 802 within the XR environment 128 corresponds to the spatial parameters of the translational movement 862 of the gaze direction 806 in Figure 8F (e.g., change in positional values, change in rotational values, displacement, spatial acceleration, spatial velocity, angular acceleration, angular velocity, etc.).

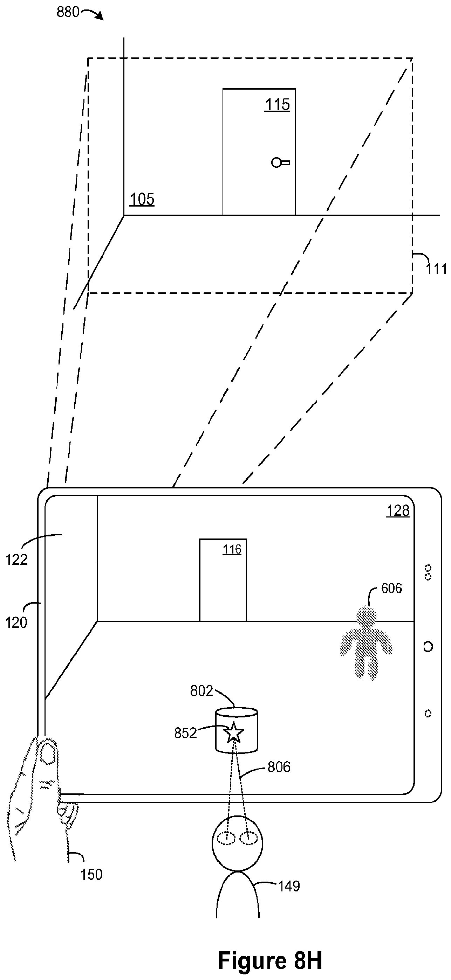

Figures 8H-8J illustrate another sequence in which XR content is selected in response to detecting a gaze direction directed to the XR content and the XR content is translated based on translational movement of the gaze direction. As shown in Figure 8H, during the instance 880 (e.g., associated with time T₈) of the content delivery scenario, the electronic device 120 displays a gaze direction indicator element 852 on the XR content 802 associated with a focal point within the XR environment 128 of the eyes of the user 149 based on eye tracking. For example, the gaze direction indicator element 852 corresponds to a coincidence point between the XR content 802 and rays emanating from the eyes for the user 149. As shown in Figure 8H, the electronic device 120 detects neither the proxy object 804 nor the control device 130 being held by the user 149.

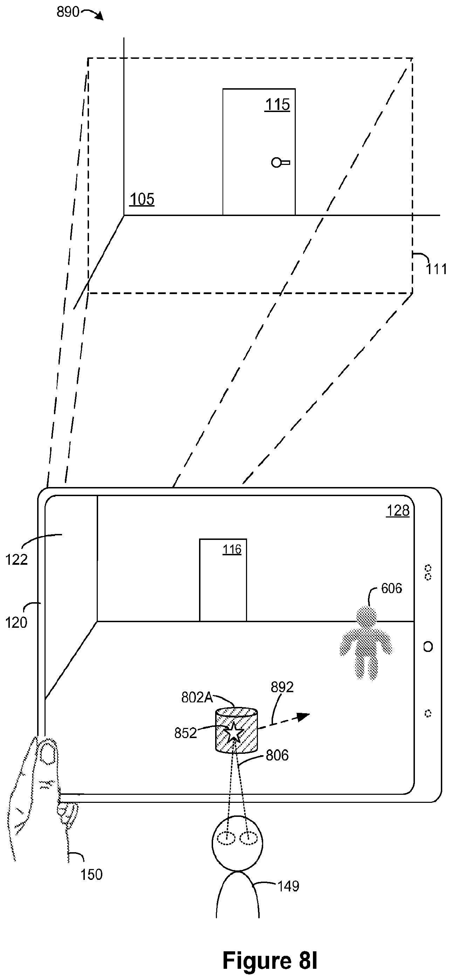

As shown in Figure 8I, during the instance 890 (e.g., associated with time T₉) of the content delivery scenario, the electronic device 120 changes the appearance of the XR content 802 to a cross-hatching appearance 802A to visually indicate its selection in response to detecting the gaze direction 806 being directed to the XR content 802 for at least a predetermined or deterministic time period in Figure 8H. As shown in Figure 8I, the electronic device 120 also detects translational movement 892 of the gaze direction 806 while the XR content 802A is selected.

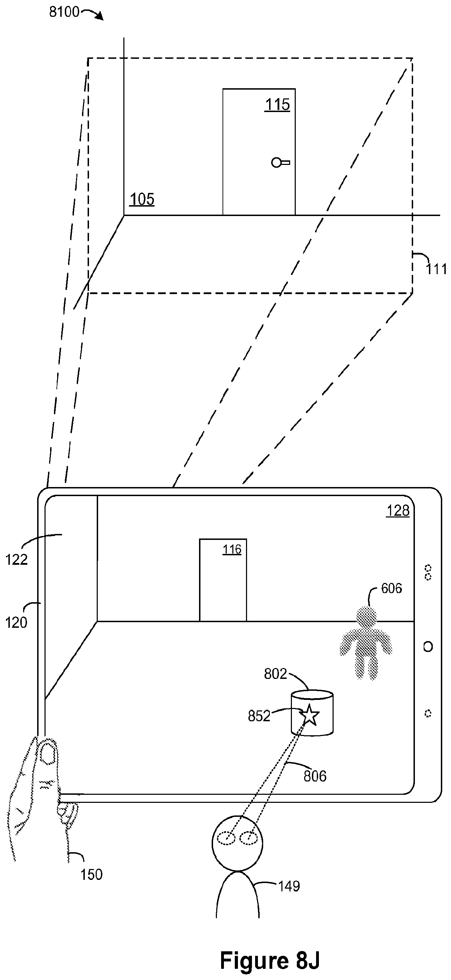

As shown in Figure 8J, during the instance 8100 (e.g., associated with time T₁₀) of the content delivery scenario, the electronic device 120 translates the XR content 802 within the XR environment 128 in response to detecting the translational movement 892 of the gaze direction 806 in Figure 8I. For example, the directionality and displacement of the translational movement of the XR content 802 within the XR environment 128 corresponds to the spatial parameters of the translational movement 892 of the gaze direction 806 in Figure 8I (e.g., change in positional values, change in rotational values, displacement, spatial acceleration, spatial velocity, angular acceleration, angular velocity, etc.).

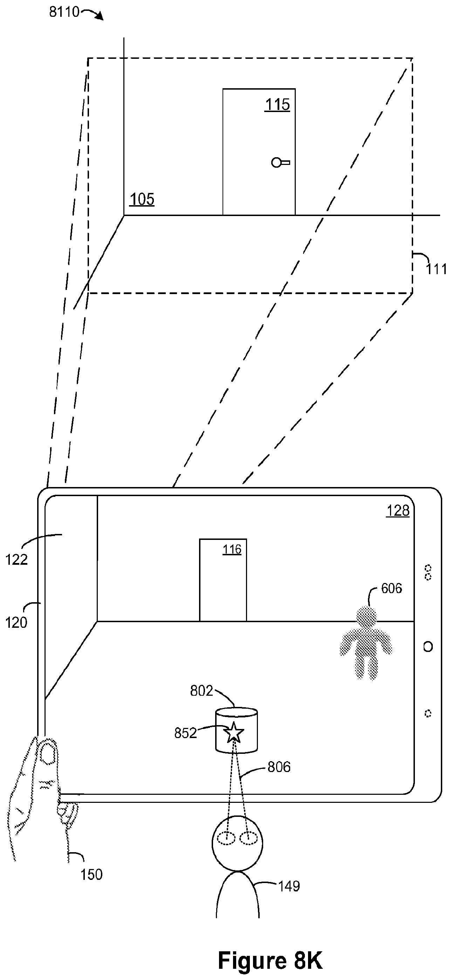

Figures 8K-8M illustrate a sequence in which XR content is selected in response to detecting a gaze direction directed to the XR content and the XR content is translated based on a hand/extremity tracking input. As shown in Figure 8K, during the instance 8110 (e.g., associated with time T₁₁) of the content delivery scenario, the electronic device 120 displays a gaze direction indicator element 852 on the XR content 802 associated with a focal point within the XR environment 128 of the eyes of the user 149 based on eye tracking. For example, the gaze direction indicator element 852 corresponds to a coincidence point between the XR content 802 and rays emanating from the eyes for the user 149. As shown in Figure 8K, the electronic device 120 detects neither the proxy object 804 nor the control device 130 being held by the user 149.

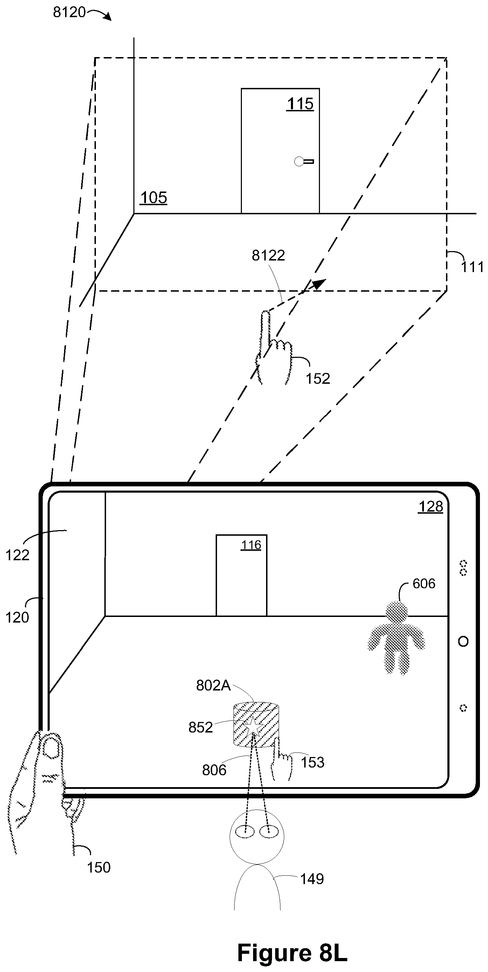

As shown in Figure 8L, during the instance 8120 (e.g., associated with time T₁₂) of the content delivery scenario, the electronic device 120 changes the appearance of the XR content 802 to a cross-hatching appearance 802A to visually indicate its selection in response to detecting the gaze direction 806 being directed to the XR content 802 for at least a predetermined or deterministic time period in Figure 8K. As shown in Figure 8L, the electronic device 120 displays a representation 153 of the right hand 152 of the user 149 nearby the XR content 802A, which is detected and tracked using hand/extremity tracking. As shown in Figure 8L, the electronic device 120 also detects translational movement 8122 of the right hand 152 of the user 149.

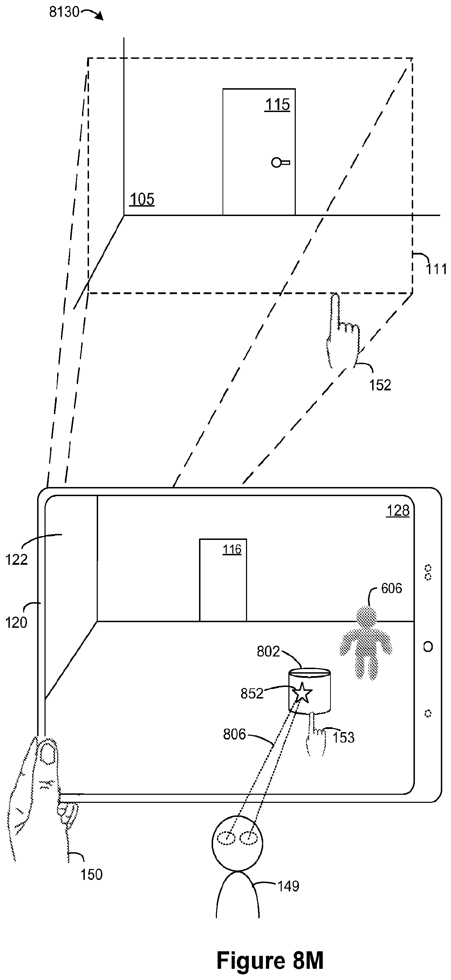

As shown in Figure 8M, during the instance 8130 (e.g., associated with time T₁₃) of the content delivery scenario, the electronic device 120 translates the XR content 802 within the XR environment 128 in response to detecting the translational movement 8122 in Figure 8L. For example, the directionality and displacement of the translational movement of the XR content 802 within the XR environment 128 corresponds to the spatial parameters of the translational movement 8122 in Figure 8L (e.g., change in positional values, change in rotational values, displacement, spatial acceleration, spatial velocity, angular acceleration, angular velocity, etc.). One of ordinary skill in the art will appreciate that other XR content may be similarly rotated.

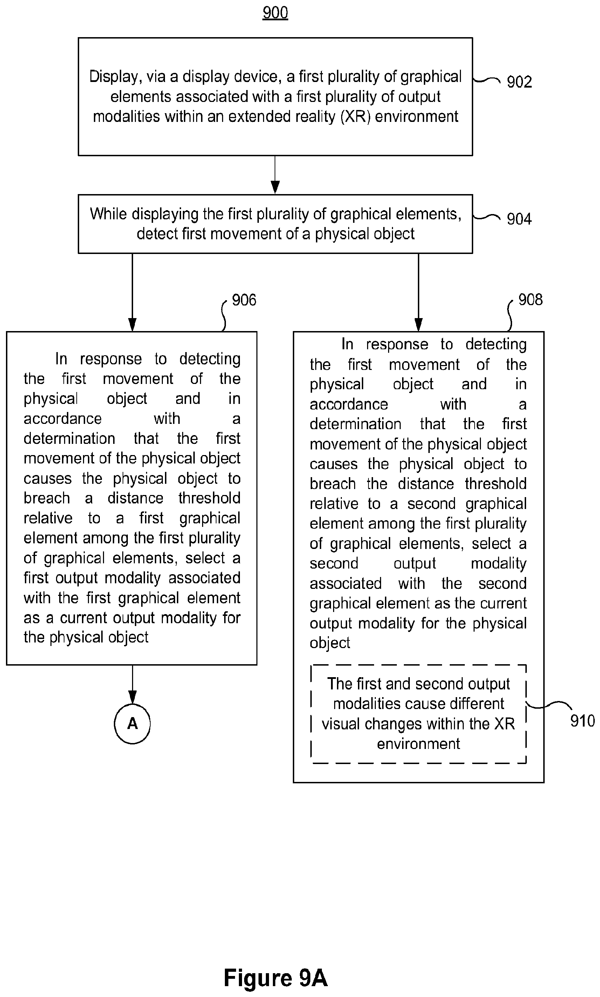

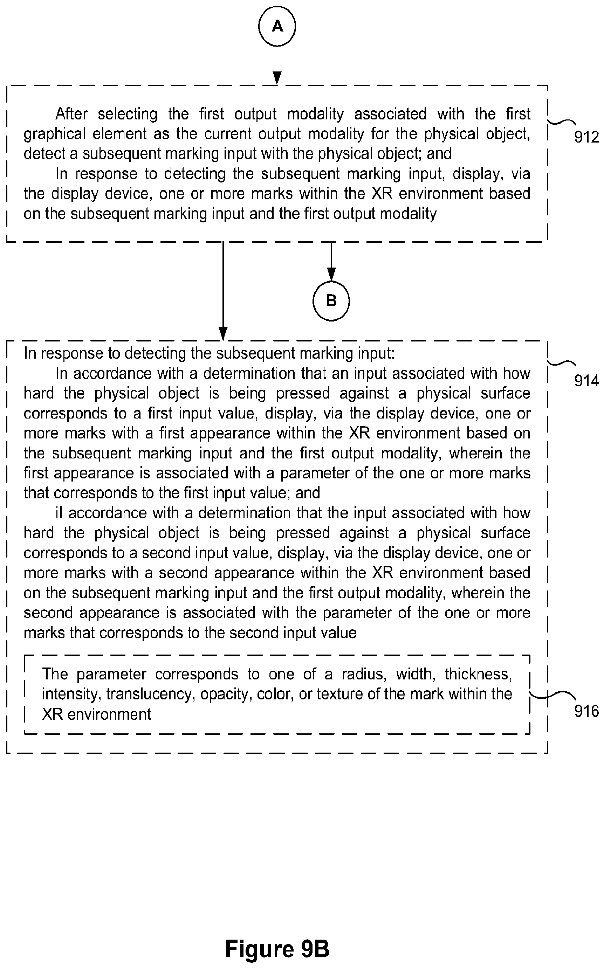

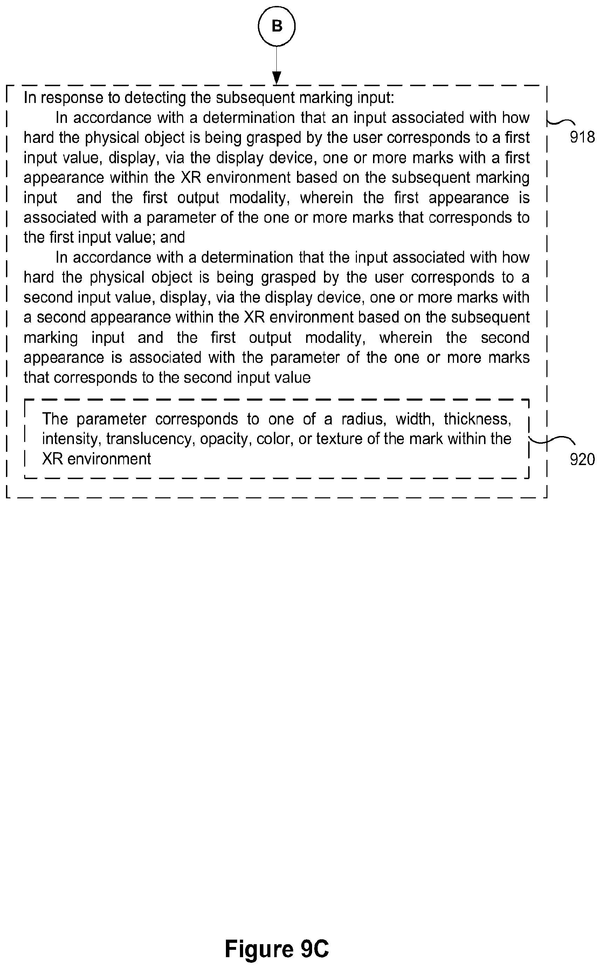

Figures 9A-9C illustrate a flowchart representation of a method 900 of selecting an output modality for a physical object when interacting with or manipulating an XR environment in accordance with some implementations. In various implementations, the method 900 is performed at a computing system including non-transitory memory and one or more processors, wherein the computing system is communicatively coupled to a display device and one or more input devices (e.g., the electronic device 120 shown in Figures 1 and 3; the controller 110 in Figures 1 and 2; or a suitable combination thereof). In some implementations, the method 900 is performed by processing logic, including hardware, firmware, software, or a combination thereof. In some implementations, the method 900 is performed by a processor executing code stored in a non-transitory computer-readable medium (e.g., a memory). In some implementations, the computing system corresponds to one of a tablet, a laptop, a mobile phone, a near-eye system, a wearable computing device, or the like.

Typically, a user switches between marking tools by selecting a new tool from a toolbar or menu. This may interrupt the user's current workflow and may also induce the user to hunt for the new tool within various menus. In contrast, the method described herein enables a user to invoke display of a tool set by swiping on a physical object (e.g., a proxy object, such as a pencil, or an electronic device, such as a stylus) and moving the physical object towards a graphical representation of one of the tools in the tool set. As such, the user is able to switch between tools without interrupting their workflow.

As represented by block 902, the method 900 includes displaying, via the display device, a first plurality of graphical elements associated with a first plurality of output modalities within an extended reality (XR) environment. In some implementations, an output modality causes changes within the UI or XR environment such as adding, removing, or otherwise modifying pixels within the UI or XR environment. For example, the first plurality of graphical elements corresponds to different tool types for creating, modifying, etc. marks within the XR environment such as a pencil, a marker, a paint brush, an eraser, etc.

As one example, the electronic device 120 displays graphical elements 632A, 632B, 632C, and 632D (sometimes collectively referred to herein as a first plurality of graphical elements 632) in Figure 6C. In this example, the graphical element 632A corresponds to an output modality associated with generating pencil-like marks within the XR environment 128, the graphical element 632B corresponds to an output modality associated with generating pen-like marks within the XR environment 128, the graphical element 632C corresponds to an output modality associated with generating marker-like marks within the XR environment 128, and the graphical element 632D corresponds to an output modality associated with generating airbrush-like marks within the XR environment 128. As another example, the electronic device 120 displays graphical elements 6152A, 6152B, 6152C, and 6152D (sometimes collectively referred to herein as a second plurality of graphical elements 6152) in Figure 6O. In this example, the graphical element 6152A corresponds to an output modality associated with generating pencil-like marks within the XR environment 128, the graphical element 6152B corresponds to an output modality associated with generating pen-like marks within the XR environment 128, the graphical element 6152C corresponds to an output modality associated with generating narrow brush-like marks within the XR environment 128, and the graphical element 6152D corresponds to an output modality associated with generating wide brush-like marks within the XR environment 128.

In some implementations, the display device corresponds to a transparent lens assembly, and wherein the presentation of the XR environment is projected onto the transparent lens assembly. In some implementations, the display device corresponds to a near-eye system, and wherein presenting the XR environment includes compositing the presentation of the XR environment with one or more images of a physical environment captured by an exterior-facing image sensor.

In some implementations, the method 900 includes: prior to displaying the first plurality of graphical elements, obtaining (e.g., receiving, retrieving, or detecting) an indication of a touch input directed to the physical object, and wherein displaying the first plurality of graphical elements within the XR environment includes displaying the first plurality of graphical elements within the XR environment in response to obtaining the indication of the touch input. In some implementations, the physical object corresponds to a stylus with a touch-sensitive region capable of detecting touch inputs. For example, the stylus detects an upward or downward swipe gesture on its touch-sensitive surface, and the computing system obtains (e.g., receives or retrieves) an indication of the touch input from the stylus. For example, Figures 6B and 6C illustrate a sequence in which the electronic device 120 displays the first plurality of graphical elements 632 associated with a first plurality of output modalities within the XR environment 128 in Figure 6C in response to detecting a touch input 622 directed to the control device 130 in Figure 6B.

In some implementations, the method 900 includes: prior to displaying the first plurality of graphical elements, obtaining (e.g., receiving, retrieving, or determining) a grip pose associated with a current manner in which the physical object is being held by a user, wherein the first plurality of graphical elements is a function of the grip pose; and in response to obtaining the grip pose: in accordance with a determination that the grip pose corresponds to a first grip pose, displaying, via the display device, the first plurality of graphical elements associated with the first plurality of output modalities within the XR environment; and in accordance with a determination that the grip pose corresponds to a second grip pose different from the first grip pose, displaying, via the display device, a second plurality of graphical elements associated with a second plurality of output modalities within the XR environment. For example, a pointing/wand grip corresponds to the first plurality of graphical elements associated with the first plurality of tools, and a writing grip corresponds to a second plurality of graphical elements associated with a second plurality of tools. In some implementations, the first and second pluralities of output modalities include at least one overlapping output modality. In some implementations, the first and second pluralities of output modalities include mutually exclusive output modalities.

As one example, with reference to Figure 6C, the electronic device 120 displays graphical elements 632 within the XR environment 128 in accordance with a determination that the current grip pose corresponds to a pointing grip pose. As another example, with reference to Figure 6O, the electronic device 120 displays graphical elements 6152 within the XR environment 128 in accordance with a determination that the current grip pose corresponds to a writing grip pose with a first end 176 pointed downward and a second end 177 pointed upward. As yet another example, with reference to Figure 6P, the electronic device 120 displays graphical elements 6162 within the XR environment 128 in accordance with a determination that the current grip pose corresponds to an inverse writing grip pose with the first end 176 pointed upward and the second end 177 pointed downward.

In some implementations, the method 900 includes: after displaying the first plurality of graphical elements associated with the first plurality of output modalities within the XR environment, detecting a change in the grip pose from the first grip pose to the second grip pose; and in response to detecting the change in the grip pose, replacing display of the first plurality of graphical elements within the XR environment with the second plurality of graphical elements associated with the second plurality of output modalities within the XR environment. In some implementations, the computing system also ceases to display the first plurality of graphical elements. For example, a pointing/wand grip corresponds to the first plurality of graphical elements associated with the first plurality of output modalities, and a writing grip corresponds to a second plurality of graphical elements associated with a second plurality of output modalities. In some implementations, the first and second pluralities of graphical elements include at least some overlapping output modalities. In some implementations, the first and second pluralities of graphical elements include mutually exclusive output modalities. For example, Figures 6O and 6P illustrate a sequence in which the electronic device 120 replaces the plurality of graphical elements 6152 with the plurality of graphical elements 6162 in response to detecting a change in the current grip pose of the control device 130 (e.g., from the writing grip pose in Figure 6O to the inverse writing grip pose in Figure 6P).

In some implementations, the method 900 includes: prior to displaying the first plurality of graphical elements, obtaining (e.g., receiving, retrieving, or determining) information indicating whether a first end or a second end of the physical object is facing outward (e.g., outward relative to a surface, the user, the computing system, etc.); and in response to obtaining the information indicating whether the first end or the second end of the physical object is facing outward: in accordance with a determination that the first end of the physical object is facing outward, displaying, via the display device, the first plurality of graphical elements associated with the first plurality of output modalities within the XR environment; and in accordance with a determination that the second end of the physical object is facing outward, displaying, via the display device, a second plurality of graphical elements associated with a second plurality of output modalities within the XR environment. For example, a first end facing outwards corresponds to the first plurality of graphical elements associated with the first plurality of output modalities (e.g., sketching and writing tools), and a second end facing outwards corresponds to a second plurality of graphical elements associated with a second plurality of output modalities (e.g., erasing or editing tools). In some implementations, the first and second pluralities of output modalities include at least one overlapping output modality. In some implementations, the first and second pluralities of output modalities include mutually exclusive output modalities.

As another example, with reference to Figure 6O, the electronic device 120 displays graphical elements 6152 within the XR environment 128 in accordance with a determination that the current grip pose corresponds to a writing grip pose with a first end 176 pointed downward and a second end 177 pointed upward. As yet another example, with reference to Figure 6P, the electronic device 120 displays graphical elements 6162 within the XR environment 128 in accordance with a determination that the current grip pose corresponds to an inverse writing grip pose with the first end 176 pointed upward and the second end 177 pointed downward.

In some implementations, the method 900 includes: after displaying the first plurality of graphical elements associated with the first plurality of output modalities within the XR environment, detecting a change from a first end of the physical object facing outward to a second end of the physical object facing outward; and in response to detecting the change from the first end of the physical object facing outward to the second end of the physical object facing outward, displaying, via the display device, the second plurality of graphical elements associated with the second plurality of output modalities within the XR environment. In some implementations, the computing system also ceases to display the first plurality of graphical elements. For example, a first end facing outwards corresponds to the first plurality of graphical elements associated with the first plurality output modalities tools (e.g., sketching and writing tools), and a second end facing outwards corresponds to a second plurality of graphical elements associated with a second plurality of output modalities (e.g., erasing or editing tools). For example, Figures 6O and 6P illustrate a sequence in which the electronic device 120 replaces display of the plurality of graphical elements 6152 with the plurality of graphical elements 6162 in response to detecting a change in the current grip pose of the control device 130 (e.g., from the writing grip pose in Figure 6O to the inverse writing grip pose in Figure 6P).

As represented by block 904, the method 900 includes detecting first movement of a physical object while displaying the first plurality of graphical elements. In some implementations, the computing system obtains (e.g., receives, retrieves, or determines) translational and rotational values for the physical object, wherein detecting the first movement corresponds to detecting a change to one of the translational or rotational values for the physical object. For example, the computing system tracks the physical object via computer vision, magnetic sensors, positional information, and/or the like. As one example, the physical object corresponds to a proxy object, such as a pencil, a pen, etc., without a communication channel to the computing system. As another example, the physical object corresponds to an electronic device, such as a stylus, finger-wearable device, or the like, with a wired or wireless communication channel to the computing system that includes an IMU, accelerometer, gyroscope, magnetometer, and/or the like for six degrees of freedom (6DOF) tracking.

In some implementations, the computing system maintains one or more N-tuple tracking vectors/tensors for the physical object (e.g., the object tracking vector 511 in Figures 5A and 5B) based on tracking data 506. In some implementations, the one or more N-tuple tracking vectors/tensors for the physical object (e.g., the object tracking vector 511 in Figures 5A and 5B) include translational values (e.g., x, y, and z) for the physical object relative to the world at large or the current operating environment, rotational values (e.g., roll, pitch, and yaw) for the physical object, a grip pose indication (e.g., pointing, writing, erasing, painting, dictating, etc.) for the physical object, a currently used tip/end indication (e.g., the physical object may have an asymmetrical design with specific first and second tips or a symmetrical design with non-specific first and second tips), a first input (pressure) value associated with how hard the physical object is being pressed against a physical surface, a second input (pressure) value associated with how hard the physical object is being grasped by the user, touch input information, and/or the like.

In some implementations, the tracking data 506 corresponds to one or more images of the physical environment that include the physical object to enable 6DOF tracking of the physical object via computer vision techniques. In some implementations, the tracking data 506 corresponds to data collected by various integrated sensors of the physical object such as an IMU, accelerometer, gyroscope, magnetometer, etc. For example, the tracking data 506 corresponds to raw sensor data or processed data such as translational values associated with the physical object (relative to the physical environment or the world at large), rotational values associated with the physical object (relative to gravity), a velocity value associated with the physical object, an angular velocity value associated with the physical object, an acceleration value associated with the physical object, an angular acceleration value associated with the physical object, a first input (pressure) value associated with how hard the physical object is contacting a physical surface, a second input (pressure) value associated with how hard the physical object is being grasped by the user, and/or the like.

In some implementations, the computing system also obtains finger manipulation data detected by the physical object via a communication interface. For example, the finger manipulation data includes touch inputs or gestures directed to a touch-sensitive region of the physical object and/or the like. For example, the finger manipulation data includes contact intensity data relative to the body of the physical object. In some implementations, the physical object includes a touch-sensitive surface/region configured to detect touch inputs directed thereto such as a longitudinally extending touch-sensitive surface. In some implementations, the translational and rotational values for the physical object includes determining translational and rotational values for the physical object based on at least one of IMU data from the physical object, one or more images of a physical environment 105 that include the physical object, magnetic tracking data, and/or the like.

In some implementations, the computing system further includes a communication interface provided to communicate with the physical object, and wherein obtaining the tracking data 506 associated with the physical object includes obtaining the tracking data 506 from the physical object, wherein the tracking data corresponds to output data from one or more integrated sensors of the physical object. Figures 6C-6P illustrate a user 149 grasping a control device 130 that communicates with the electronic device 120 and is used to interact with the XR environment 128. For example, the one or more integrated sensors includes at least one of an IMU, an accelerometer, a gyroscope, a GPS, a magnetometer, one or more contact intensity sensors, a touch-sensitive surface, and/or the like. In some implementations, the tracking data 506 further indicates whether or not the tip of the physical object contacts a physical surface and a pressure value associated therewith.

In some implementations, the method 900 includes: obtaining one or more images of a physical environment; recognizing the physical object with the one or more images of the physical environment; and assigning the physical object (e.g., a proxy object) to act as a focus selector when interacting with the XR environment 128. Figures 8A-8D illustrate a user 149 grasping a proxy object 804 (e.g., a ruler, a stick, or the like) that is incapable of communicating with the electronic device 120 and is used to interact with the XR environment 128. In some implementations, the computing system designates the physical object as the focus selector when the physical object is grasped by the user. In some implementations, the computing system designates the physical object as the focus selector when the physical object is grasped by the user and the physical object satisfies predefined constraints (e.g., a maximum or minimum size, a particular shape, digital rights management (DRM) disqualifiers, etc.). As such, in some implementations, the user 149 may use household objects to interact with the XR environment. In some implementations, the pose and grip indicators may be anchored to the proxy object (or a representation thereof) as the proxy object moves and/or the FOV moves.

As represented by block 906, in response to detecting the first movement of the physical object and in accordance with a determination that the first movement of the physical object causes the physical object (e.g., a predetermined portion of the physical object such as a tip of the physical object) to breach a distance threshold relative to a first graphical element among the first plurality of graphical elements, the method 900 includes selecting a first output modality associated with the first graphical element as a current output modality for the physical object. In some implementations, the distance threshold is non-deterministic (i.e., a predetermined X mm radius) or deterministic based on one or more factors such as user preferences, tool usage history, depth of graphical elements relative to the scene, occlusions, current content, current context, etc.

According to some implementations, the computing system or a component thereof (e.g., the output modality selector 526 in Figure 5A) selects a first output modality associated as a current output modality 527 for the physical object in accordance with a determination that the first movement of the physical object causes the physical object to breach a distance threshold relative to a first graphical element among the first plurality of graphical elements. As one example, Figures 6D and 6E illustrate a sequence in which the electronic device 120 selects a first output modality (e.g., airbrush marking) for the control device 130 in accordance with a determination that a movement of the control device 130 causes the control device 130 (or the representation thereof) to breach the activation region 634 (e.g., the distance threshold) relative to the graphical element 632D.

In some implementations, in accordance with a determination that the first movement of the physical object causes the physical object to breach the distance threshold relative to the first graphical element among the first plurality of graphical elements, the method 900 includes: maintaining display of the first graphical element adj acent to the physical object; and ceasing display of a remainder of the first plurality of graphical elements that does not include the first graphical element. As one example, with reference to Figures 6D and 6E, the electronic device 120 maintains display of the first graphical element (e.g., the graphical element 632D) among the first plurality of graphical elements (e.g., the graphical elements 632) overlaid on a tip of the representation 131 of the control device 130 within the XR environment 128 and removes display of the remainder of the first plurality of graphical elements (e.g., the graphical elements 632A, 632B, and 632C) from the XR environment 128.

In some implementations, the method 900 includes: after selecting the first output modality associated with the first graphical element as the current output modality for the physical object, detecting second movement of the physical object; and in response to detecting second movement of the physical object, moving the first graphical element based on the second movement of the physical object in order to maintain display of the first graphical element adjacent to the physical object. In some implementations, the first graphical element is anchored to the outward facing end/tip of the physical object. In some implementations, the first graphical element is presented offset from or to the side of the outward facing end/tip of the physical object. In some implementations, the first graphical element "snaps" to a representation of the physical object. As one example, with reference to Figures 6E and 6F, the electronic device 120 maintains display of the graphical element 632D overlaid on the tip of the representation 131 of the control device 130 within the XR environment 128 after detecting movement of the control device to perform the marking input 654.

In some implementations, the method 900 includes: after ceasing display of the remainder of the first plurality of graphical elements, obtaining (e.g., receiving, retrieving, or detecting) an indication of a touch input directed to the physical object; and in response to obtaining the indication of the touch input, redisplaying, via the display device the first plurality of graphical elements within the XR environment. In some implementations, the physical object corresponds to a stylus with a touch-sensitive region capable of detecting touch inputs. For example, the stylus detects an upward or downward swipe gesture on its touch-sensitive surface, and the computing system obtains (e.g., receives or retrieves) an indication of the touch input from the stylus. As one example, with reference to Figures 6N and 6O, the electronic device 120 displays a second plurality of graphical elements 6152 associated with a second plurality of output modalities within the XR environment 128 in response to detecting a touch input 6142 directed to the control device 130.

As represented by block 908, in response to detecting the first movement of the physical object and in accordance with a determination that the first movement of the physical object causes the physical object to breach the distance threshold relative to a second graphical element among the first plurality of graphical elements, the method 900 includes selecting a second output modality associated with the second graphical element as the current output modality for the physical object.

According to some implementations, the computing system or a component thereof (e.g., the output modality selector 526 in Figure 5A) selects a second output modality associated as a current output modality 527 for the physical object in accordance with a determination that the first movement of the physical object causes the physical object to breach a distance threshold relative to a second graphical element among the first plurality of graphical elements. As one example, Figures 6G-6I illustrate a sequence in which the electronic device 120 selects a second output modality (e.g., pen marking) for the control device 130 in accordance with a determination that a movement of the control device 130 causes the control device 130 (or the representation thereof) to breach the activation region 634 (e.g., the distance threshold) relative to the graphical element 632B.

In some implementations, in accordance with the determination that the first movement of the physical object causes the physical object to breach the distance threshold relative to the second graphical element among the first plurality of graphical elements, the method 900 includes: maintaining display of the second graphical element adjacent to the physical object; and ceasing display of a remainder of the first plurality of graphical elements that does not include the second graphical element. As one example, with reference to Figures 6H and 6I, the electronic device 120 maintains display of the second graphical element (e.g., the graphical element 632B) among the first plurality of graphical elements (e.g., the graphical elements 632) overlaid on a tip of the representation 131 of the control device 130 within the XR environment 128 and removes display of the remainder of the first plurality of graphical elements (e.g., the graphical elements 632A, 632C, and 632D) from the XR environment 128.

In some implementations, as represented by block 910, the first and second output modalities cause different visual changes within the XR environment. For example, the first output modality is associated with selecting/manipulating object/content within the XR environment, and the second output modality is associated with sketching, drawing, writing, etc. within the XR environment. As one example, with reference to Figure 6F, the electronic device 120 displays an airbrush-like mark 662 within the XR environment 128 in response to detecting the marking input 654 in Figure 6E while the current output modality corresponds to the graphical element 632D. As another example, with reference to Figure 6J, the electronic device 120 displays a pen-like mark 6112 within the XR environment 128 in response to detecting the marking input 6104 in Figure 6J while the current output modality corresponds to the graphical element 632B.

In some implementations, in accordance with a determination that the first movement of the physical object does not cause the physical object to breach the distance threshold relative to the first graphical element or the second graphical element, the method 900 includes: maintaining an initial output modality as the current output modality for the physical object; and maintaining display of the first plurality of graphical elements. As one example, with reference to Figure 6C, the electronic device 120 maintains the initial output modality as the current output modality for the control device 130 while the representation 131 of the control device 130 is outside of the activation region 634. As another example, with reference to Figure 6G, the electronic device 120 maintains the initial output modality as the current output modality for the control device 130 while the representation 131 of the control device 130 is outside of the activation region 634.

In some implementations, as represented by block 912, the method 900 includes: after selecting the first output modality associated with the first graphical element as the current output modality for the physical object, detecting a subsequent marking input with the physical object; and in response to detecting the subsequent marking input, displaying, via the display device, one or more marks within the XR environment based on the subsequent marking input (e.g., the shape, displacement, etc. of the subsequent marking input) and the first output modality. According to some implementations, the computing system detects the subsequent marking input with the physical object by tracking the physical object in 3D with IMU data, computer vision, magnetic tracking, and/or the like. In some implementations, the one or more marks corresponds to XR content displayed within the XR environment 128 such as a sketch, handwritten text, a doodle, or the like. As one example, with reference to Figure 6F, the electronic device 120 displays an airbrush-like mark 662 within the XR environment 128 in response to detecting the marking input 654 in Figure 6E while the current output modality corresponds to the graphical element 632D. For example, the shape, depth, length, angle, etc. of the airbrush-like mark 662 corresponds to the spatial parameters of the marking input 654 (e.g., positional values, rotational values, displacement, spatial acceleration, spatial velocity, angular acceleration, angular velocity, etc. associated with the marking input).

In some implementations, as represented by block 914, in response to detecting the subsequent marking input, the method 900 includes: in accordance with a determination that an input associated with how hard the physical object is being pressed against a physical surface corresponds to a first input value, displaying, via the display device, one or more marks with a first appearance within the XR environment based on the subsequent marking input (e.g., the shape, displacement, etc. of the subsequent marking input) and the first output modality, wherein the first appearance is associated with a parameter of the one or more marks that corresponds to the first input value; and in accordance with a determination that the input associated with how hard the physical object is being pressed against a physical surface corresponds to a second input value, displaying, via the display device, one or more marks with a second appearance within the XR environment based on the subsequent marking input (e.g., the shape, displacement, etc. of the subsequent marking input) and the first output modality, wherein the second appearance is associated with the parameter of the one or more marks that corresponds to the second input value.

In some implementations, the one or more marks correspond to XR content displayed within the XR environment 128 such as a sketch, handwritten text, a doodle, or the like. In some implementations, the computing system obtains (e.g., receives, retrieves, or determines) the first and second input (pressure) values based on locally or remotely collected data. As one example, the physical object corresponds to an electronic device with pressure sensors in one or both of its ends/tips to detect an input (pressure) value when pressed against the physical surface. In some implementations, as represented by block 916, the parameter corresponds to one of a radius, width, thickness, intensity, translucency, opacity, color, or texture of the one or more marks within the XR environment.

In one example, with reference to Figure 7H, the electronic device 120 displays a mark 782A on the XR substrate 718 within the XR environment 128 and a mark 782B on the input region 774 in response to detecting the marking input 715 in Figure 7G. For example, the shape, depth, length, angle, etc. of the marks 782A and 782B corresponds to the spatial parameters of the marking input 772 in Figure 7G (e.g., positional values, rotational values, displacement, spatial acceleration, spatial velocity, angular acceleration, angular velocity, etc. associated with the marking input). Furthermore, in Figure 7H, the marks 782A and 782B are associated with a first thickness value, which corresponds to the current measurement 779 of the input (pressure) value in Figure 7G.

In another example, with reference to Figure 7J, the electronic device 120 displays a mark 7102A on the XR substrate 718 within the XR environment 128 and a mark 7102B on the input region 774 in response to detecting the marking input 792 in Figure 7I. For example, the shape, depth, length, angle, etc. of the marks 7102A and 7102B corresponds to the spatial parameters of the marking input 792 in Figure 7I (e.g., positional values, rotational values, displacement, spatial acceleration, spatial velocity, angular acceleration, angular velocity, etc. associated with the marking input). Furthermore, in Figure 7J, the marks 7102A and 7102B are associated with a second thickness value, which corresponds to the current measurement 799 of the input (pressure) value in Figures 7I. For example, the second thickness value associated with the marks 7102A and 7102B is greater than the first thickness value associated with the marks 782A and 782B.

In some implementations, as represented by block 918, in response to detecting the subsequent marking input, the method 900 includes: in accordance with a determination that an input associated with how hard the physical object is being grasped by the user corresponds to a first input value, displaying, via the display device, one or more marks with a first appearance within the XR environment based on the subsequent marking input (e.g., the shape, displacement, etc. of the subsequent marking input) and the first output modality, wherein the first appearance is associated with a parameter of the one or more marks that corresponds to the first input value; and in accordance with a determination that the input associated with how hard the physical object is being grasped by the user corresponds to a second input value, displaying, via the display device, one or more marks with a second appearance within the XR environment based on the subsequent marking input (e.g., the shape, displacement, etc. of the subsequent marking input) and the first output modality, wherein the second appearance is associated with the parameter of the one or more marks that corresponds to the second input value.

In some implementations, the one or more marks correspond to XR content displayed within the XR environment 128 such as a sketch, handwritten text, a doodle, or the like. In some implementations, the computing system obtains (e.g., receives, retrieves, or determines) the first and second input (pressure) values based on locally or remotely collected data. As one example, the physical object corresponds to an electronic device with built-in pressure sensors to detect an input (pressure) value when grasped by the user. In some implementations, as represented by block 920, the parameter corresponds to one of a radius, width, thickness, intensity, translucency, opacity, color, or texture of the mark within the XR environment.

In one example, with reference to Figure 6J, the electronic device 120 displays a pen-like mark 6112 within the XR environment 128 in response to detecting the marking input 6104 in Figure 6J while the current output modality corresponds to the graphical element 632B. For example, the shape, depth, length, angle, etc. of the pen-like mark 6112 corresponds to the spatial parameters of the marking input 6104. Furthermore, in Figure 6K, the pen-like mark 6112 is associated with a first thickness value, which corresponds to the current measurement 6103 of the input (pressure) value in Figures 6J.

In another example, with reference to Figure 6M, the electronic device 120 displays a pen-like mark 6132 within the XR environment 128 in response to detecting the marking input 6122 in Figure 6L. For example, the shape, depth, length, angle, etc. of the pen-like mark 6132 corresponds to the spatial parameters of the marking input 6122. Furthermore, in Figure 6M, the pen-like mark 6132 is associated with a second thickness value, which corresponds to the current measurement 6123 of the input (pressure) value in Figures 6L. The second thickness value associated with the pen-like mark 6132 in Figure 6M is greater than the first thickness value associated with the pen-like mark 6112 in Figure 6K.

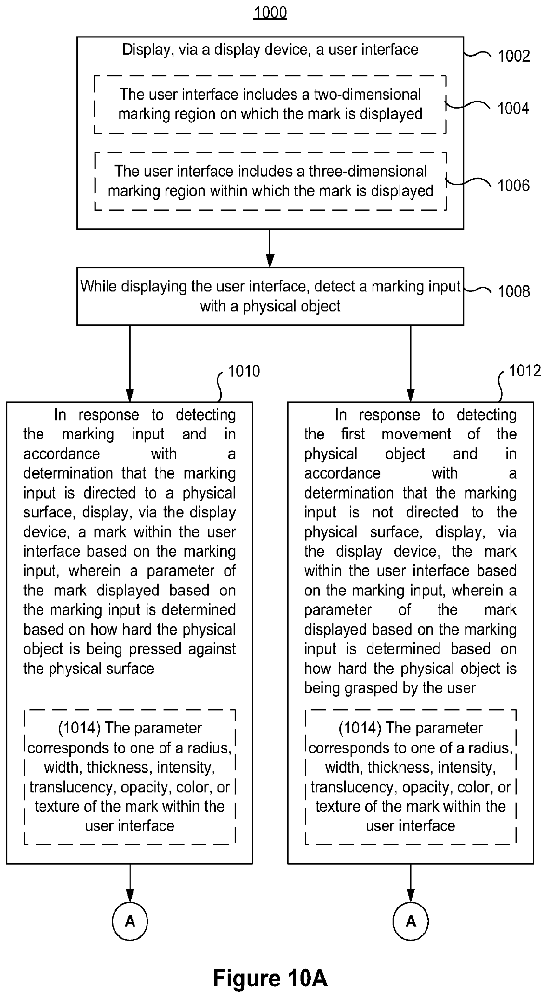

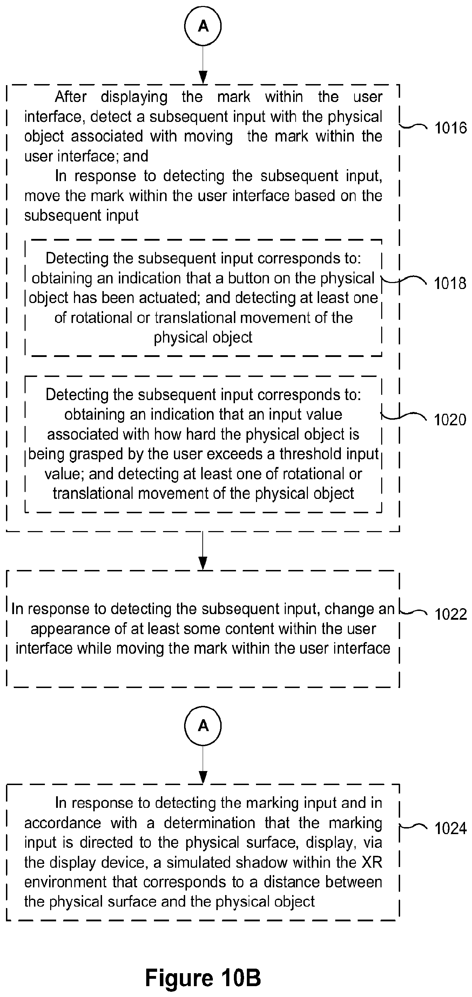

Figures 10A and 10B illustrate a flowchart representation of a method 1000 of changing a parameter of a mark based on a first input (pressure) value while marking directly on a physical surface or based on a second input (pressure) value while marking indirectly in accordance with some implementations. In various implementations, the method 1000 is performed at a computing system including non-transitory memory and one or more processors, wherein the computing system is communicatively coupled to a display device and one or more input devices (e.g., the electronic device 120 shown in Figures 1 and 3; the controller 110 in Figures 1 and 2; or a suitable combination thereof). In some implementations, the method 1000 is performed by processing logic, including hardware, firmware, software, or a combination thereof. In some implementations, the method 1000 is performed by a processor executing code stored in a non-transitory computer-readable medium (e.g., a memory). In some implementations, the computing system corresponds to one of a tablet, a laptop, a mobile phone, a near-eye system, a wearable computing device, or the like.

Typically, a user may adjust a marking parameter, such as line thickness, by moving a slider or the like in a toolbar or control panel. This may interrupt the user's current workflow and may also induce the user to hunt within various menus for the appropriate control. In contrast, the method described herein adjusts a marking parameter based on a first input (pressure) value between a physical object (e.g., a proxy object or a stylus) and a physical surface when the marking input is directed to the physical surface or based on a second input (pressure) value associated with a user's grasp of the physical object. As such, the user is able to adjust the marking parameter with greater speed and efficiency.

As represented by block 1002, the method 1000 includes displaying, via the display device, a user interface. In some implementations, the user interface includes (1004) a two-dimensional marking region on which the mark is displayed. (e.g., a planar canvas) In some implementations, the user interface includes (1006) a three-dimensional marking region within which the mark is displayed (e.g., the mark is associated with a 3D painting or drawing). As one example, with reference to Figure 7A, the electronic device 120 presents the XR environment 128 including an XR substrate 718 (e.g., a 2D or a 3D canvas).

In some implementations, the display device corresponds to a transparent lens assembly, and wherein the presentation of the user interface is projected onto the transparent lens assembly. In some implementations, the display device corresponds to a near-eye system, and wherein presenting the user interface includes compositing the presentation of the user interface with one or more images of a physical environment captured by an exterior-facing image sensor.

In some implementations, the method 1000 includes displaying, via the display device, a user interface element (e.g., a toolbar, menu, etc.) with a plurality of different selectable tools associated with marking within a user interface. In some implementations, the user interface element is anchored to a point in space. For example, the user interface element may be moved to a new anchor point in space. In some implementations, when the user turns his/her head, the user interface element will remain anchored to the point in space and may leave the field-of-view until the user completes a reverse head turn motion (e.g., world/object-locked). In some implementations, the user interface element is anchored to a point within a field-of-view of a user of the computing system (e.g., head/body-locked). For example, the user interface element may be moved to a new anchor point in the FOV. In some implementations, when the user turns his/her head, the user interface element will remain anchored to the point in the FOV such that the toolbar stays within the FOV.

As one example, with reference to Figure 7A, the electronic device 120 presents the XR environment 128 including a menu 712. As shown in Figure 7A, the menu 712 includes a plurality of selectable options 714 associated with changing the appearance of marks made within the XR environment (e.g., different colors, textures, etc.). For example, option 714A is currently selected among the plurality of selectable options 714. In this example, the option 714A corresponds to a first appearance for marks made within the XR environment 128 (e.g., black marks). As shown in Figure 7A, the menu 712 also includes a slider 716 for adjusting the thickness of marks made within the XR environment 128.

As represented by block 1008, while displaying the user interface, the method 1000 includes detecting a marking input with a physical object. For example, the marking input corresponds to creation of 2D or 3D XR content such as a sketch, handwritten text, a doodle, and/or the like. In some implementations, the computing system obtains (e.g., receives, retrieves, or determines) translational and rotational values for the physical object, wherein detecting the first movement corresponds to detecting a change to one of the translational or rotational values for the physical object. For example, the computing system tracks the physical object via computer vision, magnetic sensors, and/or the like. As one example, the physical object corresponds to a proxy object, such as a pencil, a pen, etc., without a communication channel to the computing system. As another example, the physical object corresponds to an electronic device, such as a stylus, finger-wearable device, or the like, with a wired or wireless communication channel to the computing system that includes an IMU, accelerometer, gyroscope, and/or the like for 6DOF tracking.

In some implementations, the computing system maintains one or more N-tuple tracking vectors/tensors for the physical object (e.g., the object tracking vector 511 in Figures 5A and 5B) including translational values (e.g., x, y, and z) relative to the world at large or the current operating environment, rotational values (e.g., roll, pitch, and yaw), a grip pose indication (e.g., pointing, writing, erasing, painting, dictating, etc.), a currently used tip/end indication (e.g., the physical object may have an asymmetrical design with specific first and second tips or a symmetrical design with non-specific first and second tips), a first input (pressure) value associated with how hard the physical object is being pressed against a physical surface, a second input (pressure) value associated with how hard the physical object is being grasped by the user, and/or the like.

In some implementations, the physical object includes a touch-sensitive surface/region configured to detect touch inputs directed thereto such as a longitudinally extending touch-sensitive surface. In some implementations, obtaining the translational and rotational values for the physical object includes determining translational and rotational values for the physical object based on at least one of inertial measurement unit (IMU) data from the physical object, one or more images of a physical environment that include the physical object, magnetic tracking data, and/or the like.

As represented by block 1010, in response to detecting the marking input and in accordance with a determination that the marking input is directed to a physical surface (e.g., a tabletop, another planar surface, or the like), the method 1000 includes displaying, via the display device, a mark within the user interface based on the marking input (e.g., the shape, size, orientation, etc. of the marking input), wherein a parameter of the mark displayed based on the marking input is determined based on how hard the physical object is being pressed against the physical surface. In some implementations, the computing system or a component thereof (e.g., the parameter adjustor 528 in Figure 5A) adjusts an output parameter associated with a detected marking input directed to the XR environment 128 (e.g., the thickness, brightness, color, texture, etc. of marks) based on how hard the physical object is being pressed against the physical surface (e.g., the first input (pressure) value) in accordance with a determination that the marking input is directed to a physical surface (e.g., a tabletop, another planar surface, or the like). In some implementations, the parameter corresponds to (1014) one of a radius, width, thickness, intensity, translucency, opacity, color, or texture of the mark within the user interface.

According to some implementations, the parameter of the mark is determined based on how hard a predefined portion of the physical object such as a tip of the physical object that is in contact with a physical surface in the three-dimensional environment is being pressed up against the physical surface. As one example, the physical object corresponds to an electronic device with pressure sensors in one or both of its ends/tips to detect a first input (pressure) value when pressed against the physical surface. In some implementations, the computing system maps the marking input on the physical surface to a 3D marking region or a 2D canvas within an XR environment. For example, the marking region and the physical surface correspond to perpendicular planes that are offset by Y cm.

As one example, Figures 7G and 7H illustrate a sequence in which detection of a marking input 772 causes the marks 782A and 782B to be displayed within the XR environment 128 according to the measurement 779 of the input (pressure) value. For example, the shape, depth, length, angle, etc. of the marks 782A and 782B corresponds to the spatial parameters of the marking input 772 in Figure 7G (e.g., positional values, rotational values, displacement, spatial acceleration, spatial velocity, angular acceleration, angular velocity, etc. associated with the marking input). Furthermore, in Figure 7H, the marks 782A and 782B are associated with a first thickness value, which corresponds to the measurement 779 of the input (pressure) value in Figure 7G.

As another example, Figures 7I and 7J illustrate a sequence in which detection of a marking input 792 causes the marks 7102A and 7102B to be displayed within the XR environment 128 according to the measurement 799 of the input (pressure) value. For example, the shape, depth, length, angle, etc. of the marks 7102A and 7102B corresponds to the spatial parameters of the marking input 792 in Figure 7I (e.g., positional values, rotational values, displacement, spatial acceleration, spatial velocity, angular acceleration, angular velocity, etc. associated with the marking input). Furthermore, in Figure 7J, the marks 7102A and 7102B are associated with a second thickness value, which corresponds to the current measurement 799 of the input (pressure) value in Figures 7I. For example, the second thickness value associated with the marks 7102A and 7102B is greater than the first thickness value associated with the marks 782A and 782B.

As represented by block 1012, in response to detecting the marking input and in accordance with a determination that the marking input is not directed to the physical surface, the method 1000 includes displaying, via the display device, the mark within the user interface based on the marking input (e.g., the shape, size, orientation , etc. of the marking input), wherein a parameter of the mark displayed based on the marking input is determined based on how hard the physical object is being grasped by the user. In some implementations, the computing system or a component thereof (e.g., the parameter adjustor 528 in Figure 5A) adjusts an output parameter associated with a detected marking input directed to the XR environment 128 (e.g., the thickness, brightness, color, texture, etc. of marks) based on how hard the physical object is being grasped by the user 149 (e.g., the second input (pressure) value) in accordance with a determination that the marking input is not directed to a physical surface. In some implementations, the parameter corresponds to (1014) one of a radius, width, thickness, intensity, translucency, opacity, color, or texture of the mark within the user interface.

According to some implementations, the computing system detects the marking input while the physical object or a predefined portion of the physical object such as a tip of the physical object is not in contact with any physical surface in the three-dimensional environment. For example, the physical object corresponds to an electronic device with built-in pressure sensors to detect a second input (pressure) value when grasped by the user.

As one example, Figures 7A and 7B illustrate a sequence in which detection of a marking input 715 causes the mark 722 to be displayed within the XR environment 128 according to the current measurement 719 of the input (pressure) value. For example, the shape, depth, length, angle, etc. of the mark 722 corresponds to the spatial parameters of the marking input 715 (e.g., positional values, rotational values, displacement, spatial acceleration, spatial velocity, angular acceleration, angular velocity, etc. associated with the marking input). Furthermore, in Figure 7B, the mark 722 is associated with a first thickness value, which corresponds to the current measurement 719 of the input (pressure) value in Figure 7A.

As another example, Figures 7C and 7D illustrate a sequence in which detection of a marking input 732 causes the mark 742 to be displayed within the XR environment 128 according to the measurement 739 of the input (pressure) value. For example, the shape, depth, length, angle, etc. of the mark 742 corresponds to the spatial parameters of the marking input 732. Furthermore, in Figure 7D, the mark 742 is associated with a second thickness value, which corresponds to the current measurement 739 of the input (pressure) value in Figures 7C. For example, the second thickness value associated with the mark 742 is greater than the first thickness value associated with the mark 722.

In some implementations, as represented by block 1016, the method 1000 includes: after displaying the mark within the user interface, detecting a subsequent input with the physical object associated with moving (e.g., translating and/or rotating) the mark within the user interface; and in response to detecting the subsequent input, moving the mark within the user interface based on the subsequent input. As one example, Figures 7E and 7F illustrate a sequence in which the electronic device translates the mark 742 within the XR environment 128 in response to detecting the manipulation input 752. For example, the angle, directionality, displacement, etc. of the translational movement of the mark 742 corresponds to the spatial parameters of the manipulation input 752 in Figure 7E. In some implementations, the manipulation input 752 may also cause rotational movement of the mark 742 based on rotational parameters of the manipulation input 752.

In some implementations, as represented by block 1018, detecting the subsequent input corresponds to obtaining an indication that an affordance on the physical object has been actuated; and detecting at least one of rotational or translational movement of the physical object. For example, actuation of the affordance corresponds to detection of a touch input directed to the touch-sensitive surface of the control device 130. As one example, Figures 7E and 7F illustrate a sequence in which the electronic device 120 translates the mark 742 within the XR environment 128 in response to detecting the manipulation input 752 while also detecting the touch input 754 directed to the touch-sensitive surface 175 of the control device 130 in Figure 7E.

In some implementations, as represented by block 1020, detecting the subsequent input corresponds to obtaining an indication that an input value associated with how hard the physical object is being grasped by the user exceeds a threshold input value; and detecting at least one of rotational or translational movement of the physical object. For example, the input (pressure) value corresponds to a selection portion of the subsequent input. In some implementations, the pressure threshold is non-deterministic (i.e., a predetermined pressure value) or deterministic based on one or more factors such as user preferences, usage history, current content, current context, etc.

In some implementations, as represented by block 1022, in response to detecting the subsequent input, the method 1000 includes changing an appearance of at least some content within the user interface while moving the mark within the user interface. For example, the computing system increases the opacity, translucency, blur radius, etc. of at least some content such as the 2D canvas or 3D marking region.

In some implementations, as represented by block 1024, in response to detecting the marking input and in accordance with a determination that the marking input is directed to the physical surface, the method 1000 includes displaying, via the display device, a simulated shadow within the XR environment that corresponds to a distance between the physical surface and the physical object. In some implementations, a size, angle, etc. of the shadow changes as the physical object gets closer to or further away from the physical surface. As one example, a size of the simulated shadow increases and an associated opacity value decreases as the physical object moves farther away from the physical surface. Continuing with this example, the size of the simulated shadow decreases and the associated opacity value increases as the physical object moves closer to the physical surface. In some implementations, a shadow may also be shown when the marking input is not directed to the physical surface.

As one example, Figures 7K and 7L illustrate a sequence in which the electronic device 120 displays the first XR content 7122 within the XR environment 128 according to the current measurement 7119 of the input (pressure) value in response to detecting the first content placement input associated with the touch input 7111. As shown in Figure 7L, the electronic device 120 also displays a shadow 7124 on the XR substrate 7118 associated with the first XR content 7122. For example, the positional and rotational values of the first XR content 7122 and the shadow 7124 correspond to the parameters of the representation 131 of the control device 130 (e.g., positional values, rotational values, etc.) when the touch input 7111 was detected in Figure 7K. For example, the first XR content 7122 is associated with a first size value, which corresponds to the current measurement 7119 of the input (pressure) value in Figure 7K.

As another example, Figures 7M and 7N illustrate a sequence in which the electronic device 120 displays the second XR content 7142 within the XR environment 128 according to the measurement 7139 of the input (pressure) value in response to detecting the second content placement input associated with the touch input 7131. As shown in Figure 7N, the electronic device 120 does not display a shadow associated with the second XR content 7142 on the XR substrate 7118. For example, the positional and rotational values of the second XR content 7142 correspond to the parameters of the representation 131 of the control device 130 (e.g., positional values, rotational values, etc.) when the touch input 7131 was detected in Figure 7M. For example, the second XR content 7142 is associated with a second size value, which corresponds to the current measurement 7139 of the input (pressure) value in Figure 7K. For example, the second size value associated with the second XR content 7142 is greater than the first size value associated with the first XR content 7122.

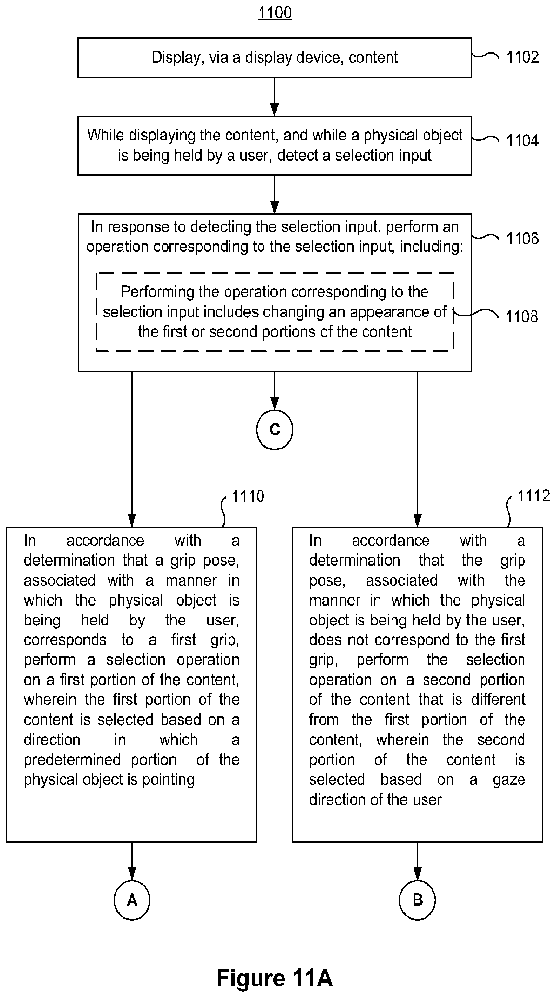

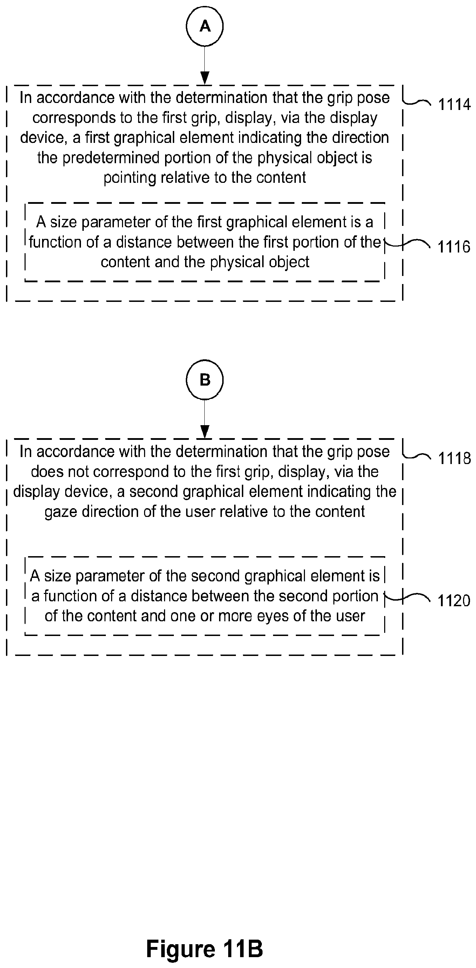

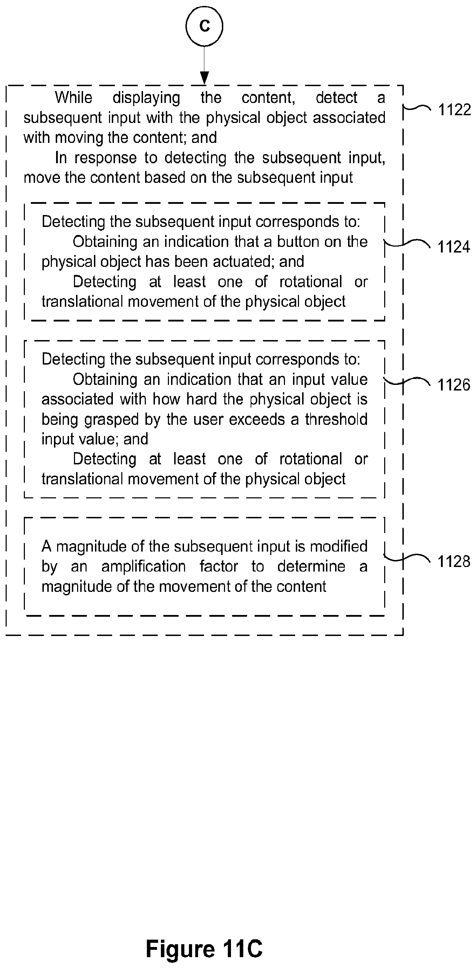

Figure 11 is a flowchart representation of a method 1100 of changing a selection modality based on whether a user is currently grasping a physical object in accordance with some implementations. In various implementations, the method 1100 is performed at a computing system including non-transitory memory and one or more processors, wherein the computing system is communicatively coupled to a display device and one or more input devices (e.g., the electronic device 120 shown in Figures 1 and 3; the controller 110 in Figures 1 and 2; or a suitable combination thereof). In some implementations, the method 1100 is performed by processing logic, including hardware, firmware, software, or a combination thereof. In some implementations, the method 1100 is performed by a processor executing code stored in a non-transitory computer-readable medium (e.g., a memory). In some implementations, the computing system corresponds to one of a tablet, a laptop, a mobile phone, a near-eye system, a wearable computing device, or the like.

Typically, a user is limited to one or more input modalities, such as touch inputs, voice commands, etc., when navigating content within a user interface. Furthermore, the one or more input modalities may be applicable regardless of the current context, such as while operating a vehicle, while in-motion, while hands are full, etc., which may prompt usability and safety concerns. In contrast, the method described herein enables a user to select content based on gaze direction when not holding a physical object (e.g., a proxy object or a stylus) with a pointing grip and also enables a user to select content based on the direction of the physical object when holding the physical object with the pointing grip. As such, the input modality for selecting content dynamically changes based on the current context.

As represented by block 1102, the method 1100 includes displaying, via the display device, content. As one example, the content corresponds to volumetric or 3D content within an XR environment. As another example, the content corresponds to flat or 2D content within a user interface (UI). For example, with reference to Figures 8A-8D, the electronic device 120 displays a VA 606 and XR content 802 within the XR environment 128.

In some implementations, the display device corresponds to a transparent lens assembly, and wherein the presentation of the content is projected onto the transparent lens assembly. In some implementations, the display device corresponds to a near-eye system, and wherein presenting the content includes compositing the presentation of the content with one or more images of a physical environment captured by an exterior-facing image sensor.

As represented by block 1104, while displaying the content, and while a physical object is being held by a user, the method 1100 includes detecting a selection input. As one example, the physical object corresponds to a proxy object detected within the physical environment that lacks a communication channel to the computing system such as a pencil, a pen, etc. With reference to Figures 8A-8D, the electronic device 120 displays a representation 153 of the right hand 152 of the user 149 gripping a representation 805 of a proxy object 804 (e.g., a stick, a ruler, or another physical object) within the XR environment 128. For example, the right hand 152 of the user 149 is currently gripping the proxy object 804 with a pointing grip pose. As another example, the physical object corresponds to an electronic device with a wired or wireless communication channel to the computing system such as a stylus, a finger-wearable device, a handheld device, or the like. With reference to Figures 8E-8G, the electronic device 120 displays a representation 153 of the right hand 152 of the user 149 gripping a representation 131 of a control device 130 within the XR environment 128. For example, the right hand 152 of the user 149 is currently gripping the control device 130 with a writing grip pose that is not pointed at any XR content within the XR environment 128.

As represented by block 1106, in response to detecting the selection input, the method 1100 includes performing an operation corresponding to the selection input. In some implementations, the computing system or a component thereof (e.g., the content selection engine 522 in Figure 5A) determines a selected content portion 523 based on the characterization vector 531 (or a portion thereof). For example, the content selection engine 522 determines the selected content portion 523 based on the current contextual information, the gaze direction of the user 149, body pose information associated with the user 149, head pose information associated with the user 149, hand/extremity tracking information associated with the user 149, positional information associated with the physical object, rotational information associated with the physical object, and/or the like.

As one example, the content selection engine 522 performs a selection operation on a first portion of content based on a direction in which (e.g., a ray projecting from) a predetermined portion (e.g., an outward facing end) of the physical object is pointing in accordance with a determination that a grip pose, associated with a manner in which the physical object is being held by the user, corresponds to a first grip (e.g., the first grip = a pointing/wand-like grip). As another example, the content selection engine 522 performs a selection operation on a second portion of the content based on a gaze direction of the user in accordance with a determination that the grip pose, associated with the manner in which the physical object is being held by the user, does not correspond to the first grip.

In some implementations, as represented by block 1108, the method 1100 includes changing an appearance of the first or second portions of the content. As one example, changing the appearance of the first or second portions of the content corresponds to changing a color, texture, brightness, etc. of the first or second portions of the content to indicate that it has been selected. As another example, changing the appearance of the first or second portions of the content corresponds to displaying a bounding box, highlighting, spotlight, and/or the like in association with the first or second portions of the content to indicate that it has been selected. For example, with reference to Figure 8C, the electronic device 120 changes the appearance of the XR content 802 to a cross-hatching appearance 802A to visually indicate its selection in response to detecting the proxy object 804 being pointed at the XR content 802 for at least a predetermined or deterministic time period in Figures 8A and 8B. For example, with reference to Figure 6D, the electronic device 120 changes the appearance of the graphical element 632D by displaying a border or frame 642 around the graphical element 632D to indicate its selection in response to detecting movement of the control device 130 that causes the spatial location of the representation 131 of the control device 130 to breach the activation region 634 relative to the graphical element 632D.

As represented by block 1110, in accordance with a determination that a grip pose, associated with a manner in which the physical object is being held by the user, corresponds to a first grip (e.g., the first grip = a pointing/wand-like grip), the method 1100 includes performing a selection operation on a first portion of the content, wherein the first portion of the content is selected based on a direction in which (e.g., a ray projecting from) a predetermined portion (e.g., an outward facing end) of the physical object is pointing (e.g., without regard to a direction of gaze of the user). In some implementations, the computing system or a component thereof (e.g., the content selection engine 522 in Figure 5A) performs a selection operation on a first portion of content based on a direction in which (e.g., a ray projecting from) a predetermined portion (e.g., an outward facing end) of the physical object is pointing in accordance with a determination that a grip pose, associated with a manner in which the physical object is being held by the user, corresponds to a first grip (e.g., the first grip = a pointing/wand-like grip). As one example, Figures 8B and 8C illustrate a sequence in which the electronic device 120 selects the XR content 802 in response to detecting a proxy object 804 (or the representation 805 thereof) being pointed at the XR content 802 for at least a predetermined or deterministic time period and in accordance with the determination that the grip pose, associated with the manner in which the physical object 804 is being held by the user 149, corresponds to the first grip (e.g., a pointing grip).

In some implementations, the computing system obtains (e.g., receives, retrieves, or determines) translational and rotational values for the physical object and obtains (e.g., receives, retrieves, or determines) grip pose associated with the current manner in which the physical object is being held by the user. For example, the computing system tracks the physical object via computer vision, magnetic sensors, and/or the like. As one example, the physical object corresponds to a proxy object, such as a pencil, a pen, etc., without a communication channel to the computing system. As another example, the physical object corresponds to an electronic device, such as a stylus, finger-wearable device, or the like, with a wired or wireless communication channel to the computing system that includes an IMU, accelerometer, gyroscope, and/or the like for 6DOF tracking. In some implementations, the computing system maintains one or more N-tuple tracking vectors/tensors for the physical object including translational values (e.g., x, y, and z) relative to the world at large or the current operating environment, rotational values (e.g., roll, pitch, and yaw), a grip pose indication (e.g., pointing, writing, erasing, painting, dictating, etc. pose), a currently used tip/end indication (e.g., the physical object may have an asymmetrical design with specific first and second tips or a symmetrical design with non-specific first and second tips), a first input (pressure) value associated with how hard the physical object is being pressed against a physical surface, a second input (pressure) value associated with how hard the physical object is being grasped by the user, and/or the like. In some implementations, the physical object includes a touch-sensitive surface/region configured to detect touch inputs directed thereto such as a longitudinally extending touch-sensitive surface. In some implementations, obtaining the translational and rotational values for the physical object includes determining translational and rotational values for the physical object based on at least one of IMU data from the physical object, one or more images of a physical environment that include the physical object, magnetic tracking data, and/or the like.

As represented by block 1112, in accordance with a determination that the grip pose, associated with the manner in which the physical object is being held by the user, does not correspond to the first grip, the method 1100 includes performing the selection operation on a second portion of the content that is different from the first portion of the content, wherein the second portion of the content is selected based on a gaze direction of the user (e.g., without regard to a direction of a ray projecting from the predetermined portion of the physical object). In some implementations, the computing system or a component thereof (e.g., the eye tracking engine 512 in Figure 5A) determines and updates an eye tracking vector 513 that includes x and y coordinates associated with a gaze direction relative to the world at large or the current operating environment, a focal length or a focal point, and/or the like. In some implementations, the computing system determines the eye tracking vector 513 based on one or more images of the eye(s) of the user from interior-facing image sensors. In some implementations, the computing system determines a region of interest (ROI) within the XR environment 128 based on the gaze direction (e.g., an NxM mm ROI).

In some implementations, the computing system or a component thereof (e.g., the content selection engine 522 in Figure 5A) performs a selection operation on a second portion of the content based on a gaze direction of the user in accordance with a determination that the grip pose, associated with the manner in which the physical object is being held by the user, does not correspond to the first grip. As one example, Figures 8E and 8F illustrate a sequence in which the electronic device 120 selects the XR content 802 in response to detecting a gaze direction 806 of the user 149 being directed to the XR content 802 for at least the predetermined or deterministic time period and in accordance with the determination that the grip pose, associated with the manner in which the physical object 130 is being held by the user 149, does not correspond to the first grip.

In some implementations, as represented by block 1114, in accordance with the determination that the grip pose corresponds to the first grip, the method 1100 includes displaying, via the display device, a first graphical element indicating the direction the predetermined portion of the physical object is pointing relative to the content. For example, the first graphical element is displayed at a coincidence point at which a ray projected from the predetermined portion of the physical object coincides with content, the 2D canvas, the 3D marking region, a backplane, and/or the like within the XR environment 128. As one example, with reference to Figure 8A, the electronic device 120 displays the first indicator element 812A with a first size on the XR content 802 that corresponds to a coincidence point between the XR content 802 and a ray emanating from a tip/end of the representation 805 of the proxy object 804.

In some implementations, a size parameter (e.g., radius) of the first graphical element is (1116) a function of a distance between the first portion of the content and the physical object. In some implementations, the size of the first indicator element increases as the distance between the first portion of the content and the physical object the decreases, and the size of the first indicator element decreases as the distance between the first portion of the content and the physical object increases. As one example, with reference to Figure 8A, the electronic device 120 displays the first indicator element 812A with a first size on the XR content 802 that corresponds to a coincidence point between the XR content 802 and a ray emanating from a tip/end of the representation 805 of the proxy object 804. In this example, a size of the first indicator element 812A is a function of the first distance 814. As another example, with reference to Figure 8B, the electronic device 120 displays a second indicator element 812B with a second size on the XR content 802 that corresponds to a coincidence point between the XR content 802 and a ray emanating from the tip/end of the representation 805 of the proxy object 804. As shown in Figure 8B, the representation 805 of the proxy object 804 is a second distance 824 from the XR content 802, which is less than the first distance 814 in Figure 8A. For example, the second size of the second indicator element 812B is greater than the first size of the first indicator element 812A.

In some implementations, as represented by block 1118, in accordance with the determination that the grip pose does not correspond to the first grip, the method 1100 includes displaying, via the display device, a second graphical element indicating the gaze direction of the user relative to the content. For example, the second graphical element is different from the first graphical element. For example, the second graphical element is displayed at a coincidence point at which a ray projected from the one or more eyes of the user strikes content, the 2D canvas, the 3D marking region, a backplane, and/or the like within the XR environment. For example, with reference to Figure 8E, the electronic device 120 displays a gaze direction indicator element 852 on the XR content 802 associated with a focal point within the XR environment 128 of the eyes of the user 149 based on eye tracking.

In some implementations, a size parameter (e.g., radius) of the second graphical element is (1120) a function of a distance between the second portion of the content and one or more eyes of the user. In some implementations, the size of the second indicator element increases as the distance between the first portion of the content and the physical object decreases, and the size of the second indicator element decreases as the distance between the first portion of the content and the physical object increases.

In some implementations, as represented by block 1122, the method 1100 includes: while displaying the content, detecting a subsequent input with the physical object associated with moving (e.g., translating and/or rotating) the content; and in response to detecting the subsequent input, moving the content based on the subsequent input. As one example, with reference to Figure 8D, the electronic device 120 translates the XR content 802 within the XR environment 128 in response to detecting the translational movement 832 of the proxy object 804 in Figure 8C. For example, the directionality and displacement of the translational movement of the XR content 802 within the XR environment 128 corresponds to the spatial parameters of the translational movement 832 of the proxy object 804 in Figure 8C (e.g., change in positional values, change in rotational values, displacement, spatial acceleration, spatial velocity, angular acceleration, angular velocity, etc.). One of ordinary skill in the art will appreciate that the XR content 802 may be similarly rotated.

As another example, with reference to Figure 8G, the electronic device 120 translates the XR content 802 within the XR environment 128 in response to detecting the translational movement 862 of the gaze direction 806 in Figure 8F. For example, the directionality and displacement of the translational movement of the XR content 802 within the XR environment 128 corresponds to the spatial parameters of the translational movement 862 of the gaze direction 806 in Figure 8F (e.g., change in positional values, change in rotational values, displacement, spatial acceleration, spatial velocity, angular acceleration, angular velocity, etc.).

In some implementations, detecting the subsequent input corresponds to (1124): obtaining an indication that an affordance on the physical object has been actuated; and detecting at least one of rotational or translational movement of the physical object. For example, detecting actuation of the affordance corresponds to a selection portion of the subsequent input.

In some implementations, detecting the subsequent input corresponds to (1126): obtaining an indication that an input value associated with how hard the physical object is being grasped by the user exceeds a threshold input value; and detecting at least one of rotational or translational movement of the physical object. For example, the input (pressure) value corresponds to a selection portion of the subsequent input. In some implementations the pressure threshold is non-deterministic (i.e., a predetermined pressure value) or deterministic based on one or more factors such as user preferences, usage history, current content, current context, etc.

In some implementations, a magnitude of the subsequent input is modified (1128) by an amplification factor to determine a magnitude of the movement of the content. In some implementations the amplification factor is non-deterministic (e.g., a predetermined value) or deterministic based on one or more factors such as user preferences, usage history, selected content, current context, etc.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first", "second", etc. may be used herein to describe various elements, these elements should not be limited by these terms. These terms are only used to distinguish one element from another. For example, a first media item could be termed a second media item, and, similarly, a second media item could be termed a first media item, which changing the meaning of the description, so long as the occurrences of the "first media item" are renamed consistently and the occurrences of the "second media item" are renamed consistently. The first media item and the second media item are both media items, but they are not the same media item.

The terminology used herein is for the purpose of describing particular implementations only and is not intended to be limiting of the claims. As used in the description of the implementations and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a computing system including non-transitory memory and one or more processors, wherein the computing system is communicatively coupled to a display device and one or more input devices:
displaying, via the display device, a first plurality of graphical elements associated with a first plurality of output modalities associated with a manner in which a physical object interacts with an extended reality (XR) environment, wherein the extended reality (XR) environment includes a representation of the physical object with a tip;
while displaying the first plurality of graphical elements in the extended reality (XR) environment that includes the representation of the physical object, detecting a first movement of the physical object; and
in response to detecting the first movement of the physical object:
in accordance with a determination that the first movement of the physical object causes the representation of the physical object to breach a three-dimensional activation region for a first graphical element among the first plurality of graphical elements:
selecting a first output modality associated with the first graphical element as a current output modality for the physical object;
maintaining display of the first graphical element overlaid on the tip of the representation of the physical object within the extended reality (XR) environment; and
ceasing display of a remainder of the first plurality of graphical elements that does not include the first graphical element; and
in accordance with a determination that the first movement of the physical object causes the representation of the physical object to breach a three-dimensional activation region for a second graphical element among the first plurality of graphical elements:
selecting a second output modality associated with the second graphical element as the current output modality for the physical object;
maintaining display of the second graphical element overlaid on the tip of the representation of the physical object within the extended reality (XR) environment; and
ceasing display of a remainder of the first plurality of graphical elements that does not include the second graphical element.

2. The method of claim 1, wherein the first and second output modalities cause different visual changes within the XR environment.

3. The method of any of claims 1-2, further comprising:
after selecting the first output modality associated with the first graphical element as the current output modality for the physical object, detecting second movement of the physical object; and
in response to detecting second movement of the physical object, moving the first graphical element based on the second movement of the physical object in order to maintain display of the first graphical element overlaid on the tip of the physical object.

4. The method of any of claims 1-3, further comprising:
after ceasing display of the remainder of the first plurality of graphical elements, obtaining an indication of a touch input directed to the physical object; and
in response to obtaining the indication of the touch input, redisplaying, via the display device the first plurality of graphical elements within the XR environment.

5. The method of any of claims 1-4, further comprising:
prior to displaying the first plurality of graphical elements, obtaining an indication of a touch input directed to the physical object, and
wherein displaying the first plurality of graphical elements within the XR environment includes displaying the first plurality of graphical elements within the XR environment in response to obtaining the indication of the touch input.

6. The method of any of claims 1-5, further comprising:
in accordance with a determination that the first movement of the physical object does not cause the physical object to breach the three-dimensional activation region for the first graphical element or the second graphical element:
maintaining an initial output modality as the current output modality for the physical object; and
maintaining display of the first plurality of graphical elements.

7. The method of any of claims 1-6, further comprising:
after selecting the first output modality associated with the first graphical element as the current output modality for the physical object, detecting a subsequent marking input with the physical object; and
in response to detecting the subsequent marking input, displaying, via the display device, one or more marks within the XR environment based on the subsequent marking input and the first output modality.

8. The method of claim 7, further comprising:
in response to detecting the subsequent marking input:
in accordance with a determination that an input associated with how hard the physical object is being pressed against a physical surface corresponds to a first input value, displaying, via the display device, one or more marks with a first appearance within the XR environment based on the subsequent marking input and the first output modality, wherein the first appearance is associated with a parameter of the one or more marks that corresponds to the first input value; and
in accordance with a determination that the input associated with how hard the physical object is being pressed against a physical surface corresponds to a second input value, displaying, via the display device, one or more marks with a second appearance within the XR environment based on the subsequent marking input and the first output modality, wherein the second appearance is associated with the parameter of the one or more marks that corresponds to the second input value.

9. The method of claim 8, wherein the parameter corresponds to one of a radius, width, thickness, intensity, translucency, opacity, color, or texture of the one or more marks within the XR environment.

10. The method of claim 7, further comprising:
in response to detecting the subsequent marking input:
in accordance with a determination that an input associated with how hard the physical object is being grasped by a user corresponds to a first input value, displaying, via the display device, one or more marks with a first appearance within the XR environment based on the subsequent marking input and the first output modality, wherein the first appearance is associated with a parameter of the one or more marks that corresponds to the first input value; and
in accordance with a determination that the input associated with how hard the physical object is being grasped by the user corresponds to a second input value, displaying, via the display device, one or more marks with a second appearance within the XR environment based on the subsequent marking input and the first output modality, wherein the second appearance is associated with the parameter of the one or more marks that corresponds to the second input value.

11. The method of claim 10, wherein the parameter corresponds to one of a radius, width, thickness, intensity, translucency, opacity, color, or texture of the one or more marks within the XR environment.

12. The method of any of claims 1-11, further comprising:
prior to displaying the first plurality of graphical elements, obtaining a grip pose associated with a current manner in which the physical object is being held by a user, wherein the first plurality of graphical elements is a function of the grip pose; and
in response to obtaining the grip pose:
in accordance with a determination that the grip pose corresponds to a first grip pose, displaying, via the display device, the first plurality of graphical elements associated with the first plurality of output modalities within the XR environment; and
in accordance with a determination that the grip pose corresponds to a second grip pose different from the first grip pose, displaying, via the display device, a second plurality of graphical elements associated with a second plurality of output modalities within the XR environment.

13. A device comprising:
one or more processors;
a non-transitory memory;
an interface for communicating with a display device and one or more input devices; and
one or more programs stored in the non-transitory memory, which, when executed by the one or more processors, cause the device to:
display, via the display device, a first plurality of graphical elements associated with a first plurality of output modalities associated with a manner in which a physical object interacts with an extended reality (XR) environment, wherein the extended reality (XR) environment includes a representation of the physical object with a tip;
while displaying the first plurality of graphical elements in the extended reality (XR) environment that includes the representation of the physical object, detect a first movement of the physical object; and
in response to detecting the first movement of the physical object:
in accordance with a determination that the first movement of the physical object causes the representation of the physical object to breach a three-dimensional activation region for a first graphical element among the first plurality of graphical elements:
select a first output modality associated with the first graphical element as a current output modality for the physical object;
maintain display of the first graphical element overlaid on the tip of the representation of the physical object within the extended reality (XR) environment; and
cease display of a remainder of the first plurality of graphical elements that does not include the first graphical element; and
in accordance with a determination that the first movement of the physical object causes the representation of the physical object to breach a three-dimensional activation region for a second graphical element among the first plurality of graphical elements:
select a second output modality associated with the second graphical element as the current output modality for the physical object;
maintain display of the second graphical element overlaid on the tip of the representation of the physical object within the extended reality (XR) environment; and
cease display of a remainder of the first plurality of graphical elements that does not include the second graphical element.

14. A non-transitory memory storing one or more programs, which, when executed by one or more processors of a device with an interface for communicating with a display device and one or more input devices, cause the device to:
display, via the display device, a first plurality of graphical elements associated with a first plurality of output modalities associated with a manner in which a physical object interacts with an extended reality (XR) environment, wherein the extended reality (XR) environment includes a representation of the physical object with a tip;
while displaying the first plurality of graphical elements in the extended reality (XR) environment that includes the representation of the physical object, detect a first movement of the physical object; and
in response to detecting the first movement of the physical object:
in accordance with a determination that the first movement of the physical object causes the representation of the physical object to breach a three-dimensional activation region for a first graphical element among the first plurality of graphical elements:
select a first output modality associated with the first graphical element as a current output modality for the physical object;
maintain display of the first graphical element overlaid on the tip of the representation of the physical object within the extended reality (XR) environment; and
cease display of a remainder of the first plurality of graphical elements that does not include the first graphical element; and
in accordance with a determination that the first movement of the physical object causes the representation of the physical object to breach a three-dimensional activation region for a second graphical element among the first plurality of graphical elements:
select a second output modality associated with the second graphical element as the current output modality for the physical object;
maintain display of the second graphical element overlaid on the tip of the representation of the physical object within the extended reality (XR) environment; and
cease display of a remainder of the first plurality of graphical elements that does not include the second graphical element.

## Patentansprüche

1. Verfahren, umfassend:
an einem Rechensystem, das einen nicht transitorischen Speicher und einen oder mehrere Prozessoren beinhaltet, wobei das Rechensystem kommunikativ an eine Anzeigevorrichtung und eine oder mehrere Eingabevorrichtungen gekoppelt ist:
Anzeigen, über die Anzeigevorrichtung, einer ersten Vielzahl von grafischen Elementen, die einer ersten Vielzahl von Ausgabemodalitäten zugeordnet sind, die einer Weise zugeordnet sind, auf die ein physikalisches Objekt mit einer Umgebung mit erweiterter Realität (XR) interagiert, wobei die Umgebung mit erweiterter Realität (XR) eine Darstellung des physikalischen Objekts mit einer Spitze beinhaltet;
beim Anzeigen der ersten Vielzahl von grafischen Elementen in der Umgebung mit erweiterter Realität (XR), welche die Darstellung des physikalischen Objekts beinhaltet, Erkennen einer ersten Bewegung des physikalischen Objekts; und
als Reaktion auf das Erkennen der ersten Bewegung des physikalischen Objekts:
gemäß einer Bestimmung, dass die erste Bewegung des physikalischen Objekts bewirkt, dass die Darstellung des physikalischen Objekts eine dreidimensionale Aktivierungsregion für ein erstes grafisches Element unter der ersten Vielzahl von grafischen Elementen durchbricht:
Auswählen einer ersten Ausgabemodalität, die dem ersten grafischen Element als eine aktuelle Ausgabemodalität für das physikalische Objekt zugeordnet ist;
Aufrechterhalten einer Anzeige des ersten grafischen Elements, das an der Spitze der Darstellung des physikalischen Objekts innerhalb der Umgebung mit erweiterter Realität (XR) überlagert ist; und
Aufheben einer Anzeige eines Rests der ersten Vielzahl von grafischen Elementen, die das erste grafische Element nicht beinhaltet; und
gemäß einer Bestimmung, dass die erste Bewegung des physikalischen Objekts bewirkt, dass die Darstellung des physikalischen Objekts eine dreidimensionale Aktivierungsregion für ein zweites grafisches Element unter der ersten Vielzahl von grafischen Elementen durchbricht:
Auswählen einer zweiten Ausgabemodalität, die dem zweiten grafischen Element als die aktuelle Ausgabemodalität für das physikalische Objekt zugeordnet ist;
Aufrechterhalten einer Anzeige des zweiten grafischen Elements, das an der Spitze der Darstellung des physikalischen Objekts innerhalb der Umgebung mit erweiterter Realität (XR) überlagert ist; und
Aufheben einer Anzeige eines Rests der ersten Vielzahl von grafischen Elementen, die das zweite grafische Element nicht beinhaltet.

2. Verfahren nach Anspruch 1, wobei die erste und die zweite Ausgabemodalität unterschiedliche visuelle Änderungen innerhalb der XR-Umgebung bewirken.

3. Verfahren nach einem der Ansprüche 1-2, ferner umfassend:
nach dem Auswählen der ersten Ausgabemodalität, die dem ersten grafischen Element als die aktuelle Ausgabemodalität für das physikalische Objekt zugeordnet ist, Erkennen einer zweiten Bewegung des physikalischen Objekts; und
als Reaktion auf das Erkennen einer zweiten Bewegung des physikalischen Objekts, Bewegen des ersten grafischen Elements basierend auf der zweiten Bewegung des physikalischen Objekts, um eine Anzeige des ersten grafischen Elements, das an der Spitze des physikalischen Objekts überlagert ist, aufrechtzuerhalten.

4. Verfahren nach einem der Ansprüche 1-3, ferner umfassend:
nach dem Aufheben einer Anzeige des Rests der ersten Vielzahl von grafischen Elementen, Erlangen einer Angabe einer Berührungseingabe, die an das physikalische Objekt gerichtet ist; und
als Reaktion auf das Erlangen der Angabe der Berührungseingabe, erneutes Anzeigen, über die Anzeigevorrichtung, der ersten Vielzahl von grafischen Elementen innerhalb der XR-Umgebung.

5. Verfahren nach einem der Ansprüche 1-4, ferner umfassend:
vor dem Anzeigen der ersten Vielzahl von grafischen Elementen, Erlangen einer Angabe einer Berührungseingabe, die an das physikalische Objekt gerichtet ist, und
wobei das Anzeigen der ersten Vielzahl von grafischen Elementen innerhalb der XR-Umgebung das Anzeigen der ersten Vielzahl von grafischen Elementen innerhalb der XR-Umgebung als Reaktion auf das Erlangen der Angabe der Berührungseingabe beinhaltet.

6. Verfahren nach einem der Ansprüche 1-5, ferner umfassend:
gemäß einer Bestimmung, dass die erste Bewegung des physikalischen Objekts nicht bewirkt, dass das physikalische Objekt die dreidimensionale Aktivierungsregion für das erste grafische Element oder das zweite grafische Element durchbricht:
Aufrechterhalten einer anfänglichen Ausgabemodalität als die aktuelle Ausgabemodalität für das physikalische Objekt; und
Aufrechterhalten einer Anzeige der ersten Vielzahl von grafischen Elementen.

7. Verfahren nach einem der Ansprüche 1-6, ferner umfassend:
nach dem Auswählen der ersten Ausgabemodalität, die dem ersten grafischen Element als die aktuelle Ausgabemodalität für das physikalische Objekt zugeordnet ist, Erkennen einer nachfolgenden Markierungseingabe mit dem physikalischen Objekt; und
als Reaktion auf das Erkennen der nachfolgenden Markierungseingabe, Anzeigen, über die Anzeigevorrichtung, einer oder mehrerer Markierungen innerhalb der XR-Umgebung basierend auf der nachfolgenden Markierungseingabe und der ersten Ausgabemodalität.

8. Verfahren nach Anspruch 7, ferner umfassend:
als Reaktion auf das Erkennen der nachfolgenden Markierungseingabe:
gemäß einer Bestimmungen, dass eine Eingabe, die damit zugeordnet ist, wie hart das physikalische Objekt gegen eine physikalische Oberfläche gedrückt wird, einem ersten Eingabewert entspricht, Anzeigen, über die Anzeigevorrichtung, einer oder mehrerer Markierungen mit einem ersten Erscheinungsbild innerhalb der XR-Umgebung basierend auf der nachfolgenden Markierungseingabe und der ersten Ausgabemodalität, wobei das erste Erscheinungsbild einem Parameter der einen oder mehreren Markierungen zugeordnet ist, der dem ersten Eingabewert entspricht; und
gemäß einer Bestimmungen, dass die Eingabe, die damit zugeordnet ist, wie hart das physikalische Objekt gegen eine physikalische Oberfläche gedrückt wird, einem zweiten Eingabewert entspricht, Anzeigen, über die Anzeigevorrichtung, einer oder mehrerer Markierungen mit einem zweiten Erscheinungsbild innerhalb der XR-Umgebung basierend auf der nachfolgenden Markierungseingabe und der ersten Ausgabemodalität, wobei das zweite Erscheinungsbild dem Parameter der einen oder mehreren Markierungen zugeordnet ist, der dem zweiten Eingabewert entspricht.

9. Verfahren nach Anspruch 8, wobei der Parameter einem von einem Radius, einer Breite, Dicke, Intensität, Durchsichtigkeit, Undurchsichtigkeit, Farbe oder Textur der einen oder mehreren Markierungen innerhalb der XR-Umgebung entspricht.

10. Verfahren nach Anspruch 7, ferner umfassend:
als Reaktion auf das Erkennen der nachfolgenden Markierungseingabe:
gemäß einer Bestimmungen, dass eine Eingabe, die damit zugeordnet ist, wie hart das physikalische Objekt von einem Benutzer gegriffen wird, einem ersten Eingabewert entspricht, Anzeigen, über die Anzeigevorrichtung, einer oder mehrerer Markierungen mit einem ersten Erscheinungsbild innerhalb der XR-Umgebung basierend auf der nachfolgenden Markierungseingabe und der ersten Ausgabemodalität, wobei das erste Erscheinungsbild einem Parameter der einen oder mehreren Markierungen zugeordnet ist, der dem ersten Eingabewert entspricht; und
gemäß einer Bestimmungen, dass die Eingabe, die damit zugeordnet ist, wie hart das physikalische Objekt von dem Benutzer gegriffen wird, einem zweiten Eingabewert entspricht, Anzeigen, über die Anzeigevorrichtung, einer oder mehrerer Markierungen mit einem zweiten Erscheinungsbild innerhalb der XR-Umgebung basierend auf der nachfolgenden Markierungseingabe und der ersten Ausgabemodalität, wobei das zweite Erscheinungsbild dem Parameter der einen oder mehreren Markierungen zugeordnet ist, der dem zweiten Eingabewert entspricht.

11. Verfahren nach Anspruch 10, wobei der Parameter einem von einem Radius, einer Breite, Dicke, Intensität, Durchsichtigkeit, Undurchsichtigkeit, Farbe oder Textur der einen oder mehreren Markierungen innerhalb der XR-Umgebung entspricht.

12. Verfahren nach einem der Ansprüche 1-11, ferner umfassend:
vor dem Anzeigen der ersten Vielzahl von grafischen Elementen, Erlangen einer Griffpose, die einer aktuellen Weise zugeordnet ist, auf die ein physikalisches Objekt von einem Benutzer gehalten wird, wobei die erste Vielzahl von grafischen Elementen eine Funktion der Griffpose ist; und
als Reaktion auf das Erlangen der Griffpose:
gemäß einer Bestimmung, dass die Griffpose einer ersten Griffpose entspricht, Anzeigen, über die Anzeigevorrichtung, der ersten Vielzahl von grafischen Elementen, die der ersten Vielzahl von Ausgabemodalitäten innerhalb der XR-Umgebung zugeordnet sind; und
gemäß einer Bestimmung, dass die Griffpose einer zweiten Griffpose entspricht, die sich von der ersten Griffpose unterscheidet, Anzeigen, über die Anzeigevorrichtung, einer zweiten Vielzahl von grafischen Elementen, die der zweiten Vielzahl von Ausgabemodalitäten innerhalb der XR-Umgebung zugeordnet sind.

13. Vorrichtung, umfassend:
einen oder mehrere Prozessoren;
einen nicht transitorischen Speicher;
eine Schnittstelle zum Kommunizieren mit einer Anzeigevorrichtung und einer oder mehreren Eingabevorrichtungen; und
ein oder mehrere Programme, die in dem nicht transitorischen Speicher gespeichert sind, welche bei Ausführung durch den einen oder die mehreren Prozessoren bewirken, dass die Vorrichtung:
eine erste Vielzahl von grafischen Elementen, die einer ersten Vielzahl von Ausgabemodalitäten zugeordnet sind, die einer Weise zugeordnet sind, auf die ein physikalisches Objekt mit einer Umgebung mit erweiterter Realität (XR) interagiert, über die Anzeigevorrichtung anzeigt, wobei die Umgebung mit erweiterter Realität (XR) eine Darstellung des physikalischen Objekts mit einer Spitze beinhaltet;
beim Anzeigen der ersten Vielzahl von grafischen Elementen in der Umgebung mit erweiterter Realität (XR), welche die Darstellung des physikalischen Objekts beinhaltet, eine erste Bewegung des physikalischen Objekts erkennt; und
als Reaktion auf das Erkennen der ersten Bewegung des physikalischen Objekts:
gemäß einer Bestimmung, dass die erste Bewegung des physikalischen Objekts bewirkt, dass die Darstellung des physikalischen Objekts eine dreidimensionale Aktivierungsregion für das erste grafische Element unter der ersten Vielzahl von grafischen Elementen durchbricht:
eine erste Ausgabemodalität auswählt, die dem ersten grafischen Element als eine aktuelle Ausgabemodalität für das physikalische Objekt zugeordnet ist;
eine Anzeige des ersten grafischen Elements aufrechterhält, das an der Spitze der Darstellung des physikalischen Objekts innerhalb der Umgebung mit erweiterter Realität (XR) überlagert ist; und
eine Anzeige eines Rests der ersten Vielzahl von grafischen Elementen aufhebt, die das erste grafische Element nicht beinhaltet; und
gemäß einer Bestimmung, dass die erste Bewegung des physikalischen Objekts bewirkt, dass die Darstellung des physikalischen Objekts eine dreidimensionale Aktivierungsregion für das zweite grafische Element unter der ersten Vielzahl von grafischen Elementen durchbricht:
eine zweite Ausgabemodalität auswählt, die dem zweiten grafischen Element als die aktuelle Ausgabemodalität für das physikalische Objekt zugeordnet ist;
eine Anzeige des zweiten grafischen Elements aufrechterhält, das an der Spitze der Darstellung des physikalischen Objekts innerhalb der Umgebung mit erweiterter Realität (XR) überlagert ist; und
eine Anzeige eines Rests der ersten Vielzahl von grafischen Elementen aufhebt, die das zweite grafische Element nicht beinhaltet.

14. Nicht transitorischer Speicher, der ein oder mehrere Programme speichert, welche bei Ausführung durch einen oder mehrere Prozessoren einer Vorrichtung mit einer Schnittstelle zum Kommunizieren mit einer Anzeigevorrichtung und einer oder mehreren Eingabevorrichtungen bewirken, dass die Vorrichtung:
eine erste Vielzahl von grafischen Elementen, die einer ersten Vielzahl von Ausgabemodalitäten zugeordnet sind, die einer Weise zugeordnet sind, auf die ein physikalisches Objekt mit einer Umgebung mit erweiterter Realität (XR) interagiert, über die Anzeigevorrichtung anzeigt, wobei die Umgebung mit erweiterter Realität (XR) eine Darstellung des physikalischen Objekts mit einer Spitze beinhaltet;
beim Anzeigen der ersten Vielzahl von grafischen Elementen in der Umgebung mit erweiterter Realität (XR), welche die Darstellung des physikalischen Objekts beinhaltet, eine erste Bewegung des physikalischen Objekts erkennt; und
als Reaktion auf das Erkennen der ersten Bewegung des physikalischen Objekts:
gemäß einer Bestimmung, dass die erste Bewegung des physikalischen Objekts bewirkt, dass die Darstellung des physikalischen Objekts eine dreidimensionale Aktivierungsregion für das erste grafische Element unter der ersten Vielzahl von grafischen Elementen durchbricht:
eine erste Ausgabemodalität auswählt, die dem ersten grafischen Element als eine aktuelle Ausgabemodalität für das physikalische Objekt zugeordnet ist;
eine Anzeige des ersten grafischen Elements aufrechterhält, das an der Spitze der Darstellung des physikalischen Objekts innerhalb der Umgebung mit erweiterter Realität (XR) überlagert ist; und
eine Anzeige eines Rests der ersten Vielzahl von grafischen Elementen aufhebt, die das erste grafische Element nicht beinhaltet; und
gemäß einer Bestimmung, dass die erste Bewegung des physikalischen Objekts bewirkt, dass die Darstellung des physikalischen Objekts eine dreidimensionale Aktivierungsregion für das zweite grafische Element unter der ersten Vielzahl von grafischen Elementen durchbricht:
eine zweite Ausgabemodalität auswählt, die dem zweiten grafischen Element als die aktuelle Ausgabemodalität für das physikalische Objekt zugeordnet ist;
eine Anzeige des zweiten grafischen Elements aufrechterhält, das an der Spitze der Darstellung des physikalischen Objekts innerhalb der Umgebung mit erweiterter Realität (XR) überlagert ist; und
eine Anzeige eines Rests der ersten Vielzahl von grafischen Elementen aufhebt, die das zweite grafische Element nicht beinhaltet.

## Revendications

1. Procédé comprenant :
au niveau d'un système informatique incluant une mémoire non transitoire et un ou plusieurs processeurs, dans lequel le système informatique est couplé en communication à un dispositif d'affichage et à un ou plusieurs dispositifs d'entrée :
l'affichage, par l'intermédiaire du dispositif d'affichage, d'une première pluralité d'éléments graphiques associés à une première pluralité de modalités de sortie associées à une manière selon laquelle un objet physique interagit avec un environnement de réalité étendue (XR), dans lequel l'environnement de réalité étendue (XR) inclut une représentation de l'objet physique avec une pointe ;
tout en affichant la première pluralité d'éléments graphiques dans l'environnement de réalité étendue (XR) qui inclut la représentation de l'objet physique, la détection d'un premier mouvement de l'objet physique ; et
en réponse à la détection du premier mouvement de l'objet physique :
conformément à une détermination que le premier mouvement de l'objet physique amène la représentation de l'objet physique à franchir une région d'activation tridimensionnelle pour un premier élément graphique parmi la première pluralité d'éléments graphiques :
la sélection d'une première modalité de sortie associée au premier élément graphique en tant que modalité de sortie actuelle pour l'objet physique ;
le maintien de l'affichage du premier élément graphique superposé sur la pointe de la représentation de l'objet physique à l'intérieur de l'environnement de réalité étendue (XR) ; et
la cessation de l'affichage d'un reste de la première pluralité d'éléments graphiques qui n'inclut pas le premier élément graphique ; et
conformément à une détermination que le premier mouvement de l'objet physique amène la représentation de l'objet physique à franchir une région d'activation tridimensionnelle pour un second élément graphique parmi la première pluralité d'éléments graphiques :
la sélection d'une seconde modalité de sortie associée au second élément graphique en tant que modalité de sortie actuelle pour l'objet physique ;
le maintien de l'affichage du second élément graphique superposé sur la pointe de la représentation de l'objet physique à l'intérieur de l'environnement de réalité étendue (XR) ; et
la cessation de l'affichage d'un reste de la première pluralité d'éléments graphiques qui n'inclut pas le second élément graphique.

2. Procédé selon la revendication 1, dans lequel les première et seconde modalités de sortie provoquent des changements visuels différents à l'intérieur de l'environnement XR.

3. Procédé selon l'une quelconque des revendications 1 à 2, comprenant en outre :
après la sélection de la première modalité de sortie associée au premier élément graphique en tant que modalité de sortie actuelle pour l'objet physique, la détection d'un second mouvement de l'objet physique ; et
en réponse à la détection du second mouvement de l'objet physique, le déplacement du premier élément graphique sur la base du second mouvement de l'objet physique afin de maintenir l'affichage du premier élément graphique superposé sur la pointe de l'objet physique.

4. Procédé selon l'une quelconque des revendications 1 à 3, comprenant en outre :
après la cessation de l'affichage du reste de la première pluralité d'éléments graphiques, l'obtention d'une indication d'une entrée tactile dirigée vers l'objet physique ; et
en réponse à l'obtention de l'indication de l'entrée tactile, le réaffichage, par l'intermédiaire du dispositif d'affichage, de la première pluralité d'éléments graphiques à l'intérieur de l'environnement XR.

5. Procédé selon l'une quelconque des revendications 1 à 4, comprenant en outre :
avant l'affichage de la première pluralité d'éléments graphiques, l'obtention d'une indication d'une entrée tactile dirigée vers l'objet physique, et
dans lequel l'affichage de la première pluralité d'éléments graphiques à l'intérieur de l'environnement XR inclut l'affichage de la première pluralité d'éléments graphiques à l'intérieur de l'environnement XR en réponse à l'obtention de l'indication de l'entrée tactile.

6. Procédé selon l'une quelconque des revendications 1 à 5, comprenant en outre :
conformément à une détermination que le premier mouvement de l'objet physique n'amène pas l'objet physique à franchir la région d'activation tridimensionnelle pour le premier élément graphique ou le second élément graphique :
le maintien d'une modalité de sortie initiale en tant que modalité de sortie actuelle pour l'objet physique ; et
le maintien de l'affichage de la première pluralité d'éléments graphiques.

7. Procédé selon l'une quelconque des revendications 1 à 6, comprenant en outre :
après la sélection de la première modalité de sortie associée au premier élément graphique en tant que modalité de sortie actuelle pour l'objet physique, la détection d'une entrée de marquage ultérieure avec l'objet physique ; et
en réponse à la détection de l'entrée de marquage ultérieure, l'affichage, par l'intermédiaire du dispositif d'affichage, d'une ou plusieurs marques à l'intérieur de l'environnement XR sur la base de l'entrée de marquage ultérieure et de la première modalité de sortie.

8. Procédé selon la revendication 7, comprenant en outre :
en réponse à la détection de l'entrée de marquage ultérieure:
conformément à une détermination qu'une entrée associée à la force avec laquelle l'objet physique est pressé contre une surface physique correspond à une première valeur d'entrée, l'affichage, par l'intermédiaire du dispositif d'affichage, d'une ou plusieurs marques avec une première apparence à l'intérieur de l'environnement XR sur la base de l'entrée de marquage ultérieure et de la première modalité de sortie, dans lequel la première apparence est associée à un paramètre de l'une ou plusieurs marques qui correspond à la première valeur d'entrée ; et
conformément à une détermination que l'entrée associée à la force avec laquelle l'objet physique est pressé contre une surface physique correspond à une seconde valeur d'entrée, l'affichage, par l'intermédiaire du dispositif d'affichage, d'une ou plusieurs marques avec une seconde apparence à l'intérieur de l'environnement XR sur la base de l'entrée de marquage ultérieure et de la première modalité de sortie, dans lequel la seconde apparence est associée au paramètre de l'une ou plusieurs marques qui correspond à la seconde valeur d'entrée.

9. Procédé selon la revendication 8, dans lequel le paramètre correspond à un élément parmi un rayon, une largeur, une épaisseur, une intensité, une translucidité, une opacité, une couleur ou une texture de l'une ou plusieurs marques à l'intérieur de l'environnement XR.

10. Procédé selon la revendication 7, comprenant en outre :
en réponse à la détection de l'entrée de marquage ultérieure :
conformément à une détermination qu'une entrée associée à la force avec laquelle l'objet physique est saisi par un utilisateur correspond à une première valeur d'entrée, l'affichage, par l'intermédiaire du dispositif d'affichage, d'une ou plusieurs marques avec une première apparence à l'intérieur de l'environnement XR sur la base de l'entrée de marquage ultérieure et de la première modalité de sortie, dans lequel la première apparence est associée à un paramètre de l'une ou plusieurs marques qui correspond à la première valeur d'entrée ; et
conformément à une détermination que l'entrée associée à la force avec laquelle l'objet physique est saisi par l'utilisateur correspond à une seconde valeur d'entrée, l'affichage, par l'intermédiaire du dispositif d'affichage, d'une ou plusieurs marques avec une seconde apparence à l'intérieur de l'environnement XR sur la base de l'entrée de marquage ultérieure et de la première modalité de sortie, dans lequel la seconde apparence est associée au paramètre de l'une ou plusieurs marques qui correspond à la seconde valeur d'entrée.

11. Procédé selon la revendication 10, dans lequel le paramètre correspond à un élément parmi un rayon, une largeur, une épaisseur, une intensité, une translucidité, une opacité, une couleur ou une texture de l'une ou plusieurs marques à l'intérieur de l'environnement XR.

12. Procédé selon l'une quelconque des revendications 1 à 11, comprenant en outre :
avant l'affichage de la première pluralité d'éléments graphiques, l'obtention d'une pose de prise associée à une manière actuelle selon laquelle l'objet physique est tenu par un utilisateur, dans lequel la première pluralité d'éléments graphiques est fonction de la pose de prise ; et
en réponse à l'obtention de la pose de prise :
conformément à une détermination que la pose de prise correspond à une première pose de prise, l'affichage, par l'intermédiaire du dispositif d'affichage, de la première pluralité d'éléments graphiques associés à la première pluralité de modalités de sortie à l'intérieur de l'environnement XR ; et
conformément à une détermination que la pose de prise correspond à une seconde pose de prise différente de la première pose de prise, l'affichage, par l'intermédiaire du dispositif d'affichage, d'une seconde pluralité d'éléments graphiques associés à une seconde pluralité de modalités de sortie à l'intérieur de l'environnement XR.

13. Dispositif comprenant :
un ou plusieurs processeurs ;
une mémoire non transitoire ;
une interface pour la communication avec un dispositif d'affichage et un ou plusieurs dispositifs d'entrée ; et
un ou plusieurs programmes stockés dans la mémoire non transitoire, qui, lorsqu'ils sont exécutés par l'un ou plusieurs processeurs, amènent le dispositif à :
afficher, par l'intermédiaire du dispositif d'affichage, une première pluralité d'éléments graphiques associés à une première pluralité de modalités de sortie associées à une manière selon laquelle un objet physique interagit avec un environnement de réalité étendue (XR), dans lequel l'environnement de réalité étendue (XR) inclut une représentation de l'objet physique avec une pointe ;
tout en affichant la première pluralité d'éléments graphiques dans l'environnement de réalité étendue (XR) qui inclut la représentation de l'objet physique, détecter un premier mouvement de l'objet physique ; et
en réponse à la détection du premier mouvement de l'objet physique :
conformément à une détermination que le premier mouvement de l'objet physique amène la représentation de l'objet physique à franchir une région d'activation tridimensionnelle pour un premier élément graphique parmi la première pluralité d'éléments graphiques :
sélectionner une première modalité de sortie associée au premier élément graphique en tant que modalité de sortie actuelle pour l'objet physique ;
maintenir l'affichage du premier élément graphique superposé sur la pointe de la représentation de l'objet physique à l'intérieur de l'environnement de réalité étendue (XR) ; et
cesser l'affichage d'un reste de la première pluralité d'éléments graphiques qui n'inclut pas le premier élément graphique ; et
conformément à une détermination que le premier mouvement de l'objet physique amène la représentation de l'objet physique à franchir une région d'activation tridimensionnelle pour un second élément graphique parmi la première pluralité d'éléments graphiques :
sélectionner une seconde modalité de sortie associée au second élément graphique en tant que modalité de sortie actuelle pour l'objet physique ;
maintenir l'affichage du second élément graphique superposé sur la pointe de la représentation de l'objet physique à l'intérieur de l'environnement de réalité étendue (XR) ; et
cesser l'affichage d'un reste de la première pluralité d'éléments graphiques qui n'inclut pas le second élément graphique.

14. Mémoire non transitoire stockant un ou plusieurs programmes, qui, lorsqu'ils sont exécutés par un ou plusieurs processeurs d'un dispositif avec une interface pour la communication avec un dispositif d'affichage et un ou plusieurs dispositifs d'entrée, amènent le dispositif à :
afficher, par l'intermédiaire du dispositif d'affichage, une première pluralité d'éléments graphiques associés à une première pluralité de modalités de sortie associées à une manière selon laquelle un objet physique interagit avec un environnement de réalité étendue (XR), dans lequel l'environnement de réalité étendue (XR) inclut une représentation de l'objet physique avec une pointe ;
tout en affichant la première pluralité d'éléments graphiques dans l'environnement de réalité étendue (XR) qui inclut la représentation de l'objet physique, détecter un premier mouvement de l'objet physique ; et
en réponse à la détection du premier mouvement de l'objet physique :
conformément à une détermination que le premier mouvement de l'objet physique amène la représentation de l'objet physique à franchir une région d'activation tridimensionnelle pour un premier élément graphique parmi la première pluralité d'éléments graphiques :
sélectionner une première modalité de sortie associée au premier élément graphique en tant que modalité de sortie actuelle pour l'objet physique ;
maintenir l'affichage du premier élément graphique superposé sur la pointe de la représentation de l'objet physique à l'intérieur de l'environnement de réalité étendue (XR) ; et
cesser l'affichage d'un reste de la première pluralité d'éléments graphiques qui n'inclut pas le premier élément graphique ; et
conformément à une détermination que le premier mouvement de l'objet physique amène la représentation de l'objet physique à franchir une région d'activation tridimensionnelle pour un second élément graphique parmi la première pluralité d'éléments graphiques :
sélectionner une seconde modalité de sortie associée au second élément graphique en tant que modalité de sortie actuelle pour l'objet physique ;
maintenir l'affichage du second élément graphique superposé sur la pointe de la représentation de l'objet physique à l'intérieur de l'environnement de réalité étendue (XR) ; et
cesser l'affichage d'un reste de la première pluralité d'éléments graphiques qui n'inclut pas le second élément graphique.
